(19) Europäisches Patentamt
European Patent Office
Office européen des brevets

(11) **EP 1 022 578 B1**

(12) **EUROPEAN PATENT SPECIFICATION**

(45) Date of publication and mention
of the grant of the patent:
**28.02.2007 Bulletin 2007/09**

(51) Int Cl.:
***G01S 5/14*** *(2006.01)*     ***H04Q 7/38*** *(2006.01)*

(21) Application number: **00300411.6**

(22) Date of filing: **20.01.2000**

(54) **Apparatus utilizing radio signal strength for estimating current position of the mobile**

Gerät zur Schätzung der Position einer Mobileinheit mittels Signalstärke

Appareil d'estimation de la position d'un mobile en utilisant l'intensité des signaux

(84) Designated Contracting States:
**DE FR GB**

(30) Priority: **20.01.1999 JP 1253399**

(43) Date of publication of application:
**26.07.2000 Bulletin 2000/30**

(73) Proprietor: **MATSUSHITA ELECTRIC INDUSTRIAL CO., LTD.**
**Kadoma-shi, Osaka 571-8501 (JP)**

(72) Inventor: **Shimada, Takanori**
**Shinagawa-ku,**
**Tokyo 140-0004 (JP)**

(74) Representative: **Leeming, John Gerard**
**J.A. Kemp & Co.,**
**14 South Square,**
**Gray's Inn**
**London WC1R 5JJ (GB)**

(56) References cited:
WO-A-98/15149     GB-A- 2 311 697
US-A- 5 657 487

• PATENT ABSTRACTS OF JAPAN vol. 1996, no. 07, 31 July 1996 (1996-07-31) & JP 08 070481 A (NEC ENG LTD), 12 March 1996 (1996-03-12)
• PATENT ABSTRACTS OF JAPAN vol. 014, no. 205 (E-0921), 26 April 1990 (1990-04-26) & JP 02 044929 A (NIPPON TELEGR & TELEPH CORP), 14 February 1990 (1990-02-14)

**Description**

BACKGROUND OF INVENTION

Field of Applicable Technology

The present invention relates to a mobile body map matching apparatus, and in particular to an apparatus which is capable of deriving location information which relates the current position of a mobile body to the contents of a specific map, and transmits the information to that mobile body. In particular, the invention is directed to a mobile body map matching apparatus which can derive such information with sufficient accuracy to be useful to a mobile body which moves comparatively slowly within a narrow range of distances, such as a pedestrian walking within the streets of a town.

Description of the Related Art

In recent years, there have been many patent applications relating to car navigation, however there are only a small number of patents relating to a mobile body which moves comparatively slowly by comparison with an automobile, such as a pedestrian. One patent which relates to the problem of providing pedestrian information is described in Japanese patent No. 1895897, entitled Portable Map Display Apparatus. With that patent, a system is described for providing map data to a pedestrian, however the system does not trace the current location of the pedestrian.

Also, in a paper entitled "Proposal for a Personal Trip System" by Shimamura et al, in the journal of the Video Electronics Society (Japan), vol. 23, No. 5, 1994, pp 422-427, a system is proposed whereby the progress of a pedestrian is analyzed. However only a low degree of position estimation accuracy can be provided with the proposed system.

Other articles relating to such a function are described in a paper entitled "An Optimal Information System for Pedestrians" by Masami et al, in a article of the Electronic Information Communication Society, Systems Section, All-Japan Conference 632, and by Masami in "Information Systems for Optimal Routes in Urban Transportation", (Information Processing Society, vol. 28, No. 3, pp 307-314. However these publications are mainly concerned with systems which provide route information, rather than to a system which is for providing a pedestrian with information specifying his or her current location, and the path which is being traveled by the pedestrian, in relation to the contents of a specific map.

Furthermore, the following prior art technology exists with regard to position detection that is based on utilizing radio waves which are received at a mobile body:

(1) There are wireless communication methods which define a service area based on a plurality of wireless zones of a conventional type of portable telephone, PHS system, etc. However with such a method it is only possible to specify the current position of a mobile body (e.g., a pedestrian carrying a wireless telephone) within a relatively wide area, defined by the operating zone of a base station which has registered the mobile body as being within that zone, or defined by an area that is common to each of the operating zones of a plurality of base stations which have each registered the mobile body as being within their operating zone. As an attempt to overcome this problem of low accuracy of position estimation, there is a paper entitled "Investigation Relating to Mobile Body Position Detection Based on Reception Level Information", Electronic Information Communication Society (Japan), Autumn Conference, B-269 (1993). In that paper, a technique for mobile body position detection is described whereby the wireless zones of a plurality of base stations are used in a mutually superimposed manner, and from the respective values of radio signal strength at which reception occurs at the mobile station for the plurality of base stations, and a table indicating the respective positions of the base stations, the location of the mobile station can be established within a more narrow range than is possible in the case of using the wireless zone of a single base station.

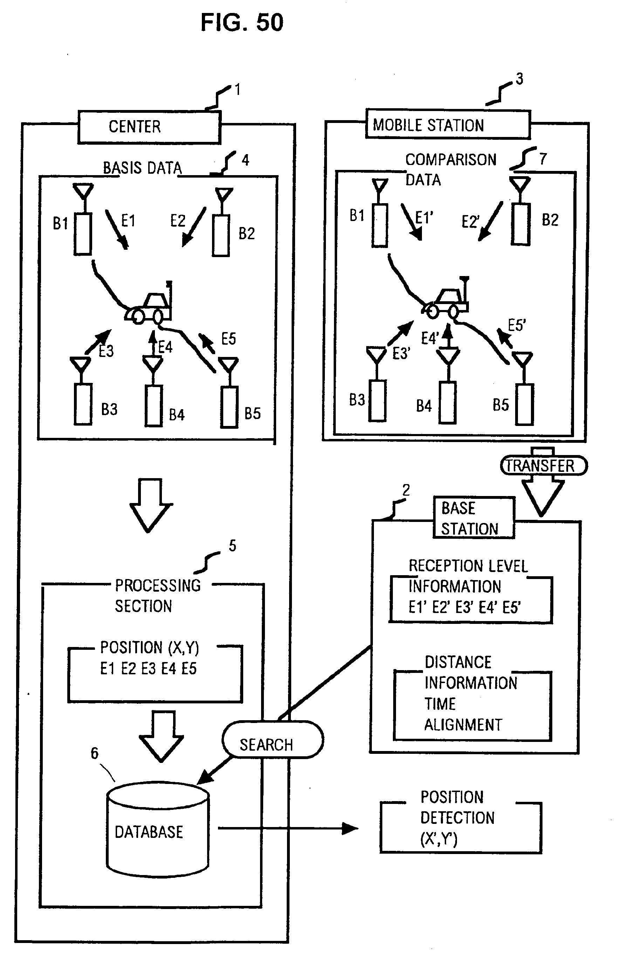

This position detection method will be described referring to Fig. 50, which is a block diagram showing a system configuration for implementing this prior art position detection method. In Fig. 50, numeral 1 denotes a center, which performs detection of the position of a mobile body, numeral 2 denotes a base station, numeral 3 denotes a mobile station. The center 1 operates on basis data, to perform position detection for a mobile station. In the basis data, BS1, BS2, BS3, BS4, BS5 respectively represent the base stations, while E1, E2, E3, E4, E5 express the respective values of strength of radio signals which have been measured beforehand as being received from the base stations BS1, BS2, BS3, BS4, BS5 respectively, at measurement ground points which are located at respective predetermined positions. The center 1 includes a processing section 5 and a CPU, together with a data base section which holds various types of data. The processing section 5 establishes relationships between the positions (X,Y) of the various measurement ground points and, for each of these ground points, the set of values of received radio wave strength, i.e., radio signal strength (E1, E2, E3, E4, E5) which are respectively received from the base stations BS1, BS2, BS3, BS4, BS5 at that ground point, and stores that information in the data base section of the center processing section 5.

When the position of a mobile station 3 is to be detected, the values of radio wave strength E1', E2', E3', E4', E5' which are received from the plurality of base stations by that mobile station are measured, to obtain comparison data 7, which are sent to the center.

The operation of the position detection system having the above configuration will be described in the following. At each of respective ground points within a service area, a mobile station 3 measures the values of received radio wave strength which are respectively received from the plurality of base stations 2, and establishes correspondences between each measurement ground point position and the values of received radio wave strength at which reception occurs for each of the base stations BS1, BS2, BS3, BS4, BS5, and these correspondences are stored beforehand at the data base 6 of the center processing section 5. When the position of a mobile station 3 is to be detected, the values of radio wave strength E1', E2', E3', E4', E5' which are received at that time from the plurality of base stations by that mobile station are sent to the center, and the position (X',Y') of that mobile station 3 is estimated, based on the best match which can be achieved between the received radio wave strength and the values of radio wave strength that are stored in the data base of the center.

With such a position detection method, the position of a mobile station can be estimated within a more narrow range than is possible with the use of only a single base station. However in actual practice, the level of radio wave strength that is received from a base station at any specific ground position will fluctuate substantially with time, and may also vary substantially in accordance with small amounts of change in position of the mobile station, so that it is not possible to achieve a high degree of position estimation accuracy with such a system.

(2) In the case of a wireless communication method which uses the fact that a mobile station can be registered as currently operating within the operating zone of a single base station, the current position of a mobile station can be estimated only as being somewhere within a wide area, so that only a low degree of accuracy of position estimation can be achieved. As an attempt to overcome this problem, there is for example Japanese Patent Laid-open No. HEI 2-44929 "A Mobile Body Position Detection Method" whereby the respective operation zones of a plurality of base stations are mutually superimposed, i.e., to delimit an area which is covered by all of the zones and within which the mobile station must be currently located, and values of received radio wave strength received by the mobile station are measured. With such a method, the current position of a mobile station can be determined within a comparatively narrow range, i.e., a narrower range than is possible by using the wireless zone of a single base station.

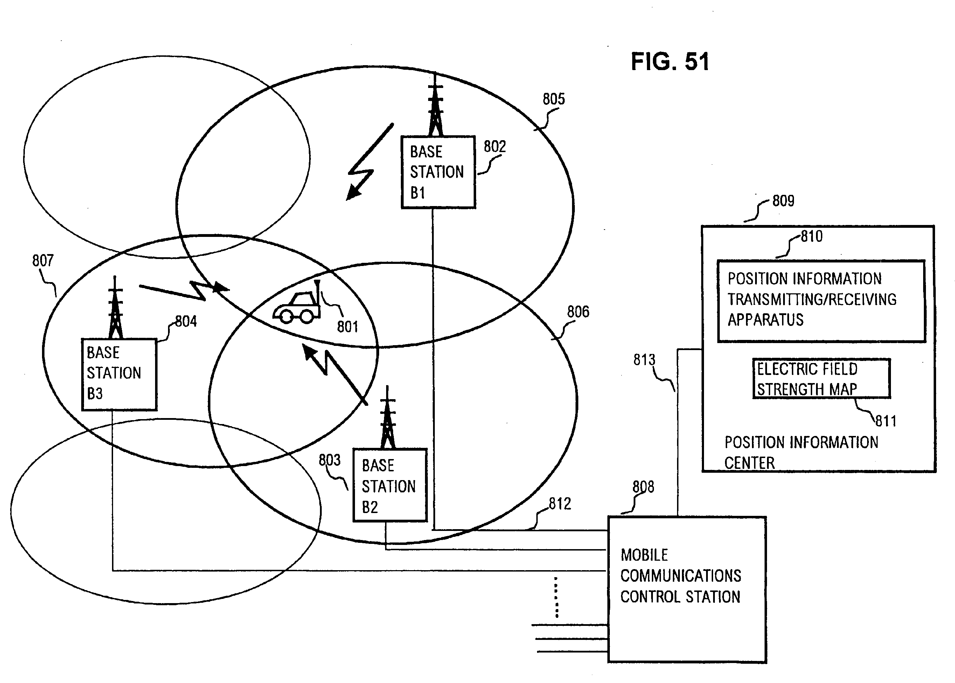

A representative configuration of such a position detection method, i.e. described in the aforementioned patent, will be described referring to Fig. 51.

In Fig. 51, 801 denotes a mobile station, 802, 803 denote respective base stations, 805, 806, 807 are respective wireless zones of the base stations, 808 is a mobile communication control station, 809 is an information center, 810 is a position information transmit/receive apparatus, 811 is an radio signal strength map. As shown in Fig. 51, the mobile station 801 is located within the wireless operation zones of each of the base stations 802, 803, 804, i.e., is in a position at which it can receive radio waves which are sent from each of these base stations. If the mobile station 801 is currently in the process of making a telephone call, i.e., is in a condition of having a communication connection with a specific base station, it can send information concerning levels of received radio wave strength of respective signals received from each of the base stations 802, 803, 804. For example such signals can be transmitted intermittently via a control channel, and can include notification information containing identifiers of the respective base stations. When the mobile station 801 receives such radio signals from the base stations 802, 803, 804, it measures the received radio wave strength of these, and transmits this intensity information together with respective identifiers of the corresponding base stations to the mobile communication control station 808, via one of these base stations. The mobile communication control station 808 transfers the received radio wave intensity values for the base stations 802, 803, 804 to the position information transmit/receive apparatus 810, within the information center 809. The position information transmit/receive apparatus 810 contains map 811 which has been prepared beforehand and stored therein, for enabling the mobile communication control station 808 to manage all of the base stations, and which indicates the radio signal strength distributions within the wireless zones that extend around the respective base stations. The position information transmit/receive apparatus 810 superimposes the radio signal strength maps 811 for the base stations 802, 803, 804, to obtain lines of equal radio signal strength, corresponding to the received radio waves from the base stations 802, 803, 804 received by the mobile station 801, obtains the region where these lines of radio signal strength mutually intersect, and thereby detects the position of the mobile station 801 as being within that region.

With such a position detection method, it is possible to specify the position of a mobile station to within a more narrow range than is possible with a method which uses only the wireless zone of a single base station, so that the method provides reasonably accurate position detection.

However there are serious disadvantages to prior art methods including those described above, for application to providing information to a pedestrian concerning his or her current position and motion path in relation to a map, as follows:

(1) An apparatus utilizing the GPS (Global Positioning Satellite) technique for position location cannot be used indoors, also, it cannot provide accurate matching of the current position of a pedestrian to a large-scale map which would be appropriate for use by a pedestrian. Hence, such an apparatus is not suitable for pedestrian navigation.

(2) A position location apparatus based on a gyroscope mechanism can be used indoors or outdoors. However since such an apparatus is heavy and must be carried by the user, it imposes a burden on the user and so is difficult to use.

(3) In the case of a position detection method which uses currently measured radio signal strength values, i.e., is based upon the values of radio signal strength currently being received at a mobile body from respective base stations, it is possible to perform position detection using a single radio signal strength measurement. However since the measured value of radio signal strength at any specific ground point is highly variable, the reliability of the detected position information is not high, so that the information cannot be used for reliable position estimation.

(4) In the case of a position detection method which uses only a currently measured value of radio signal strength, the method becomes inapplicable in conditions when it becomes temporarily impossible to measure the radio signal strength of a signal received from a base station.

(5) In the case a position detection method which uses a currently measured value of radio signal strength, it is not possible to use the method to estimate the direction of motion of a pedestrian when the method is used indoors.

(6) In the case a position detection method which uses a currently measured value of radio signal strength, when the method is used indoors in conjunction with a non-contact type of IC (integrated circuit) to estimate the position of a pedestrian, it is necessary to provide a special apparatus at a specific ground position, so that the system cost is high.

SUMMARY OF THE INVENTION

It is an objective of the present invention to overcome the problems of the prior art, by providing a mobile body map matching apparatus for position detection of a pedestrian which will be simple and convenient to use and which will be highly accurate.

In particular, it is an objective of the invention to overcome the basic problems of low accuracy and unreliability of position estimation which arise when the position of a mobile body is estimated based on the relative levels of radio signal strength of respective radio signals which are transmitted by a plurality of base stations and are received by the mobile body, i.e., with the radio signal strength values being obtained as respective levels of received signal strength by the mobile body. Such problems result in part due to the fact that levels of received signal strength can fluctuate substantially between locations which are spaced closely together, due to such factors as obstruction of the radio waves by buildings, etc. It is a basic feature of the present invention that this problem is overcome by arranging that throughout a journey which is being undertaken by a mobile body, the mobile body repetitively measures the respective radio signal strength values of a plurality of base stations at each of successive fixed time intervals, and that the successive sets of measured radio signal strength values which are thereby obtained are transmitted to the mobile body map matching apparatus, which stores the successive sets, and periodically processes the sequence of sets of measured radio signal strength values that have been obtained up to a current time point by some form of averaging processing (referred to in the following as smoothing processing) to obtain a sequence of sets of radio signal strength values (referred to herein as the smoothed radio signal strength values) in which abrupt variations between successively obtained sets of radio signal strength values are made more gradual.

The present invention teaches two basic forms of mobile body map matching apparatus which generates and utilizes such smoothed radio signal strength values. With one basic form, each of a plurality of points on a map, such as respective street junctions in a street map, are monitored beforehand to obtain the respective values of radio signal strength which can be expected to be received from a plurality of base stations by a mobile body at each of these points, which are referred to herein as reference nodes. The sets of radio signal strength values thus obtained are held stored at the mobile body map matching apparatus, in correspondence with position information specifying the respective locations of the corresponding reference nodes. Thereafter, when a journey of a mobile body is in progress, the mobile body map matching apparatus periodically operates on the aforementioned sequence of smoothed radio signal strength values in conjunction with the pre-measured sets of radio signal strength values corresponding to each of the reference nodes, to estimate which of the reference nodes have been successively traversed by the mobile body along its path. The respective position of the nodes which have thus been found can then be used to generate map information which can be transmitted to the mobile body to be displayed to a user, i.e., data can be transmitted to the user which express the aforementioned map, with the positions of the traversed reference nodes indicated thereon.

With another basic form of the invention, the mobile body map matching apparatus has position information stored therein beforehand, which specifies a plurality of lines (referred to herein as "links") which correspond to lines on a map which represent all of the respective sections of each possible path that can be traveled by a mobile body. In the case of a street map, the links will correspond to streets or respective portions of streets which extend between adjacent street junctions or intersections, i.e. extend between positions at which an abrupt change in direction of the path of a mobile body may occur. It will be assumed that the links are straight lines, in which case the corresponding position information can simply specify the end points of the link as two reference nodes. The mobile body map matching apparatus then operates on the aforementioned sequence of smoothed radio signal strength values to convert that sequence to a sequence of pairs of coordinates which express respective successive estimated positions of the mobile body along its path. That sequence of estimated positions is then processed, to estimate each of the links which corresponds to a portion of that sequence, and thereby find the successive links which have been traversed by the mobile body up to the current time point.

This may be done for example by converting the sequence of estimated positions to a corresponding sequence of vectors which express the respective directions of advancement of the mobile body between each pair of the estimated positions, and to find each point within that sequence of vectors at which a substantial change in the direction of advancement of the mobile body occurs. Each such point is then interpreted as being a junction between two successive links, so that each adjacent pair of these points constitutes the end points of a link that has been traversed, and so the link having the highest degree of correlation with such a pair of points is determined, and is then registered as a traversed link.

Alternatively, each of successive sets of the estimated positions of the mobile body can be compared with each of the links, to determine the link having the highest degree of correlation with such a set, with each such link then being registered as having been traversed by the mobile body.

As a further alternative, each of the links may be expressed by a set of coefficients of a multiple regression equation, each of successive sets of points from the sequence of estimated positions of the mobile body can also be expressed as such a set of coefficients, and the link whose set of coefficients most closely match that of the set of estimated positions can then be determined, and registered as a link that has been traversed by the mobile body. By applying such processing repetitively to successively selected sets of these estimated positions, each of the links which have been successively traversed by the mobile body can be estimated, to thereby estimate the current position of the mobile body in relation to the map contents.

In addition, principal component analysis (PCA) can be applied in order to find, for successive portions of the sequence of estimated positions of the mobile body, each of the links which is oriented in the same direction as that set of estimated positions. This is done by obtaining for each of the links a corresponding set of principal components (e.g., the first, second and third principal components). A set of principal components is similarly derived for each of successive sets of points from the sequence of estimated positions, and the link whose set of principal components most closely match that of a set of estimated positions, and so is oriented in approximately the same direction as that set, can be determined. This information enables increased accuracy to be achieved in estimating the links which have been traversed by the mobile body up to the current time.

As another aspect of the invention, the sequence of sets of smoothed radio signal strength values that has been obtained up to the current time point can be converted to a sequence of vectors, whose respective directions express sequential directions of motion of the mobile body when moving between successive positions at which measurements of received radio signal strength are made. By analyzing that sequence of vectors, it is possible to detect positions within that sequence at which a substantial change in direction of advancement of the mobile body can be detected, i.e., corresponding to positions at which the mobile body changes from advancing along one link to advancing along a succeeding link which is oriented at a different angle. Each of the sets of smoothed radio signal strength values corresponding to these positions in the sequence of vectors can then be converted to respective estimated positions of the mobile body, based on the relative values within that set and the known positions of the respective base stations corresponding to these signal strength values, and these positions can be matched against all of the positions of intersection of the links, to thereby locate those links which have been successively traversed by the mobile body.

More specifically, the invention provides a mobile body map matching apparatus for use within a mobile communication system having a plurality of base stations, to estimate the current location of a mobile body which transports a portable terminal, where the portable terminal can establish wireless communication with each of the base stations, and measures respective values of strength of radio signals which are received from each of the base stations at each of successive measurement time points throughout a journey. Each set of measured radio signal strength values which is thereby obtained (i.e., each value corresponding to a specific one of the base stations) is immediately transmitted by the mobile body to the mobile body map matching apparatus via one of the base stations. The mobile body map matching apparatus includes radio signal strength data memory means for storing the successive sets of measured radio signal strength values that are thus received from the mobile body, and also includes storage means having stored therein map data representing the contents of a map, and smoothing processing means for applying smoothing processing to the entire sequence of the sets of measured radio signal strength values which have been successively acquired and stored in the radio signal strength data memory means up to a current time point. The smoothing processing means thereby derives a sequence of sets of smoothed radio signal strength values, with the sets respectively corresponding to successive ones of the measurement time points, with the values that constitute each set relating to respective ones of the base stations. The mobile body map matching apparatus also includes means for operating on the smoothed radio signal strength values, in conjunction with the map data, to derive map position information which indicates the current position of the mobile body in relation to the map contents. The map position information can also include an indication of the path which has been traveled by the mobile body up to the current time point (where "current time point" actually signifies the most recent measurement time point at which a new set of measured radio signal strength values has been obtained by the mobile body).

Such a mobile body map matching apparatus can include means for operating on two successive sets of the smoothed radio signal strength values (with the sets respectively corresponding to the most recent measurement time point and a preceding measurement time point) to obtain respective radio signal strength difference values relating to the base stations, and for using these difference values in conjunction with the position relationships of the base stations to estimate a current direction of motion of the mobile body, i.e., with each of the difference values being obtained as a difference between a smoothed radio signal strength value corresponding to a current position of the mobile body and a smoothed radio signal strength value corresponding to a preceding position of the mobile body.

If that preceding position of the mobile body is a known point (reference node) which has been estimated by the apparatus as being the most recent specific position to have been traversed by the mobile body, then such difference values can be used in conjunction with the position of that known point to obtain the current direction of motion of the mobile body in relation to that known point. In that way, if for example the aforementioned known point is a street junction from which several streets emerge, it becomes possible to specify (e.g., on a displayed street map) which of these streets is currently being traversed by the mobile body.

According to one form of the invention, measurement of values of received radio signal strength are performed at each of a plurality of predetermined locations which are within the area of the aforementioned map. These locations, referred to in the description as "reference nodes", preferably correspond to street junctions or end points, in the case of a street map. At each of these reference nodes, the respective values of radio signal strength received from each of the base stations are obtained and each of the sets of measured radio signal strength values thus obtained are stored at the mobile body map matching apparatus beforehand, i.e., with each set being stored in conjunction with information specifying the position of that reference node with respect to the map. The mobile body map matching apparatus can then compare the measured radio signal strength values for these reference nodes with the aforementioned sequence of smoothed radio signal strength values, to estimate which of the nodes correspond to positions within that sequence, i.e., to determine those nodes which have been traversed by the mobile body up to the current point in time.

Each of these measured radio signal strength values may be obtained as the average of a plurality of successive measurements, with the value of standard deviation corresponding to that average value of radio signal strength being stored together at the mobile body map matching apparatus. In that case, the apparatus can judge the sequence of smoothed radio signal strength values to determine which of those are within the range of deviation of any of the measured radio signal strength values of any of the reference nodes. When a set of radio signal strength values is found for which all of the values therein are within the respective ranges of deviations of a set of measured radio signal strength values corresponding to a reference node, then the apparatus can judge that the reference node has been traversed by the mobile body.

In particular, in that case the mobile body map matching apparatus can comprise comprises means for operating on each set of the entire sequence of sets of smoothed radio signal strength values in conjunction with the pre-measured radio signal strength values and standard deviation values, to derive a plurality of sets of deviation values, with each of the sets of deviation values corresponding to a specific one of the reference nodes and the values therein corresponding to respective ones of the base stations, judging each of the sets of deviation values to determine those sets of deviation values for which all values are within a predetermined range, and for each of successive groups of N successive sets from the sequence of sets of smoothed radio signal strength values, where N is a fixed integer, determine a reference node for which there is a majority of occurrences of a condition that a corresponding set of deviation values is within the predetermined range, and register the reference node as being a reference node which has been traversed by the mobile body.

Alternatively, again using such reference nodes, a plurality of tables of probability values can be derived beforehand based on the aforementioned pre-measured sets of radio signal strength values obtained for each of the reference nodes, with the tables respectively corresponding to the reference nodes and with each table having a plurality of sections respectively corresponding to the base stations. Each of these sections of a table contains a plurality of probability values which are linked to respectively different values of radio signal strength, and each of the probability values indicates the degree of probability that, when the corresponding value of radio signal strength is received by the mobile body from the base station of that section of the table, the mobile body is located at the reference node which corresponds to that table. By using these tables of probability distribution, each of the aforementioned sets of smoothed radio signal strength values can be successively examined, to find, for each of the reference nodes, a set of values of probability that the mobile body was located close to that node at the measurement time point corresponding to the set of smoothed radio signal strength values, with these probability values being obtained based on respective ones of the set of smoothed radio signal strength values which is being examined. Each of these sets of probability values can then be combined, to obtain respective combined probability values corresponding to each of the reference nodes, and the apparatus can then judge that the reference node for which the highest combined probability is obtained has been traversed by the mobile body.

Such a set of probability values can be combined for example by obtaining the product of all of the values in the set.

As a modification of the above, it is possible to use values of radio signal strength that are derived by using an equation, in place of predetermined probability values, when the value of radio signal strength received from a base station is sufficiently high. That is to say, the apparatus can further include comprises means for judging that a smoothed radio signal strength value relating to a specific base station, within the set of smoothed radio signal strength values that is being examined, exceeds a predetermined threshold level, for respective probability values corresponding to the reference nodes by utilizing the smoothed radio signal strength value which exceeds the threshold level as the value of a variable within a predetermined equation, and for utilizing the calculated probability values in the matching operation, in place of the probability values of the probability distribution table.

According to another aspect, a mobile body map matching apparatus according to the present invention can include position detection means for operating on the sequence of sets of smoothed radio signal strength values obtained up to a current time point, in conjunction with the position information for the base stations, to derive position coordinate data expressing respective estimated positions corresponding to the measurement time points, and also coordinate data smoothing means for applying smoothing processing to the position coordinate data to derive smoothed position coordinate data which express respective successive estimated positions of the mobile body along its path. Such an apparatus also has position information stored beforehand, which expresses the respective locations of a plurality of links in relation to the map data, where the links are interconnected line segments which are assigned positions corresponding to positions on the aforementioned map and may represent respective streets or sections of streets on the map. The apparatus also includes means for operating on the smoothed position coordinate data in conjunction with the position information for the links, to determine respective ones of the links which have been successively traversed by the mobile body. In that way, the path that has been traversed by the mobile body up to the current time point can be estimated as a succession of links whose respective positions can be specified on the aforementioned map (or as a succession of streets, on a street map).

Specifically, the successive estimated positions of the mobile body that are represented by the smoothed position coordinate data can be converted to a sequence of vectors, i.e. which respectively connect successive pairs of these estimated positions. The sequence of vectors which is thus obtained represents successive changes in the direction of advancement of the mobile body, and can be examined to detect each position within that sequence at which there is a large amount of change in direction, with such a position being interpreted as a change from motion along one link to motion along another which is oriented at a different direction. The respective estimated positions corresponding to these changes in direction can then be matched against the positions of the links, to thereby determine links that have been traversed by the mobile body.

Specifically, the mobile body map matching apparatus in such a case can include means for deriving respective vectors connecting successive pairs of estimated positions expressed by the smoothed position coordinate data, to thereby obtain a continuous sequence of vectors, means for determining respective differences in direction between successive pairs of the vectors, and finding each of the estimated positions which corresponds to a position of a local maximum amount of that difference, means for

determining, for each of respective mutually adjacent pairs of the local maximum positions, a link which has a maximum degree of correlation with the pair of local maximum positions, and means for registering each of the links thus determined as having maximum correlation, as one of a succession of links which have been traversed by the mobile body.

The above and other features of the present invention will be made more apparent from the appended description of preferred embodiments of the invention.

BRIEF DESCRIPTION OF THE DRAWINGS

Fig. 1 is a general system block diagram of a first embodiment of the invention, illustrating the mobile body map matching apparatus of the invention in relation to a plurality of base stations and a mobile body;

Fig. 2 is a general system block diagram of a portable terminal which is transported by a mobile body;

Fig. 3 is a basic flow diagram for use in describing operations which are executed by the mobile body map matching apparatus of the first embodiment each time that a new set of measured radio signal strength values are transmitted thereto from a mobile body;

Fig. 4 is a diagram of a map whose contents are stored at the mobile body map matching apparatus, and illustrates the respective positions of a plurality of reference nodes and a plurality of base stations in relation to the map;

Fig. 11 is a basic flow diagram for use in describing the principles of operation of the first embodiment;

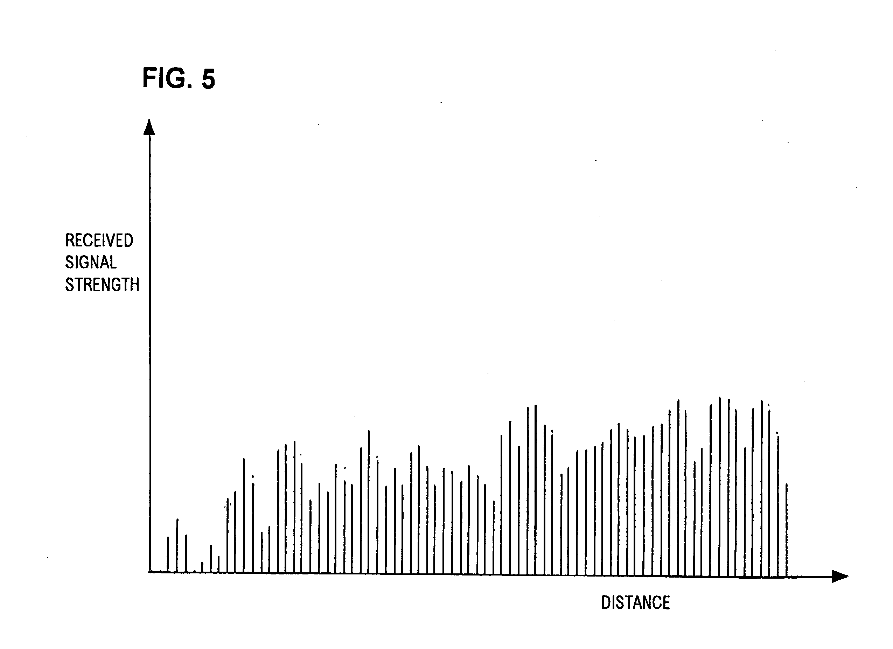

Fig. 5 is a graph for illustrating a sequence of values of radio signal strength, received from one of the base stations, which are measured at respective successive time points by the mobile body and transmitted to the mobile body map matching apparatus;

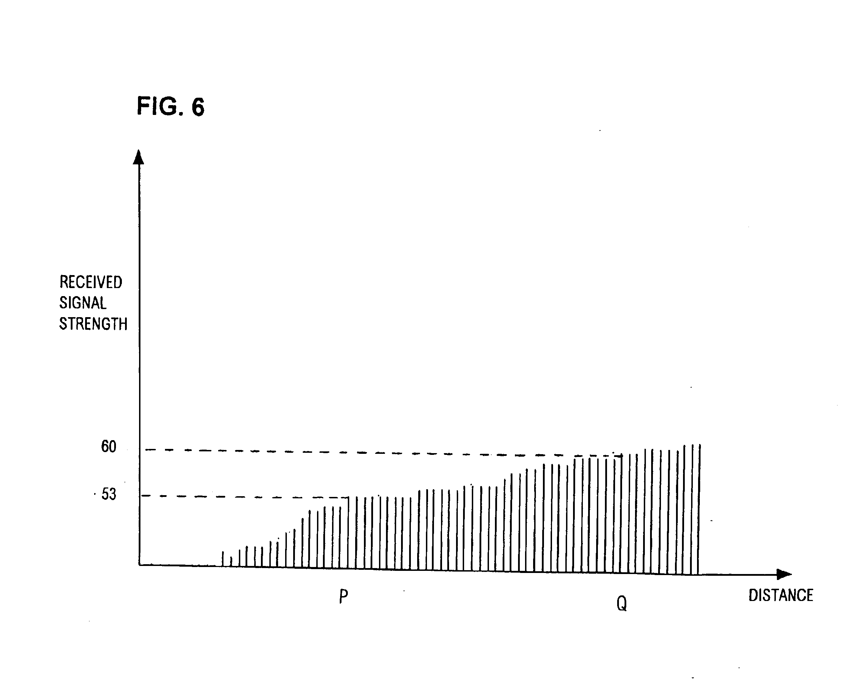

Fig. 6 is a graph for illustrating a sequence of smoothed radio signal strength values which are derived by the mobile body map matching apparatus by applying smoothing processing to the sequence of values shown in Fig. 5;

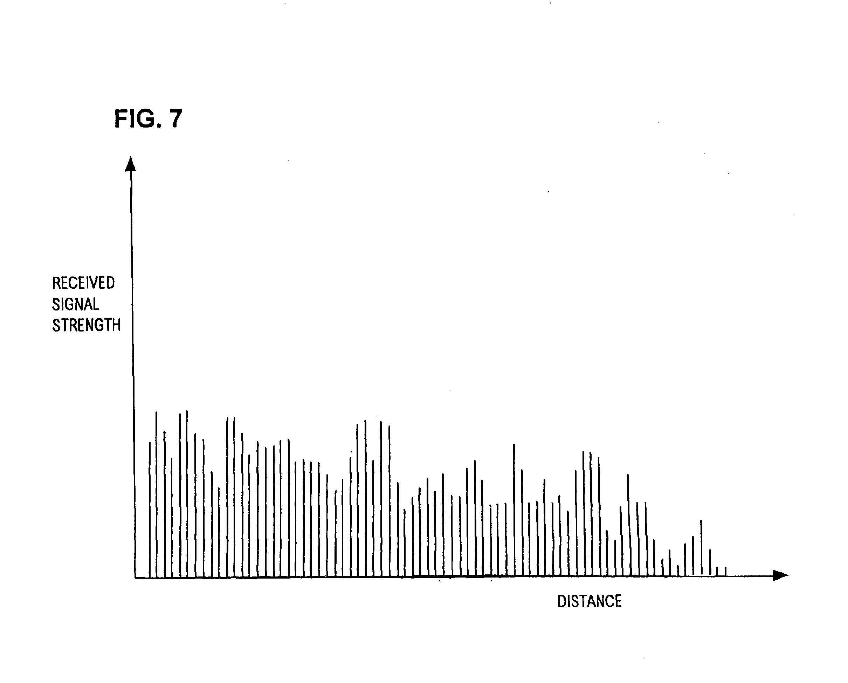

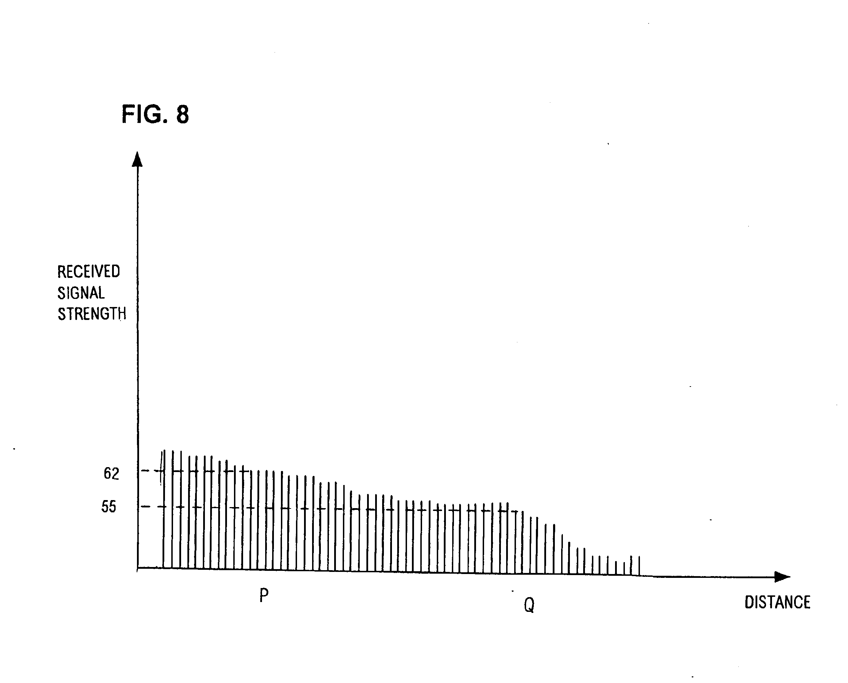

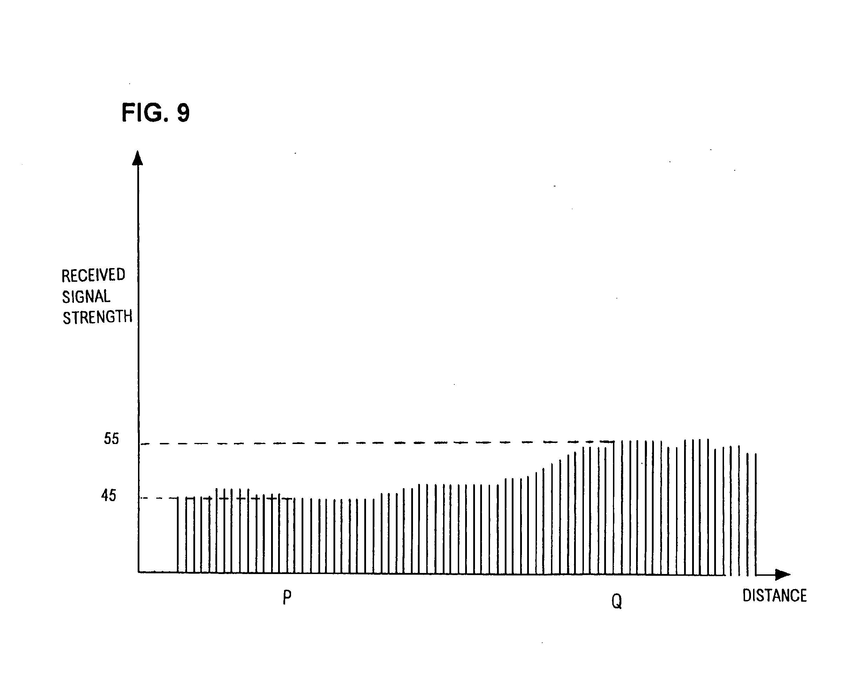

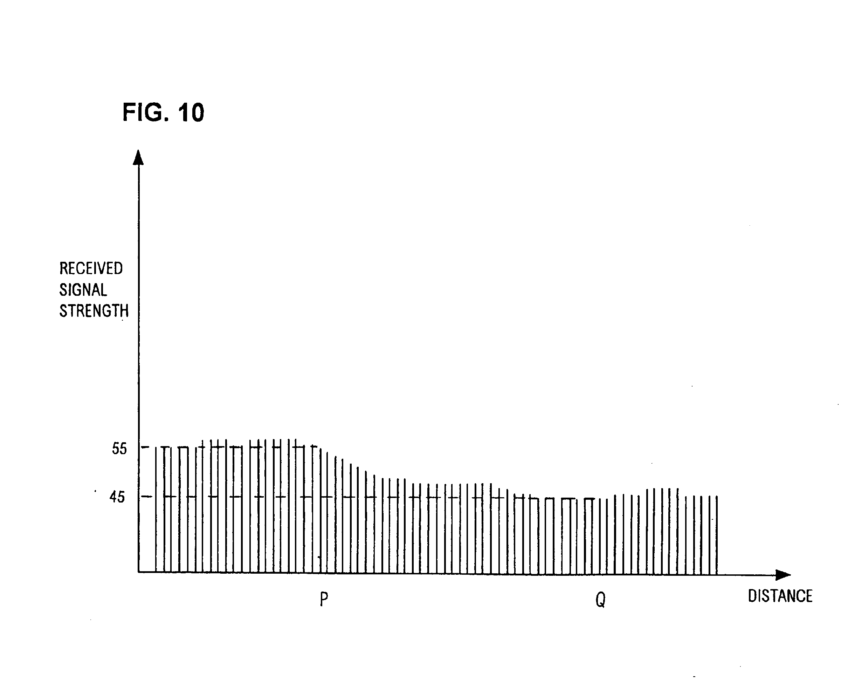

Figs. 7 and 8 are respective graphs of a sequence of measured radio signal strength values and a corresponding sequence of smoothed radio signal strength values, corresponding to another of the base stations, and Figs. 9 and 10 are graphs of sequences of smoothed radio signal strength values, respectively corresponding to two other base stations;

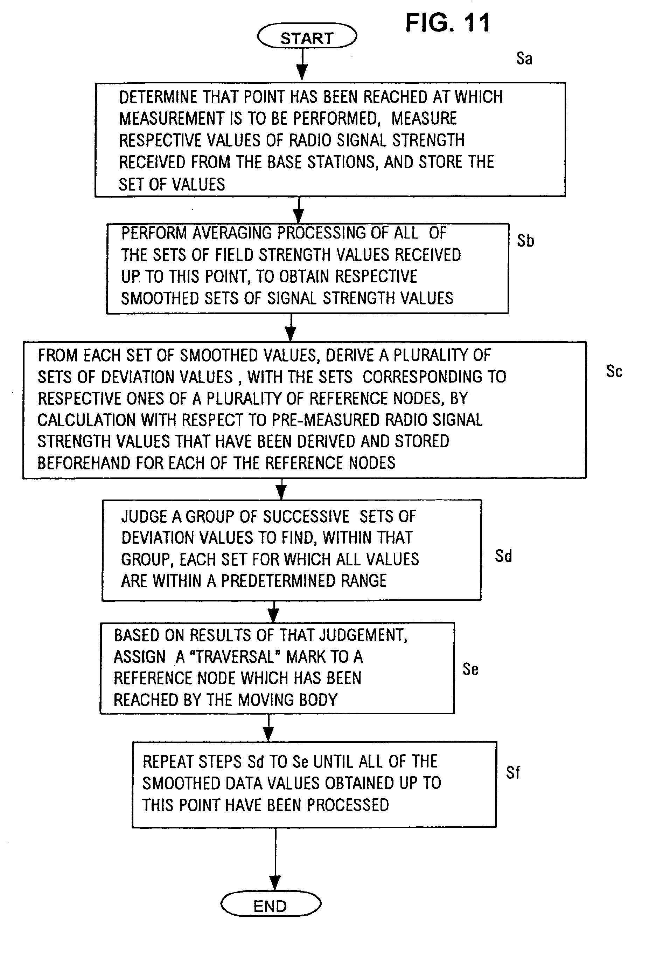

Fig. 11 is a basic flow diagram for use in describing the principles of operation of the first embodiment;

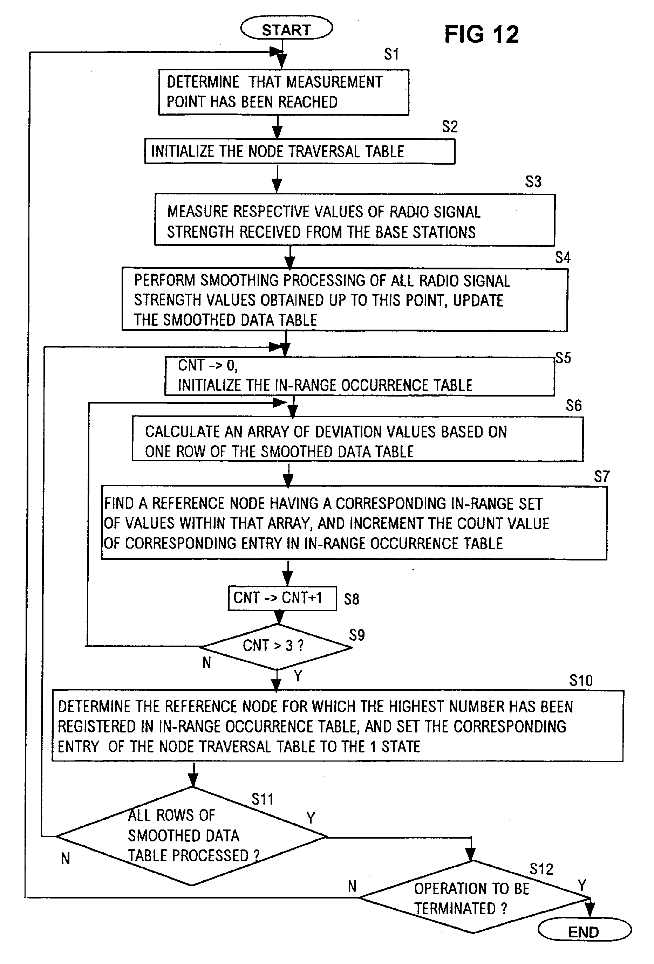

Fig. 12 is a detailed flow diagram of the operation of the first embodiment;

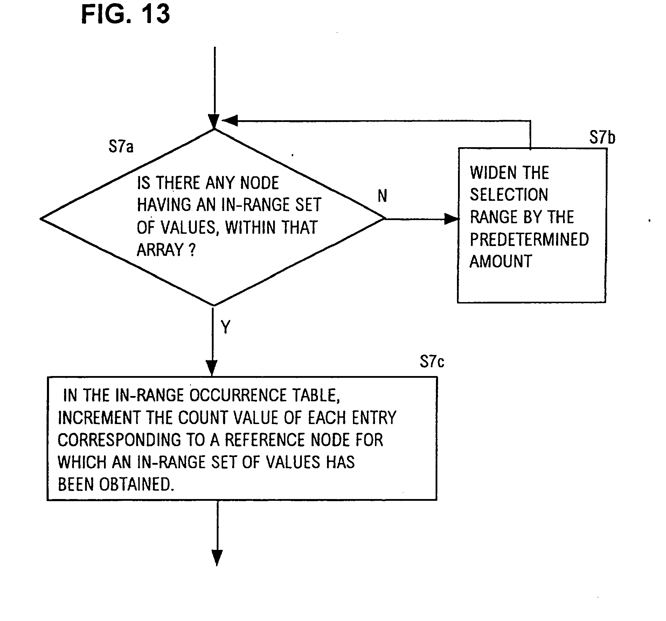

Fig. 13 is a partial flow diagram showing a portion within the flow diagram of Fig. 12 in greater detail;

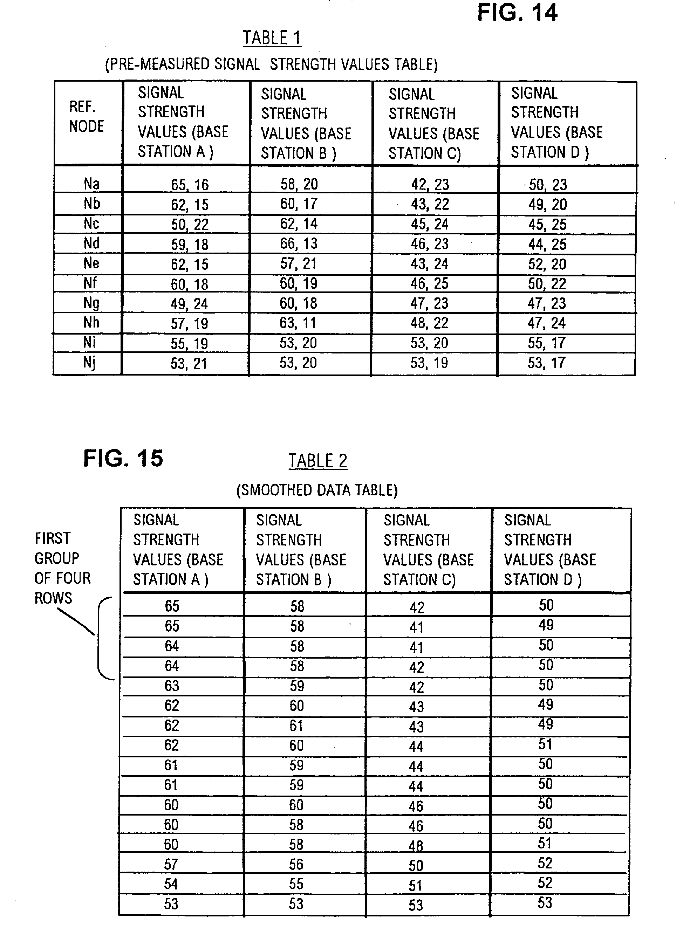

Fig. 14 is a table of respective sets of pre-measured average values of received radio signal strength and corresponding values of standard deviation, with the values relating to each of the base stations, measured at each of the reference nodes in succession;

Fig. 15 is a table in which respective rows express successive sets of smoothed radio signal strength values obtained in relation to each of the base stations, with the sets corresponding to successive measurement time points along the path traveled by a mobile body;

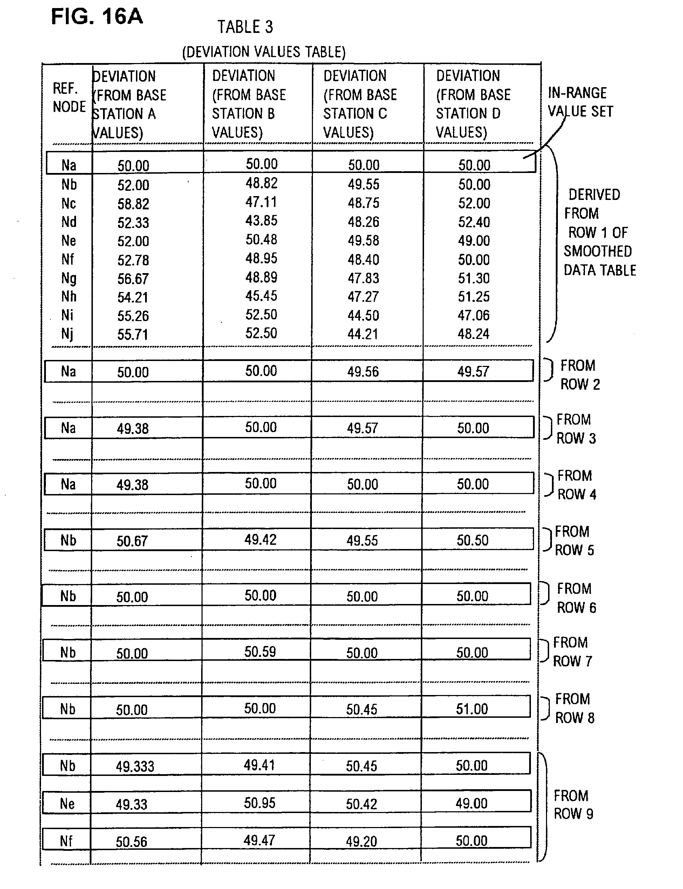

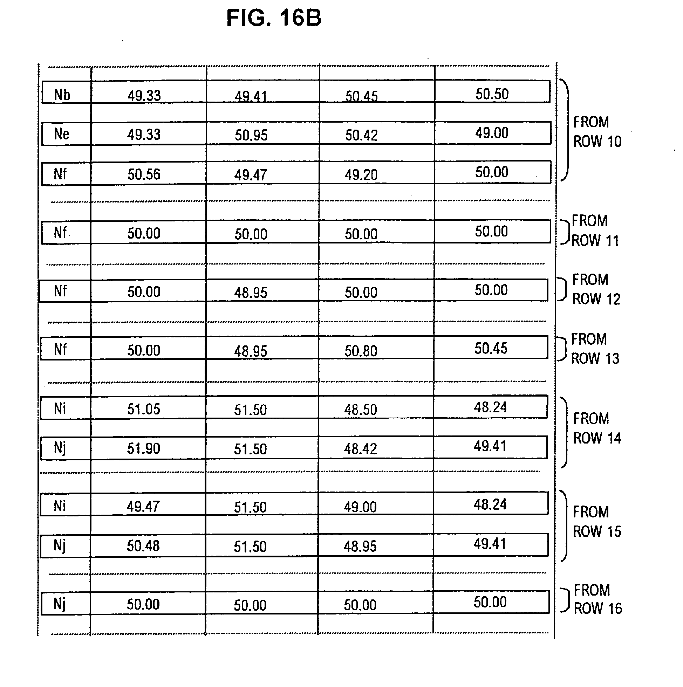

Figs. 16a, 16b show a plurality of deviation values tables which respectively correspond to the sets of smoothed radio signal strength values of Fig. 15;

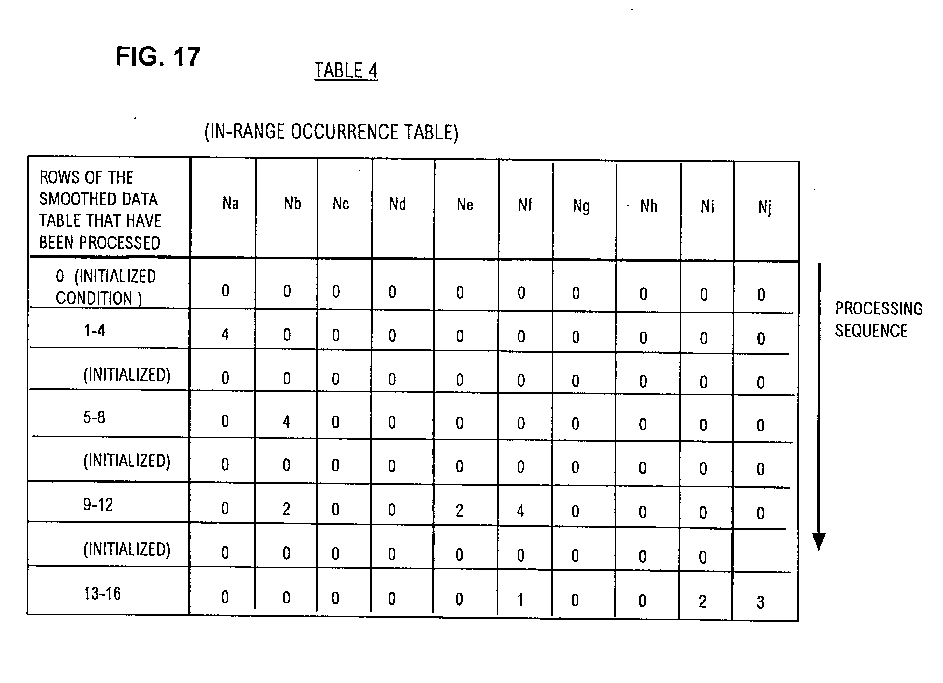

Fig. 17 is a table which shows, for each of successive groups of the sets of smoothed radio signal strength values, the number of occurrences of a condition whereby all of the smoothed radio signal strength values of a set are within the deviation range relating to a specific one of the base stations;

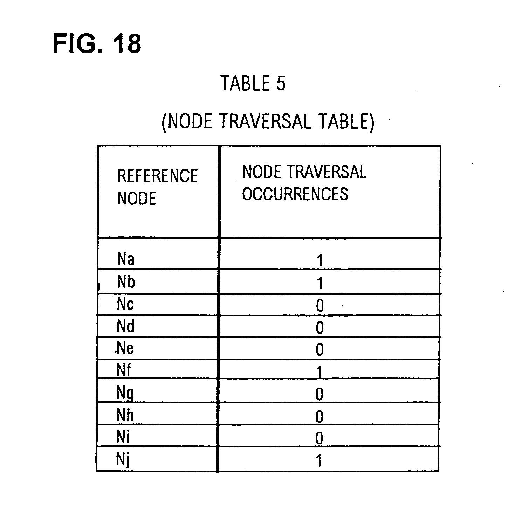

Fig. 18 is a table for registering each reference node that has been detected as having been traversed by the mobile body, based on the processing executed by the first embodiment;

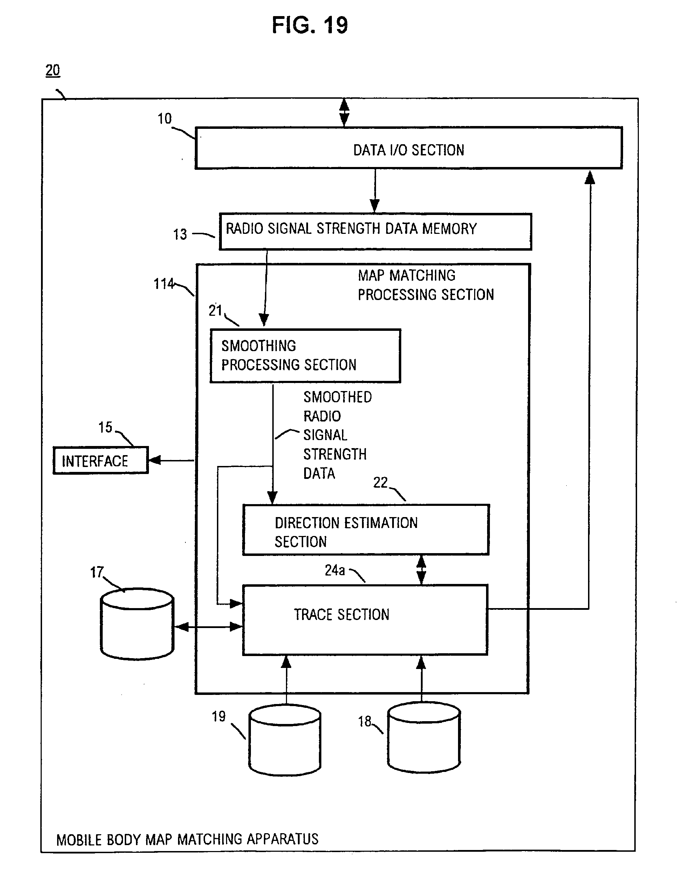

Fig. 19 is a general system block diagram of a second embodiment of a mobile body map matching apparatus;

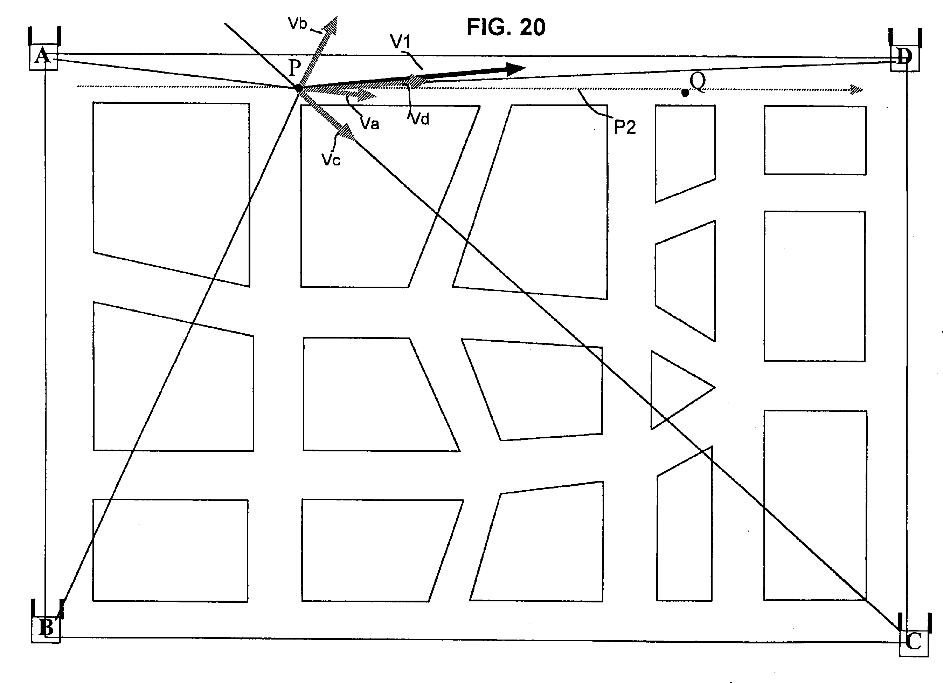

Fig. 20 is a map diagram for illustrating the derivation of a vector indicating the direction of motion of a mobile body with respect to a point which has been traversed by the mobile body;

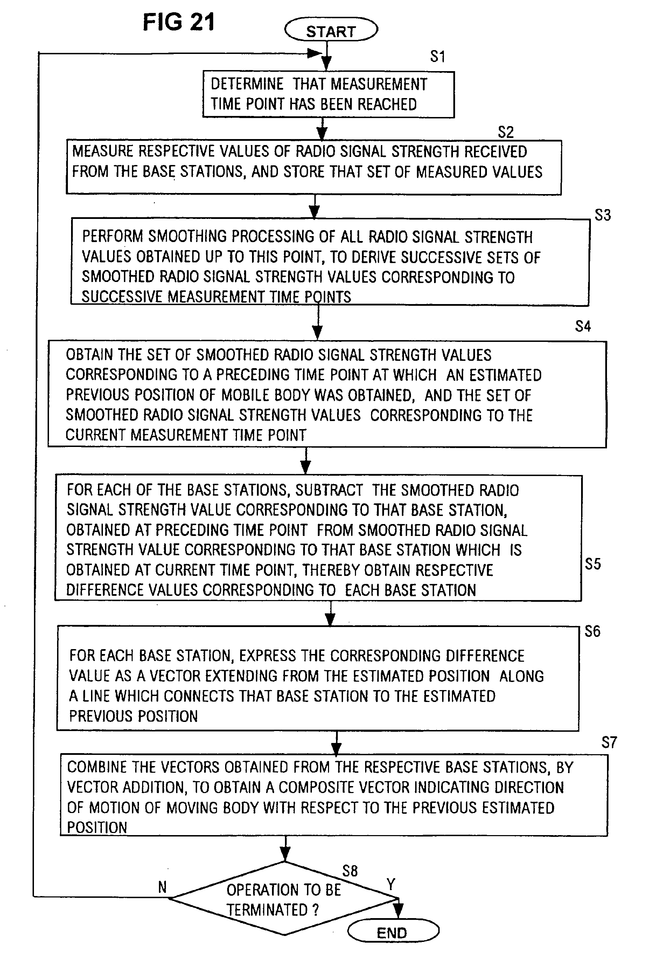

Fig. 21 is a diagram showing a portion of a map, for illustrating a vector indicating the direction of motion of a mobile body with respect to a reference node which has been estimated as having been traversed by the mobile body, with the second embodiment;

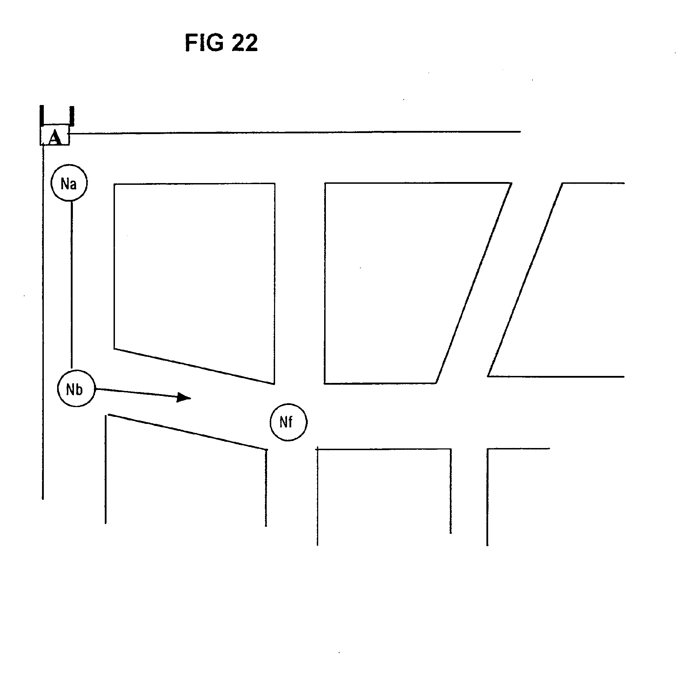

Fig. 22 is a flow diagram for describing the operation of the second embodiment;

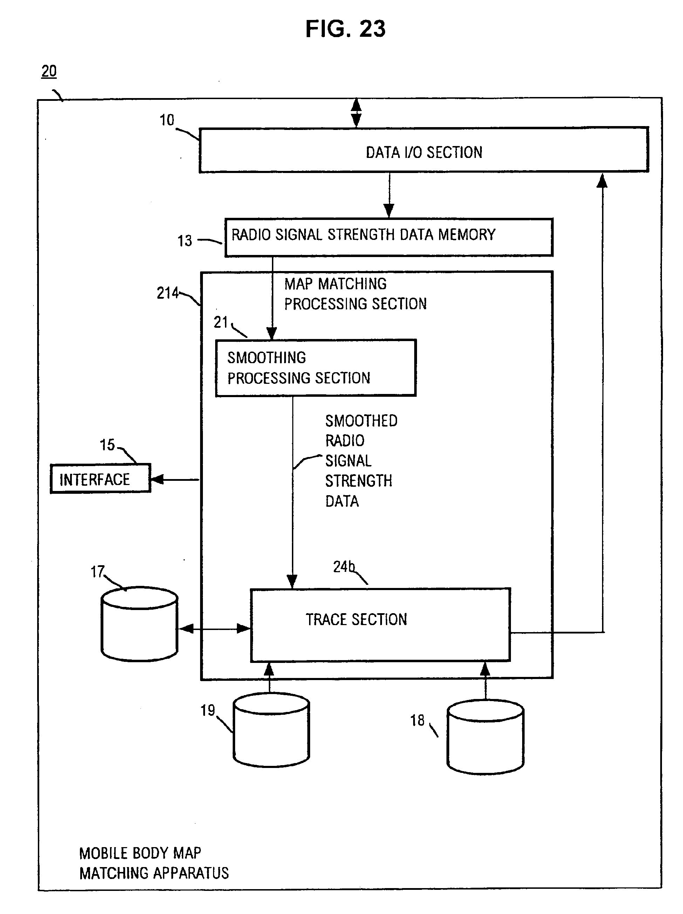

Fig. 23 is a general system block diagram of a third embodiment of a mobile body map matching apparatus;

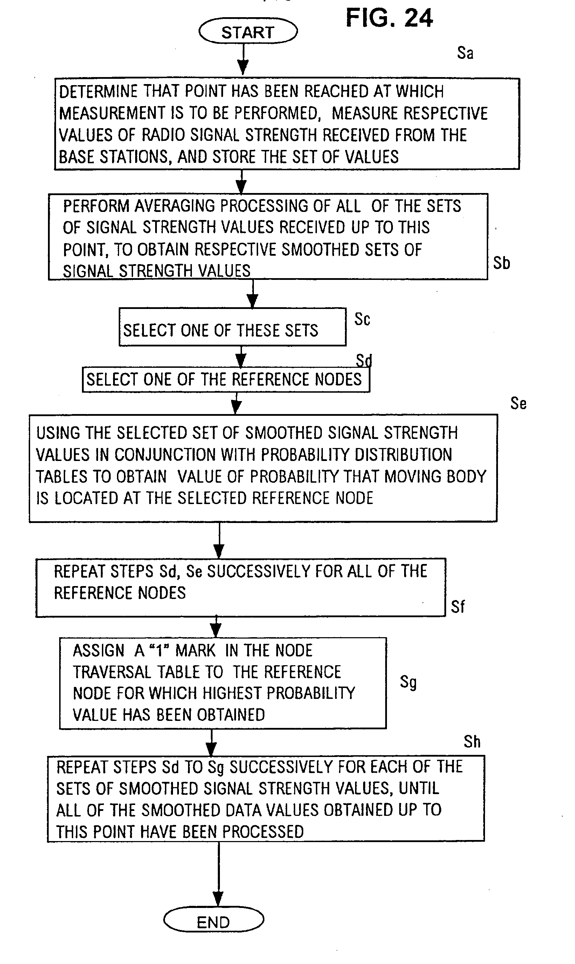

Fig. 24 is a basic flow diagram for describing the principles of operation of the third embodiment;

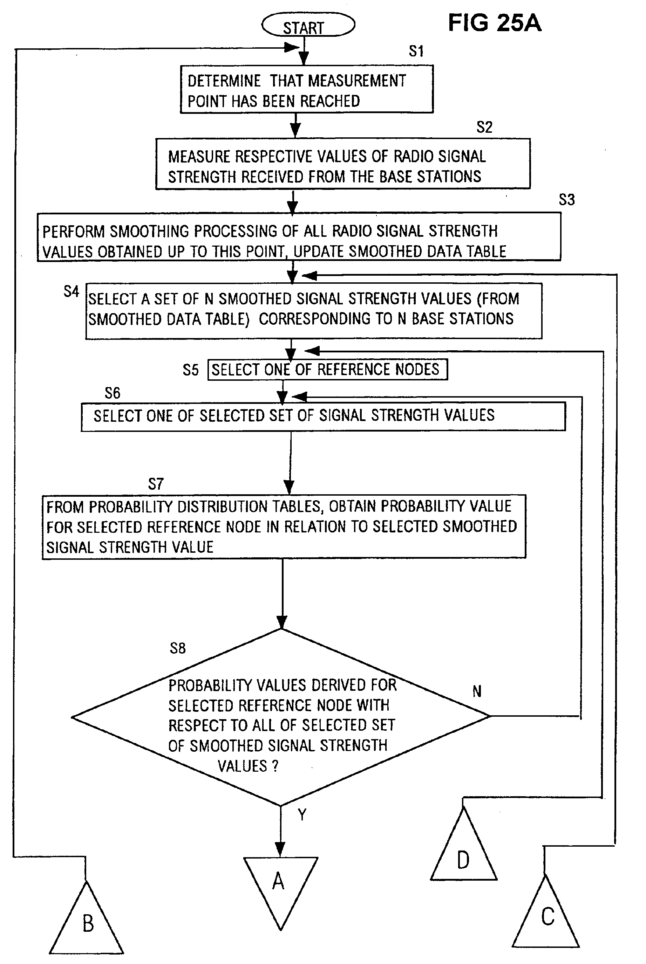

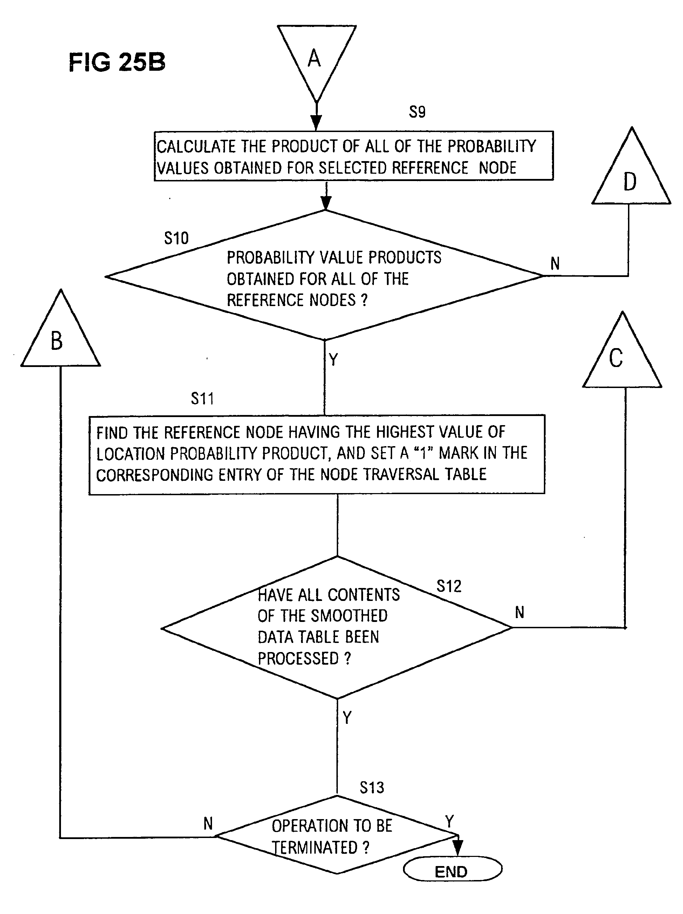

Figs. 25A, 25B, 25C constitute a detailed flow diagram of the operation of the third embodiment;

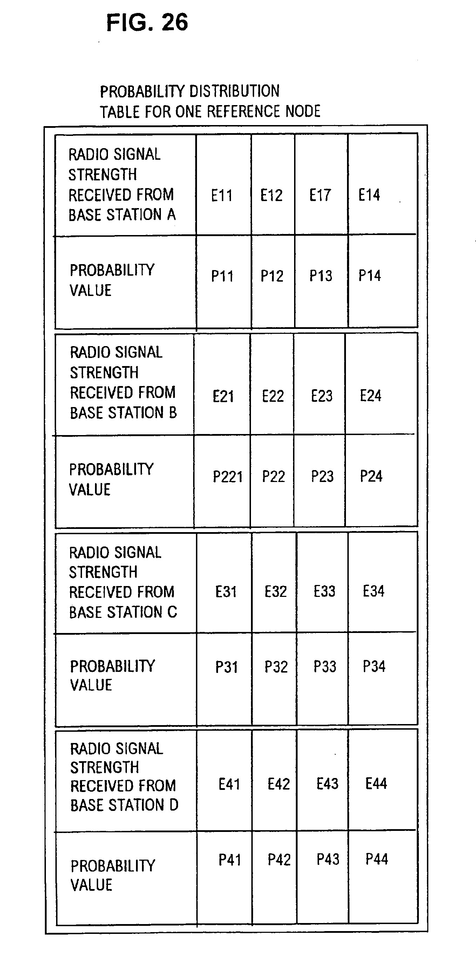

Fig. 26 is a diagram illustrating the configuration of one of a plurality of probability distribution tables respectively corresponding to the reference nodes, which are stored beforehand for use with the third embodiment;

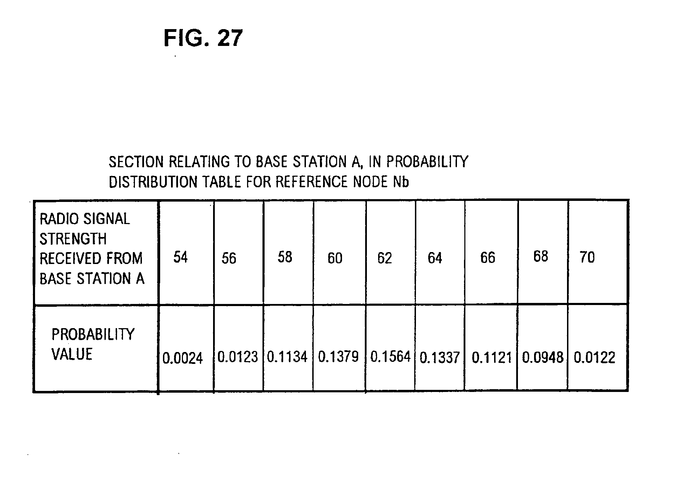

Fig. 27 shows an example of a set of probability values, and corresponding smoothed radio signal strength values relating to one of the base stations, constituting one section of one of the probability distribution tables;

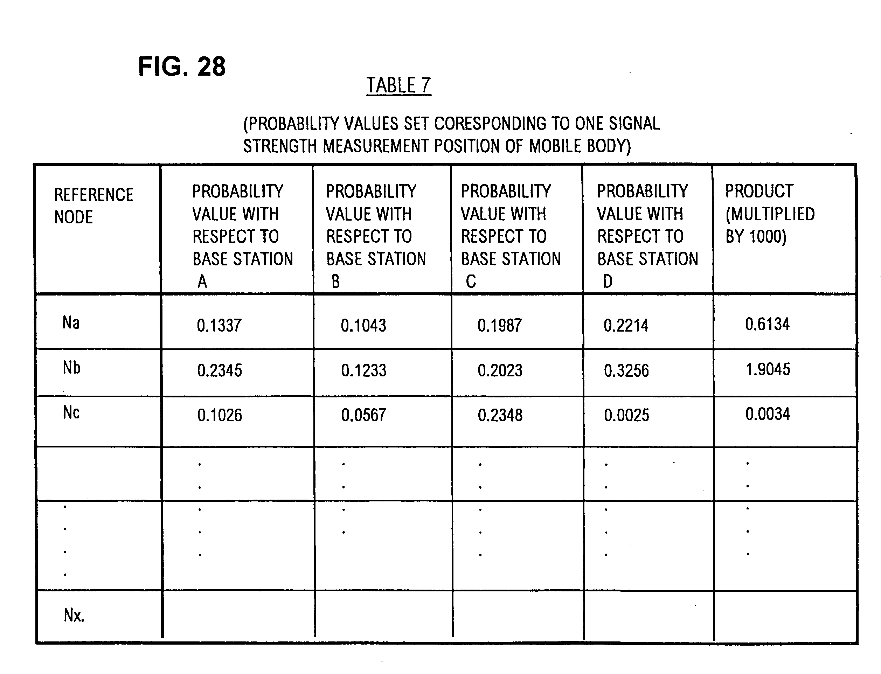

Fig. 28 shows, for one of the sequence of sets of smoothed radio signal strength values, a corresponding table relating each of the reference nodes to a set of respective probability values which have been derived in relation to each of the base stations, based on the respective signal strength values relating to these base stations within the set of smoothed radio signal strength values;

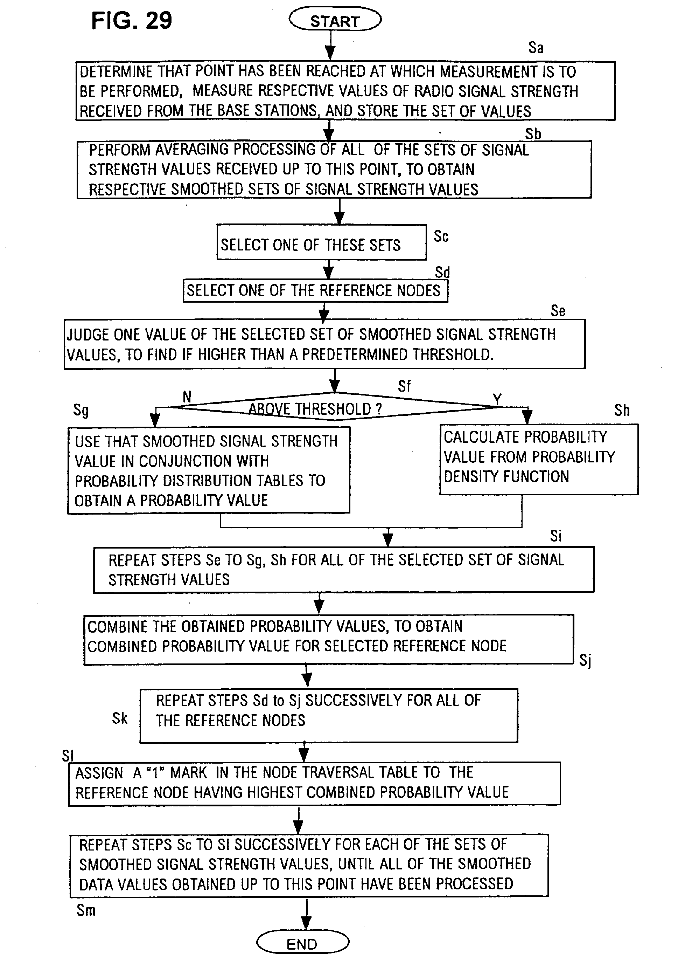

Fig. 29 is a basic flow diagram for describing the principles of operation of a fourth embodiment of a mobile body map matching apparatus;

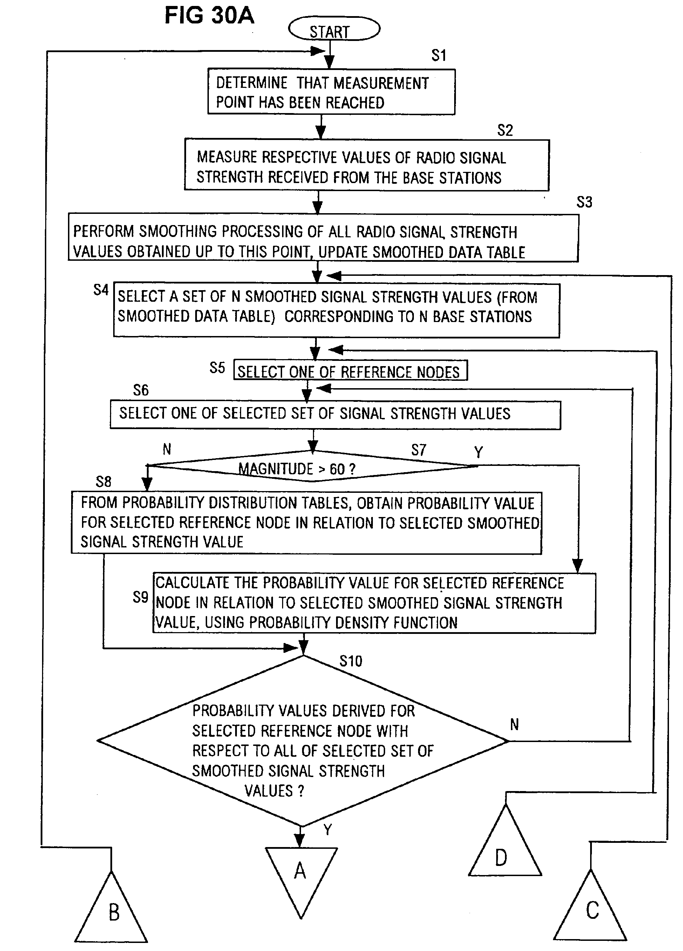

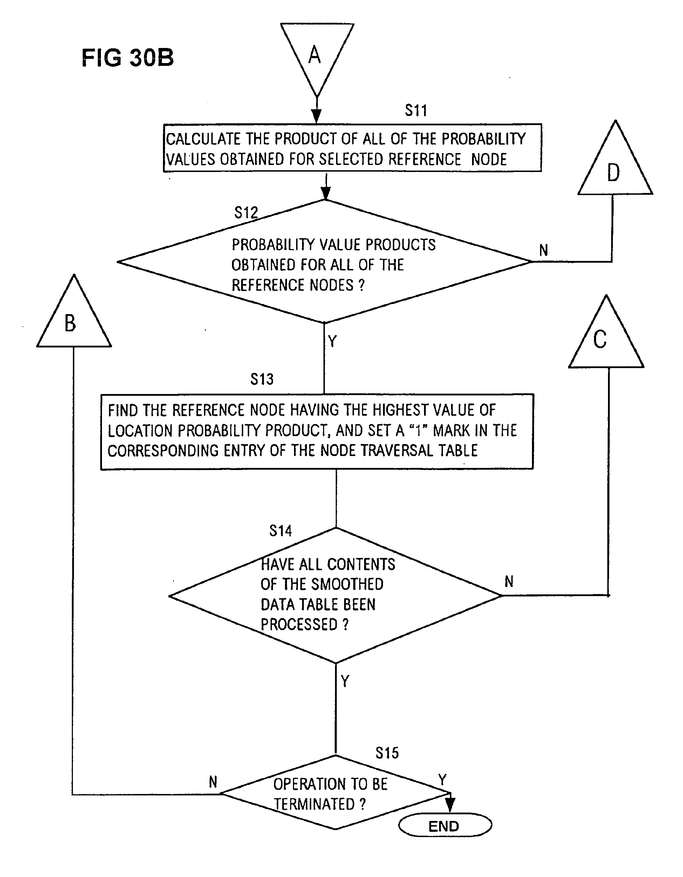

Figs. 30A, 30B, 30C constitute a detailed flow diagram of the operation of the fourth embodiment;

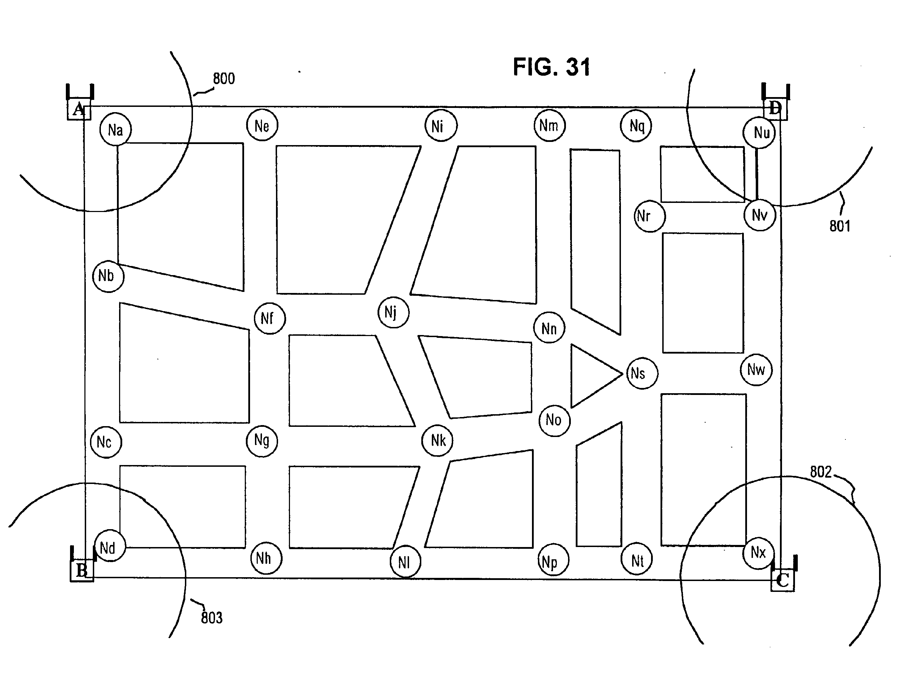

Fig. 31 is a map diagram for use in describing the operation of the fourth embodiment;

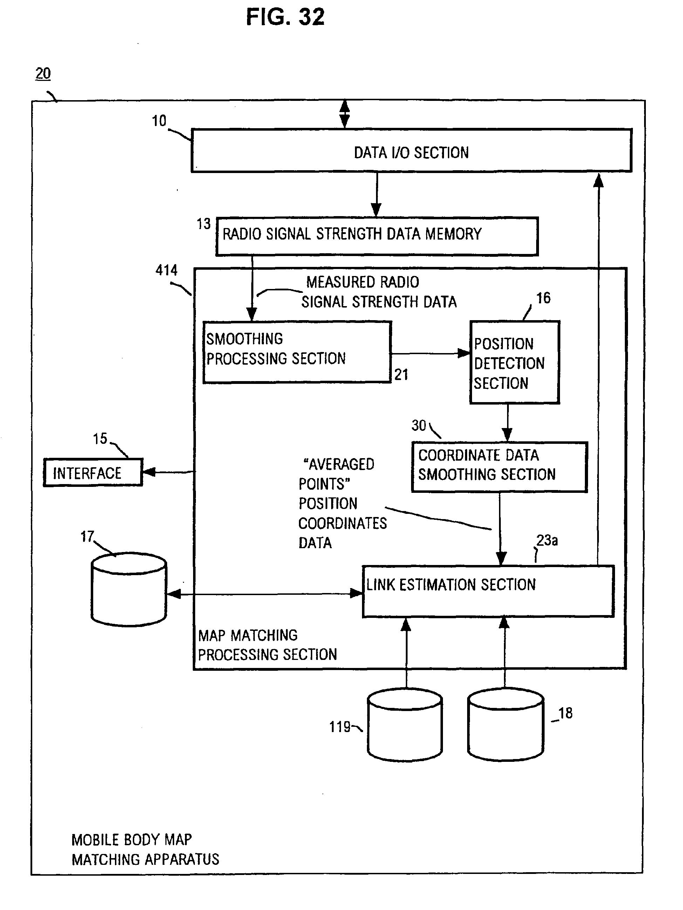

Fig. 32 is a general system block diagram of a fifth embodiment of a mobile body map matching apparatus;

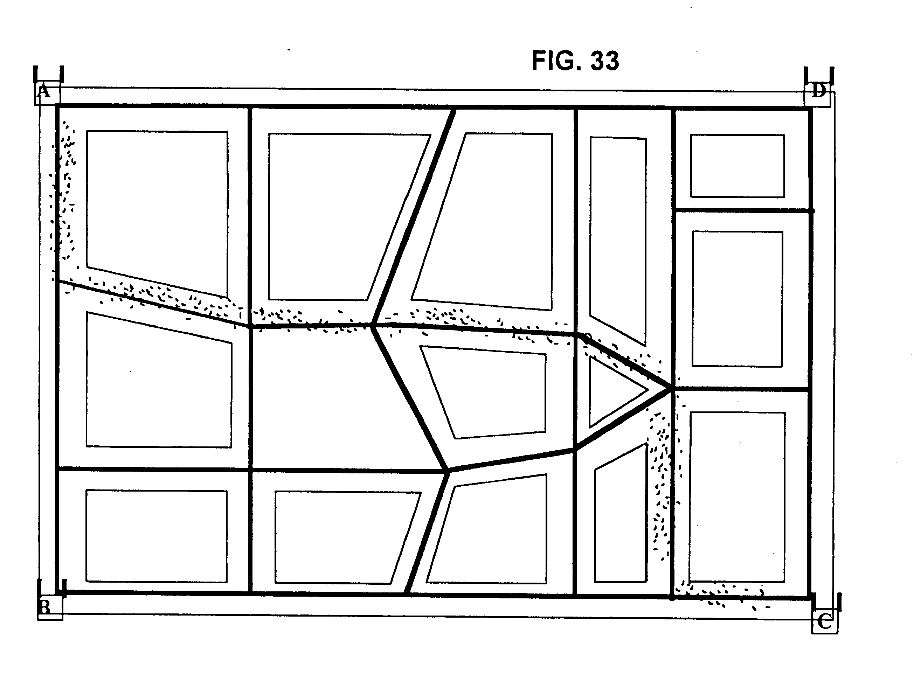

Fig. 33 is a map diagram for illustrating various positions corresponding to measurement time points at which respective sets of radio signal strength values are measured by the mobile body along its path;

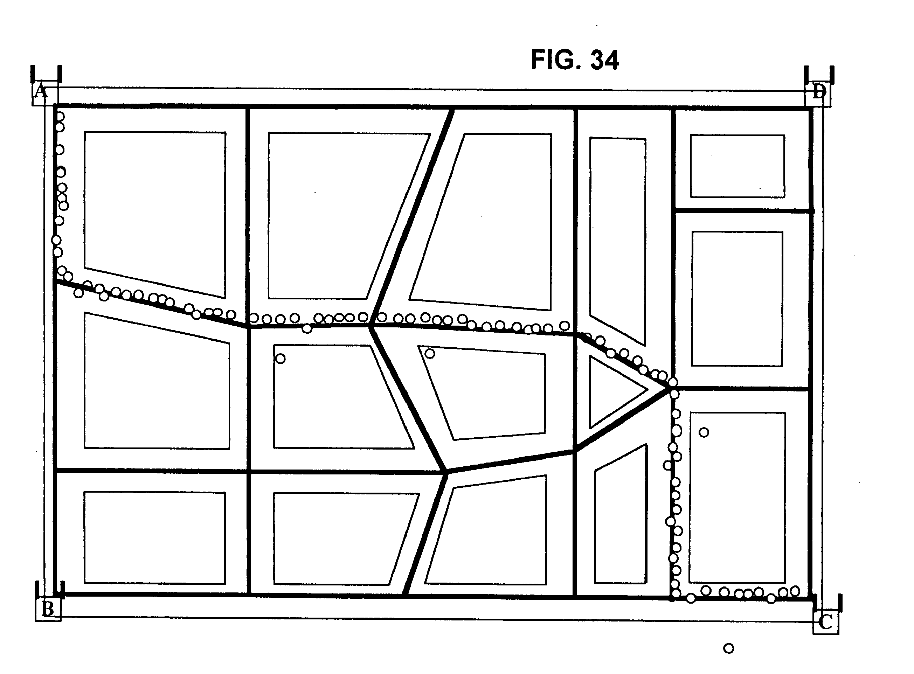

Fig. 34 is a map diagram for illustrating various positions corresponding to respective pairs of (X, Y) coordinate values which are extracted at periodic intervals from a sequence of estimated positions of the mobile body that are derived based on the sequence of sets of smoothed radio signal strength values obtained up to the current time point;

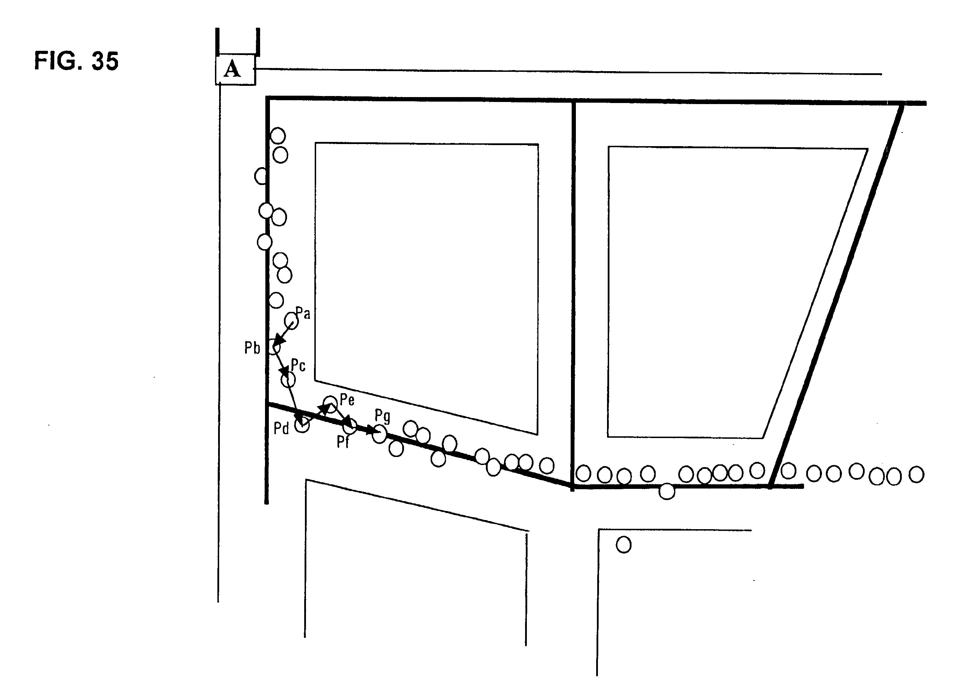

Fig. 35 is an expanded view of a portion of the map diagram of Fig. 34, showing successive ones of the estimated positions in greater detail;

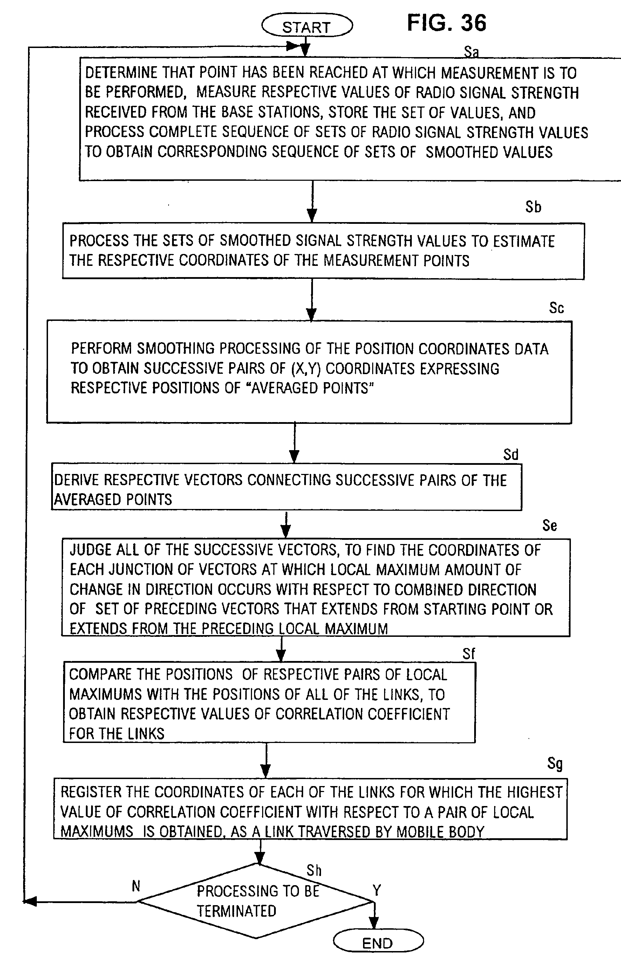

Fig. 36 is a flow diagram of the operation of the fifth embodiment, in which a sequence of vectors connecting respective pairs of the estimated positions are used to estimate successive directions of motion of the mobile body along its path, and in which points of substantial change in direction within the vector sequence are detected;

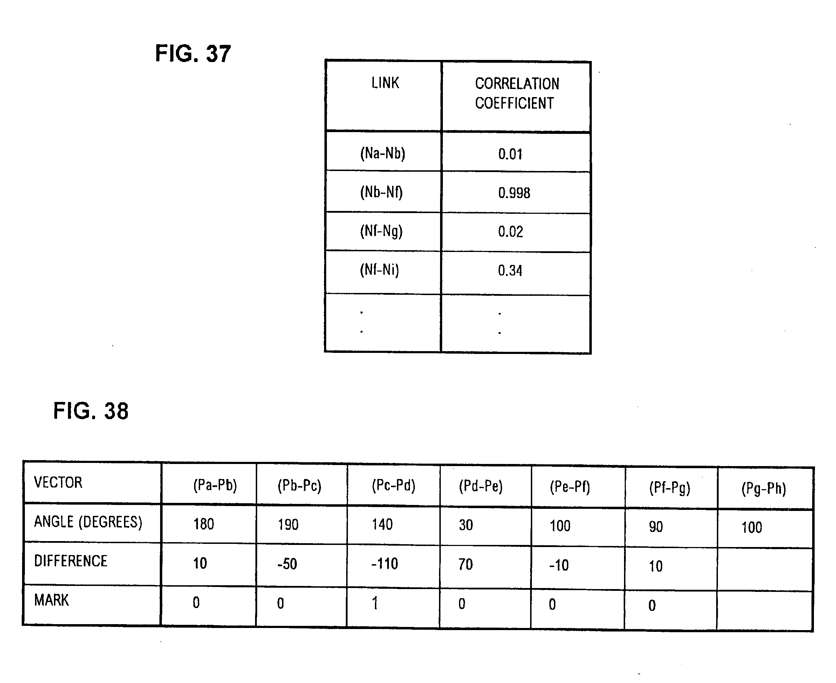

Fig. 37 is a table showing examples of respective values of correlation coefficient between each of a plurality of links and a line connecting a pair of successive estimated positions of substantial change in direction of advancement of the mobile body, obtained with the fifth embodiment;

Fig. 38 is a table for illustrating how a position of substantial change in direction of motion of the mobile body is detected, within the vector sequence of the fifth embodiment, as a local maximum within a sequence of values of differences in direction between each pair of successive vectors;

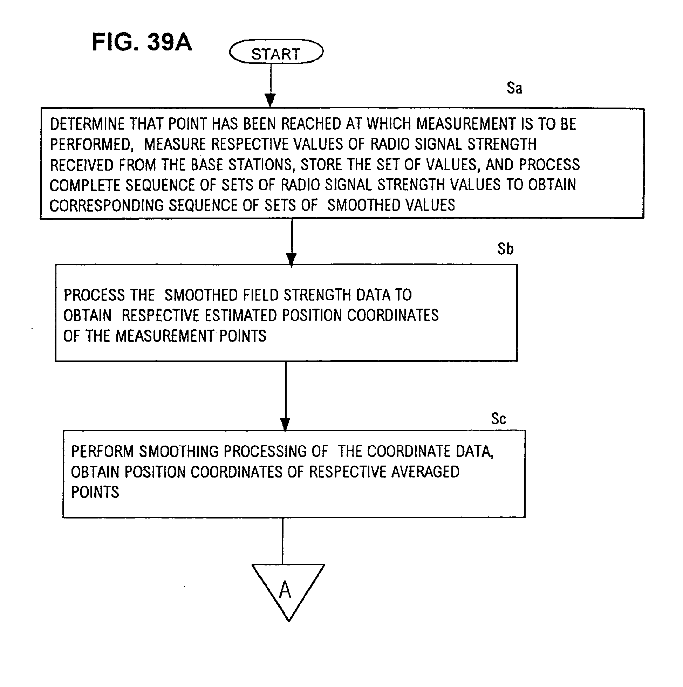

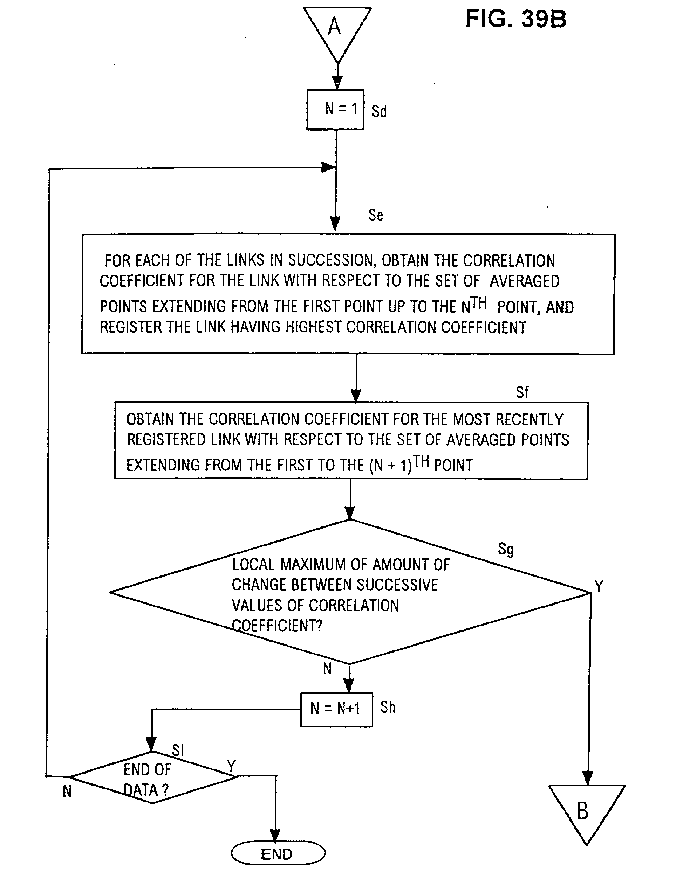

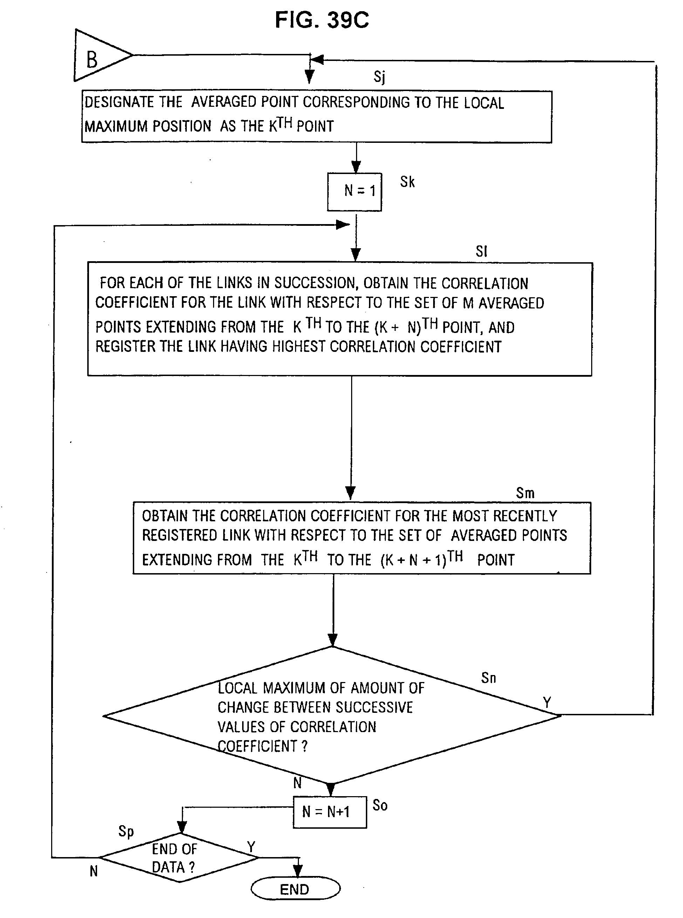

Figs. 39A, 39B, 39C constitute a flow diagram of a sixth embodiment of a mobile body map matching apparatus;

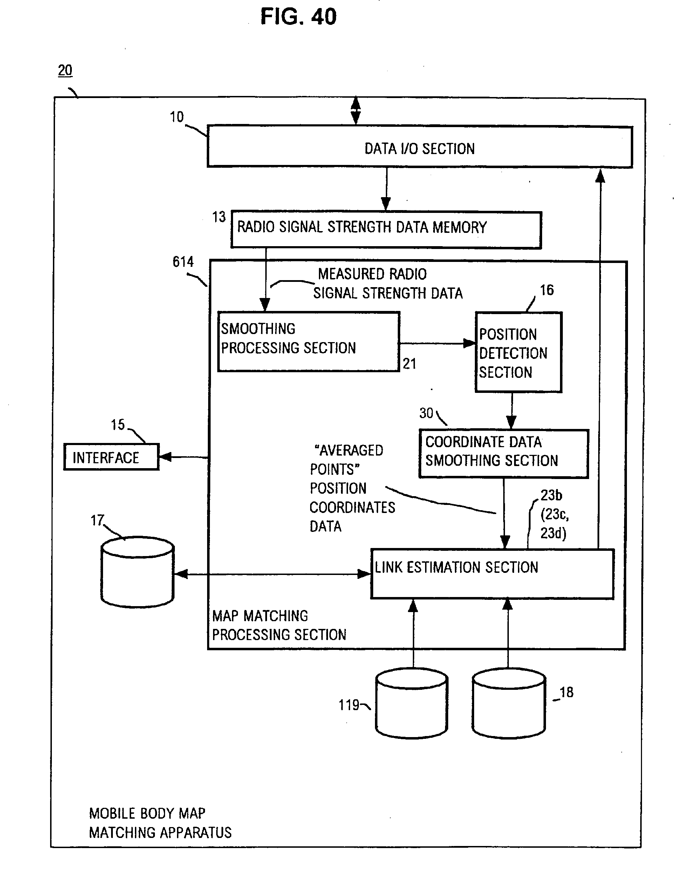

Fig. 40 is a general system block diagram of the sixth embodiment, which is also a general system block diagram of each of seventh and eighth embodiments of a mobile body map matching apparatus;

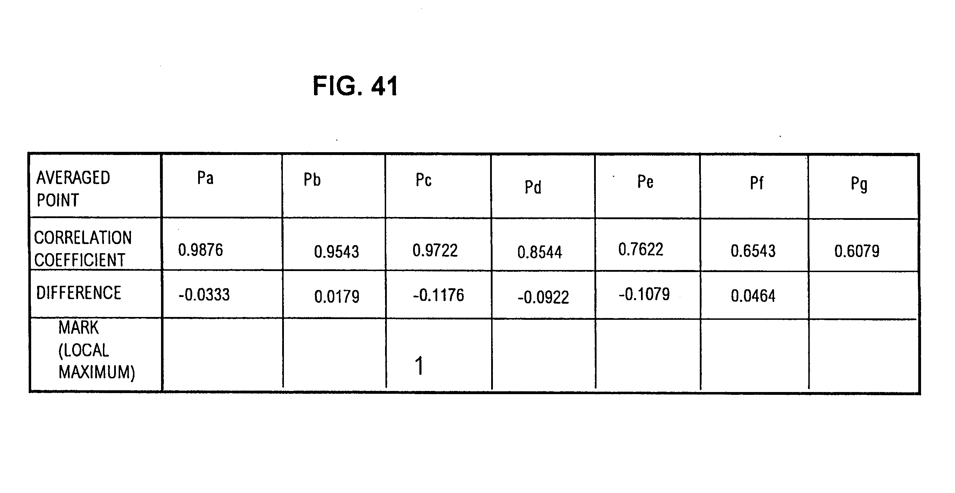

Fig. 41 is a table illustrating how a position of substantial change in direction of motion of the mobile body is registered as a local maximum within a sequence of values of difference between successive pairs of correlation coefficient, within a sequence of respective values of correlation coefficient obtained between one of the links and each of successive sets of the estimated positions of the mobile body;

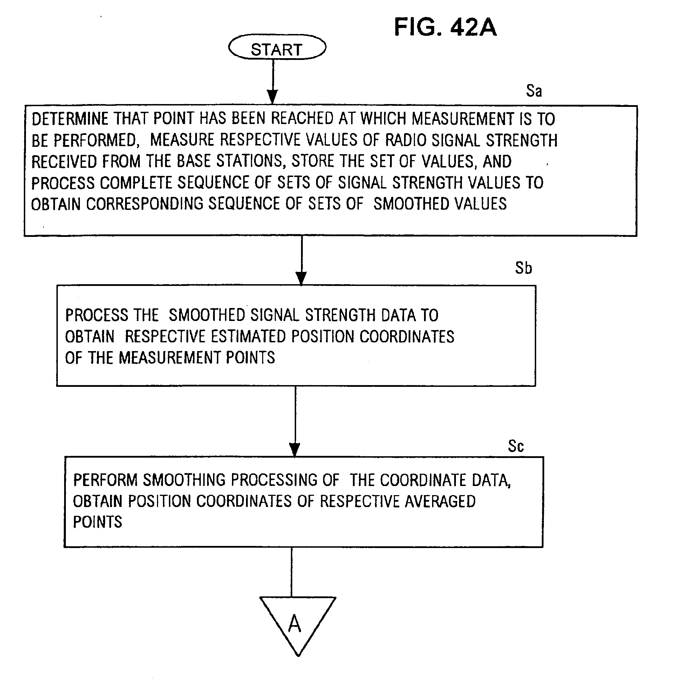

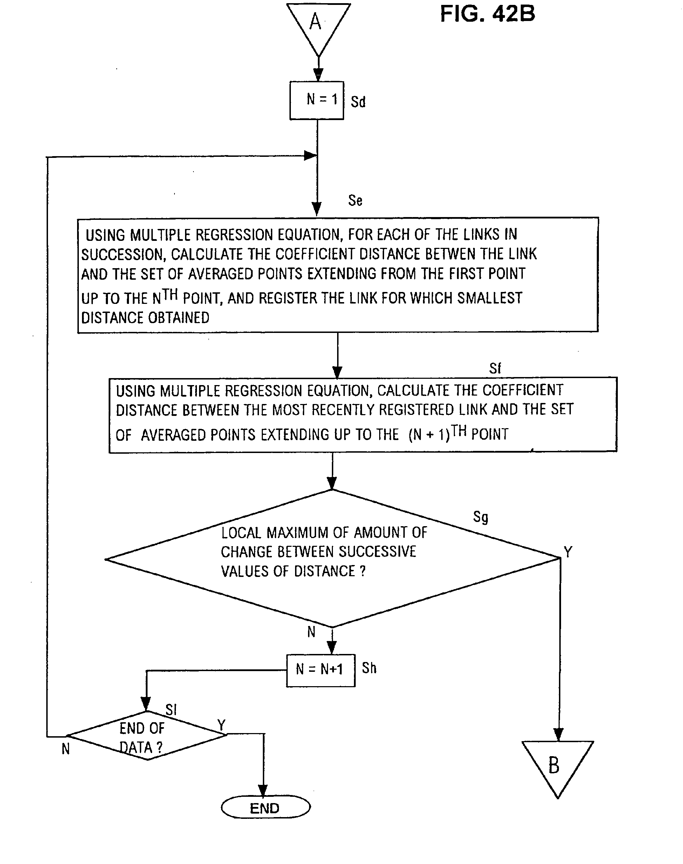

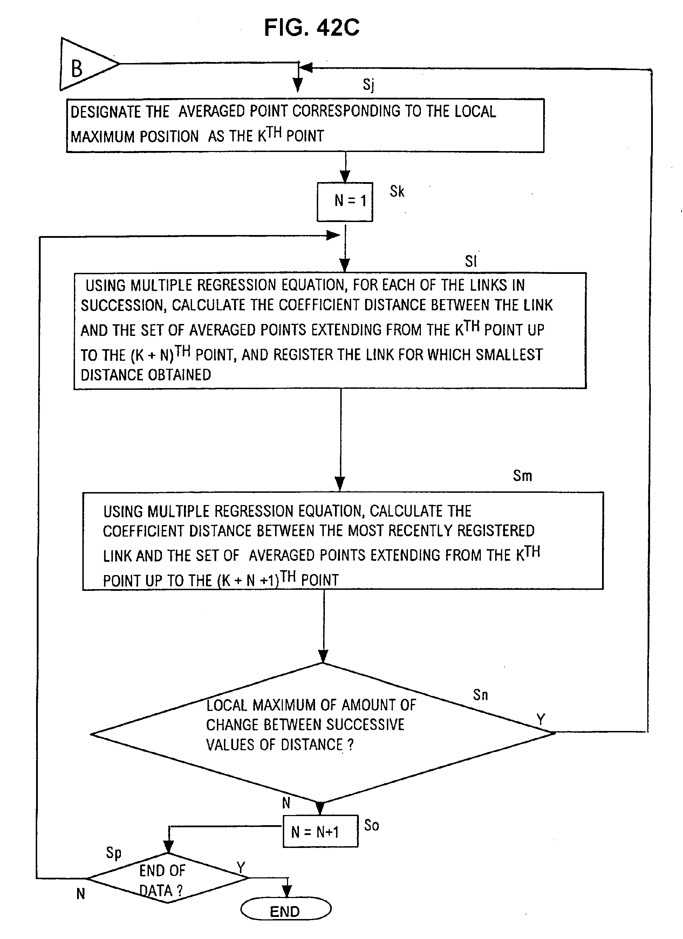

Figs. 42A, 42b, 42c constitute a flow diagram of the operation of a seventh embodiment of a mobile body map matching apparatus;

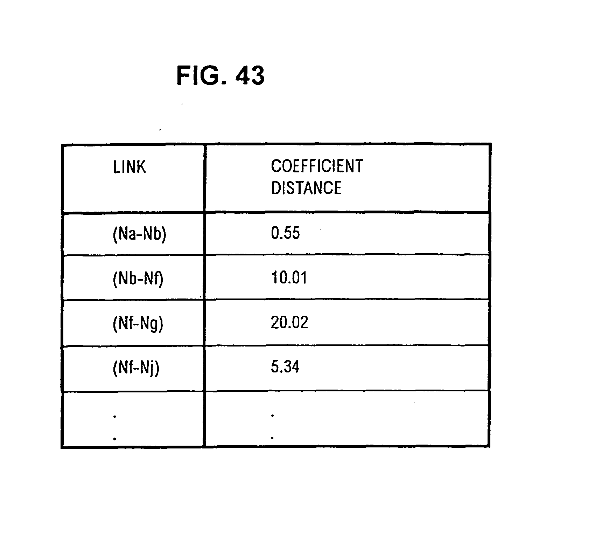

Fig. 43 is a table showing examples of values of coefficient distance which have been calculated based on a set of multiple regression equation coefficients derived for a set of the estimated positions of the mobile body shown in Fig. 35 and respective sets of multiple regression equation coefficients derived for a plurality of the links, with the seventh embodiment;

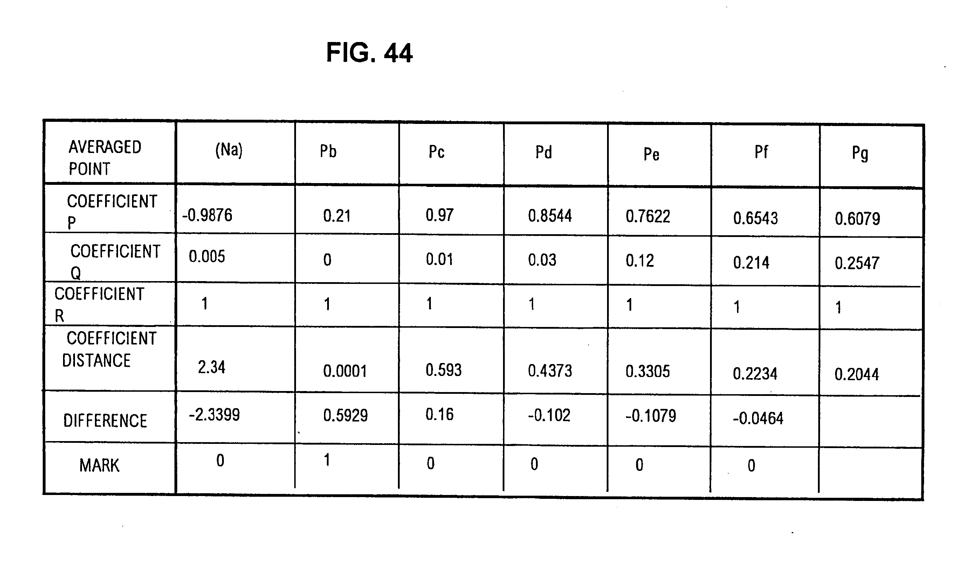

Fig. 44 is a table showing an example of respective sets of multiple regression equation coefficients derived for each of successive sets of the estimated positions shown in Fig. 35 and corresponding values of coefficient distance between each of these sets of positions and one of the links, with the seventh embodiment;

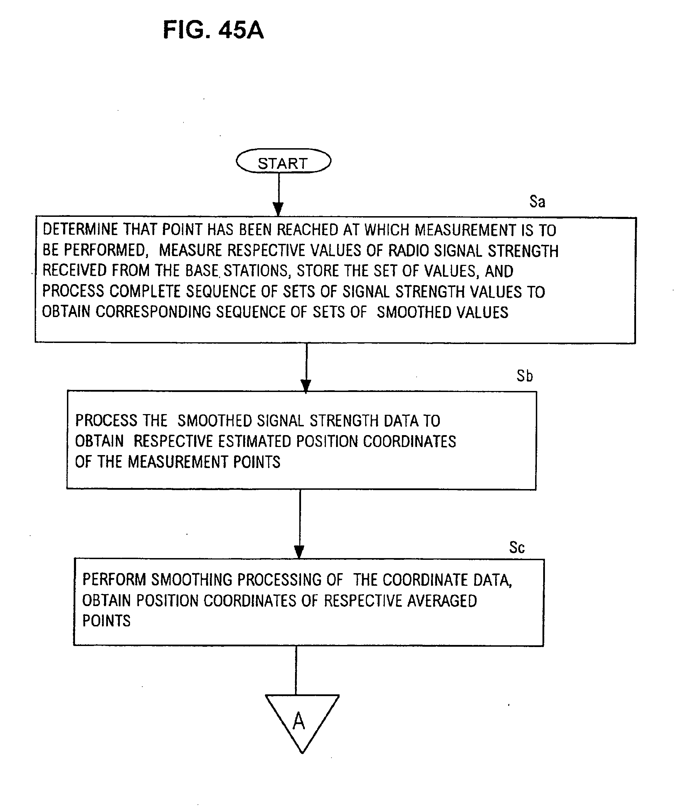

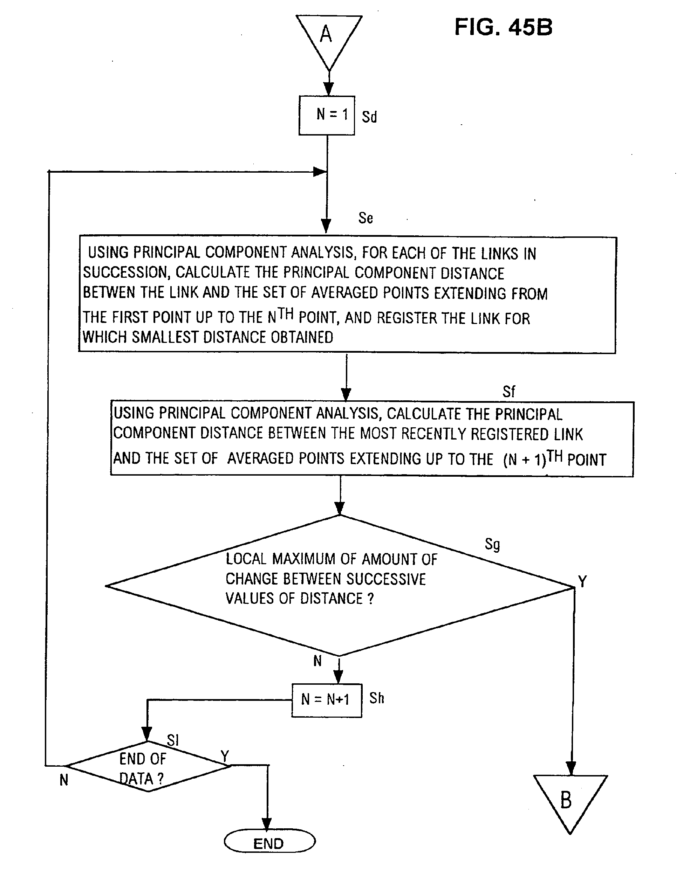

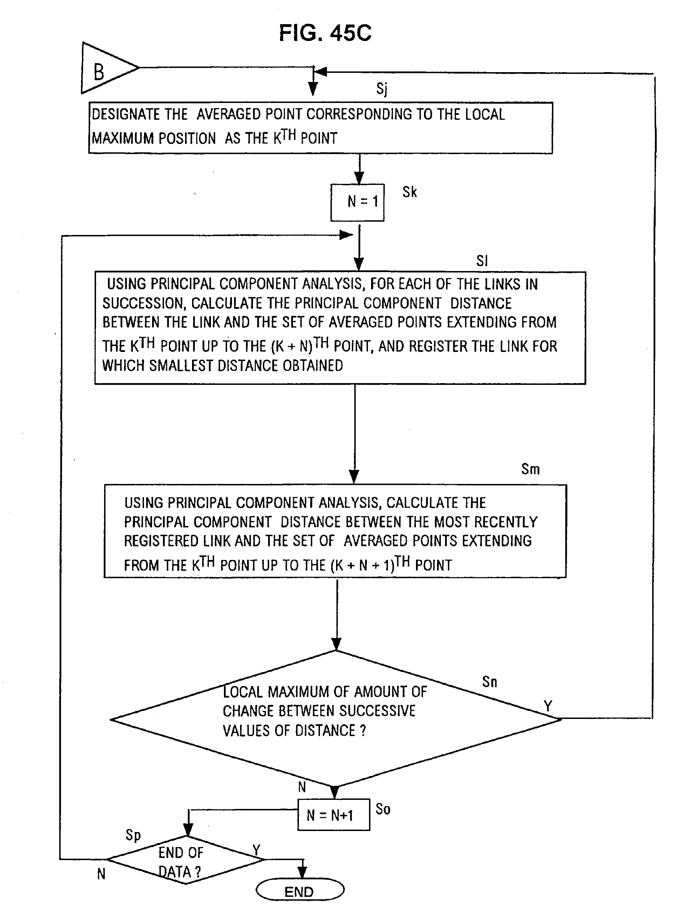

Figs. 45A, 45b, 45C constitute a flow diagram of the operation of an eighth embodiment, whereby principal component analysis (PCA) is applied to each of successive sets of the estimated positions of the mobile body and to each of the links;

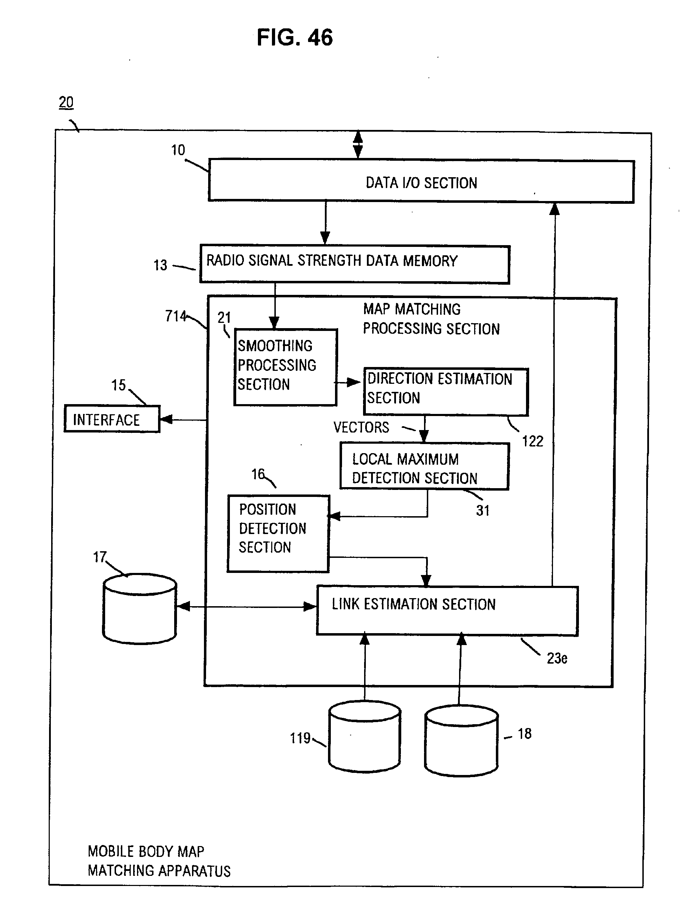

Fig. 46 is a general system block diagram of a ninth embodiment of a mobile body map matching apparatus, whereby the sequence of sets of smoothed radio signal strength values obtained up to the current time point is operated on to obtain a corresponding sequence of vectors, used to estimate positions of substantial change in direction of the mobile body;

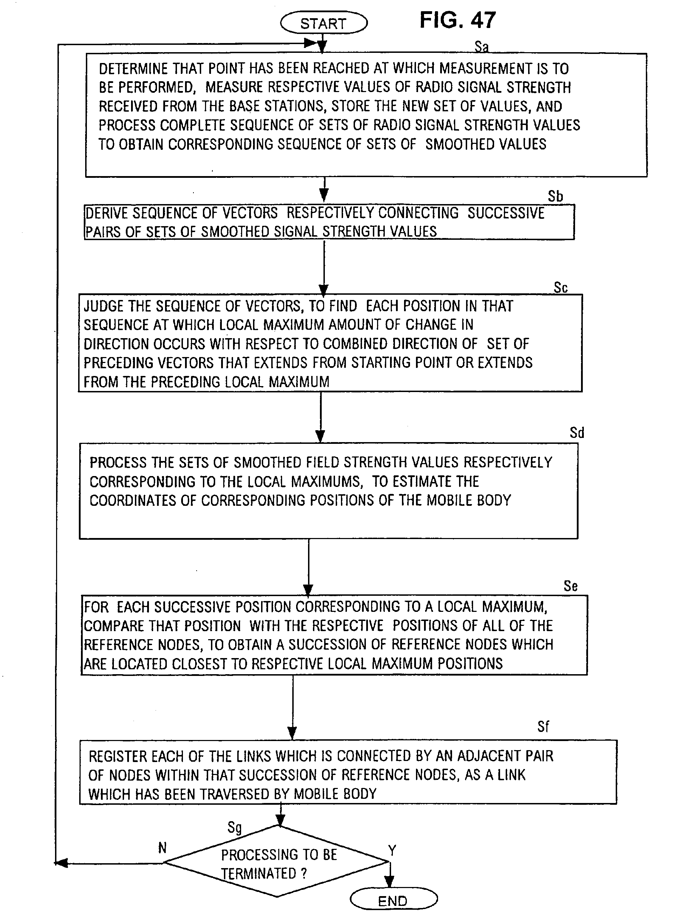

Fig. 47 is a flow diagram of the operation of the ninth embodiment;

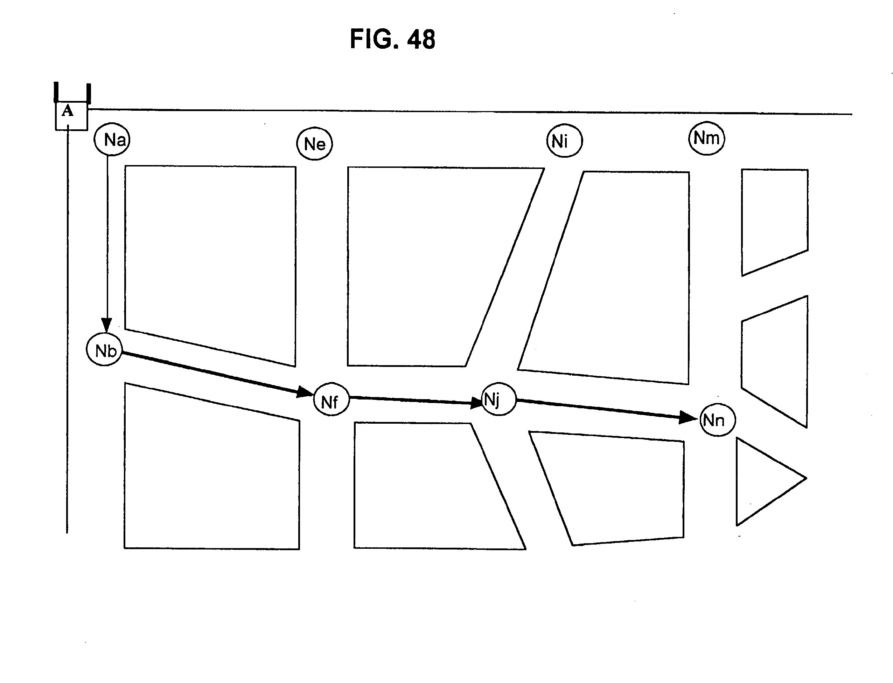

Fig. 48 is a partial map diagram, for illustrating how the path traversed by the mobile body is estimated as a succession of reference nodes which are respectively closest to successive estimated positions of substantial change in direction of the mobile body, with the ninth embodiment;

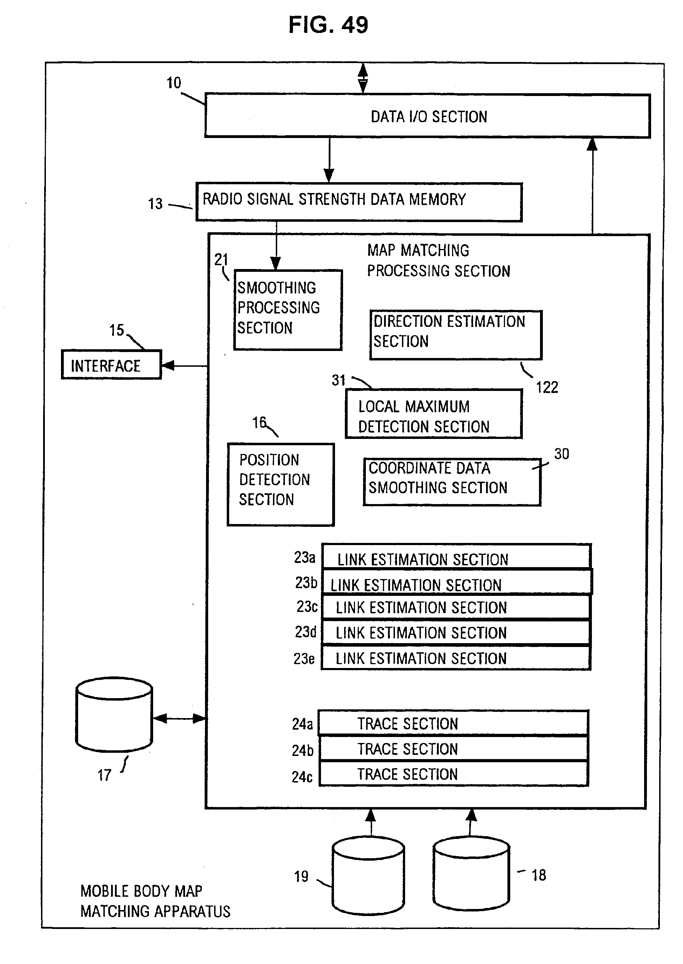

Fig. 49 is a general system block diagram for illustrating how some or all of the various embodiments may be combined into a single mobile body map matching apparatus;

Fig. 50 is a conceptual diagram for describing a first example of a prior art type of mobile body position estimation system; and

Fig. 51 is a conceptual diagram for describing a second example of a prior art type of mobile body position estimation system

## DESCRIPTION OF PREFERRED EMBODIMENTS

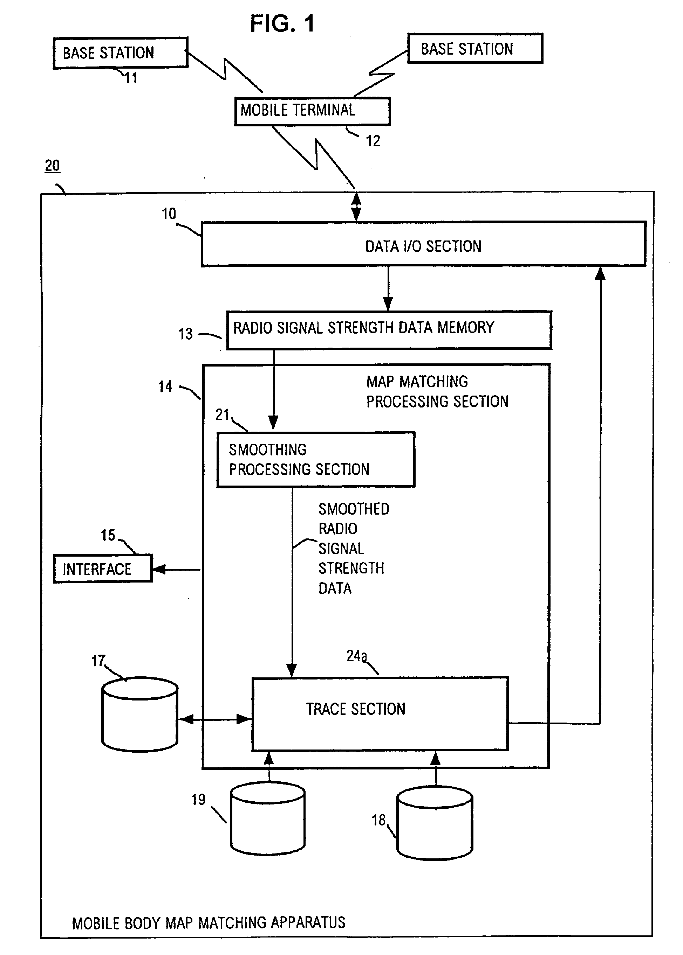

In the following, embodiments of the present invention will be described referring to the appended drawings. Fig. 1 is a block diagram showing the configuration of a mobile body map matching apparatus according to the present invention, with the mobile body map matching apparatus operating within a wireless communication system which enables information to be transferred between a plurality of base stations, the mobile body map matching apparatus, and a mobile body which utilizes that apparatus, with that system being referred to in the following as the information provider system. In Fig. 1, numeral 11 denotes one of a plurality of base stations of a communication network which uses wireless communication to communicate with each of a plurality of portable communication and display apparatuses such as that designated by reference numeral 12, which will be referred to as portable terminals. Each of the portable terminals may for example provide a portable telephone function as well as functions which are required for the operation of the present invention as described hereinafter, however only those functions relating to the present invention will be described in the following. A mobile body map matching apparatus 20 includes a function for receiving/transmitting data from/to one or more of the base stations via the network. Each portable terminal 12 is equipped with a capability for measuring the respective levels of radio waves received from each of the base stations 11, i.e., as signal strength reception levels, and uses the wireless communication network to transmit the resultant measured values to the mobile body map matching apparatus 20 via one of the base stations 11. The mobile body map matching apparatus 20 includes a function for transmitting/receiving data to/from the base stations via the network. In the mobile body map matching apparatus 20, numeral 10 denotes a data I/O (input/output) section which receives data transmitted from a portable terminal via a base station and which transmits data generated by the mobile body map matching apparatus 20, to a portable terminal via a base station. numeral 13 denotes an radio signal strength data memory which stores the radio signal strength data obtained by the aforementioned measurements performed by the mobile terminal 12, numeral 14 denotes a map matching processing section which processes the data held in the radio signal strength data memory 13 to obtain resultant data for use in locating the current position of the mobile terminal 12 on a specific map. Numeral 15 denotes a communication interface for exchanging data between the map matching processing section 14 and other apparatuses of the system. Numeral 17 denotes a trace information storage apparatus for storing intermediate processing results and trace information that is generated by the map matching processing section 14 as described hereinafter, where "trace information" here signifies information specifying the position coordinates of one or more ground points that have been successively traversed by a mobile body (i.e., a pedestrian or vehicle) which is carrying the mobile terminal 12. Numeral 18 denotes a map data storage apparatus for storing digital map information representing the contents of at least one map, for example a street map that is appropriate for use by a specific pedestrian whose location is being detected by the apparatus. Numeral 19 denotes a position and radio signal strength data storage apparatus for storing data which have been measured beforehand (i.e., before starting to obtain the position of a mobile body), and which express relationships between values of radio signal strength and positions of respective ground points. More specifically these data express, for each of a plurality of base stations 11, at each of a plurality of specific ground points, the respective values of radio signal strength which have been measured by a portable terminal at that ground point for each of these base stations. In the following, such ground points at which pre-measured values of radio signal strength have been derived and stored in the position and radio signal strength data storage section 19 will be referred to as reference nodes.

The map matching processing section 14 is made up of a smoothing processing section 21 for converting a sequence of sets of measured radio signal strength values that have been generated by the portable terminal of a mobile body and are held in the radio signal strength data memory 13 (with the sets corresponding to respective measurement time points and the values within each set corresponding to respective ones of the base stations) to a corresponding sequence of sets of smoothed values by applying an averaging type of processing, and a trace section 24a which generates trace information specifying the coordinates of successive reference nodes that have been traversed by the mobile body along its motion path, and uses map coordinate data stored in the map data storage section 18 to generate map information which indicates these traversed positions on a specific map, such as a street map of a region in a city, with the map information then being transmitted to the mobile body.

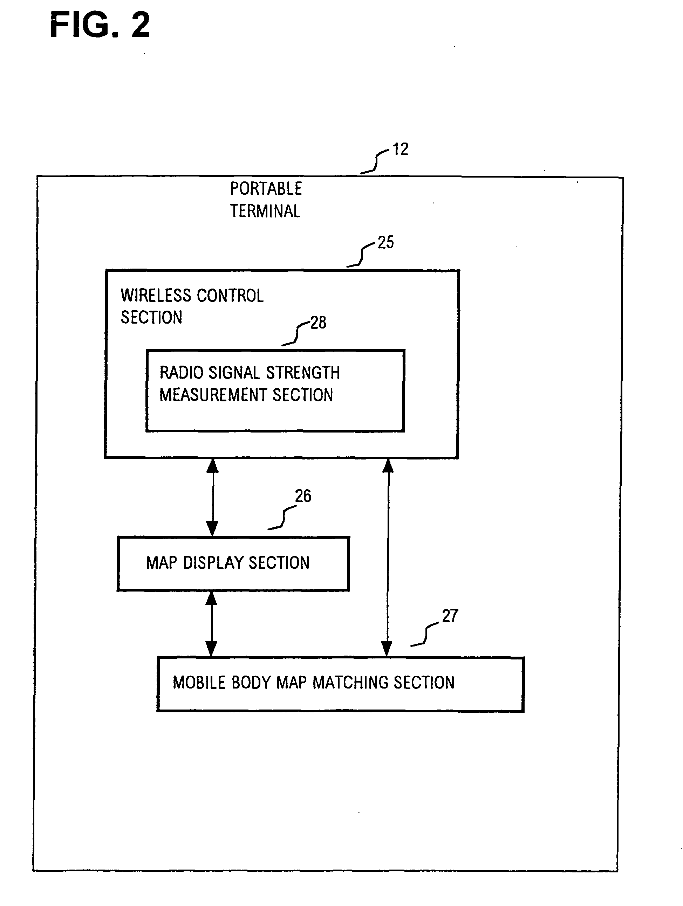

Fig. 2 is a block diagram showing an example of the general configuration of a mobile terminal 12 which is used by the information provider system of Fig. 1 and which may be carried, for example, by a pedestrian. As shown, the mobile terminal 12 is made up of a wireless control section 25 which performs data transmit/receive operations through wireless communication, a map display section 26 which is formed of a device for displaying maps such as a liquid crystal display, a map data processing section 27 which converts the aforementioned map information received from the mobile body map matching apparatus 20 to a suitable form for being supplied to the map display section 26, which thereby displays a map with an indication showing the (approximate) current location of the mobile body which is conveying that portable terminal 12. The wireless control section 25 includes an radio signal strength measurement section 28 for measuring the respective values of strength of radio signals received from each of a plurality of the base stations 11, at periodic intervals as described hereinafter, with the measured radio signal strength data being then transmitted by the wireless control section 25 via one of the base stations 11 to the mobile body map matching apparatus 20, to be stored in the radio signal strength data memory 13.

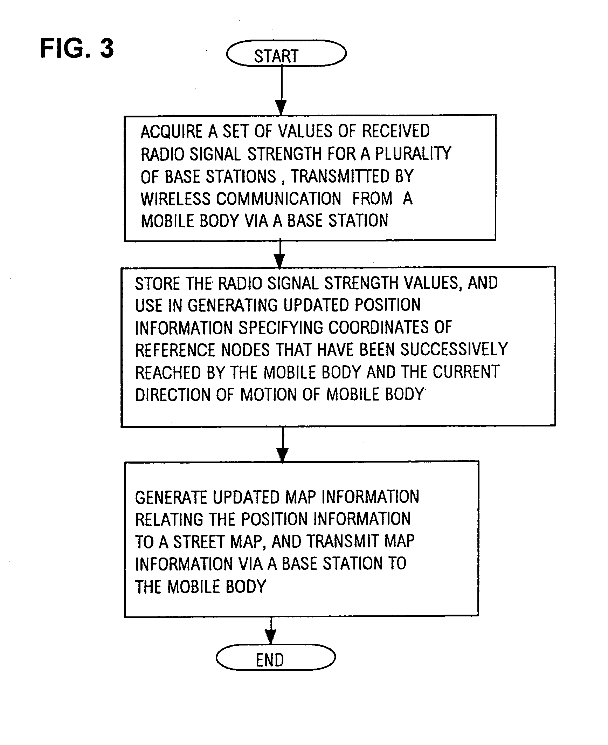

The basic operation of the trace section 24a of the mobile body map matching apparatus 20 of this embodiment is illustrated in the simple flow diagram of Fig. 3, which shows a basic sequence of operations that are periodically performed by the mobile body map matching apparatus 20 in relation to any specific mobile terminal 12. As shown, the mobile body map matching apparatus 20 first acquires from the mobile terminal 12 a set of values of strength at which radio signals are currently being received by that mobile terminal 12 from each of a plurality of base stations, and stores that set of values as the most recent one of a sequence of these sets. The trace section 24a then uses that acquired data together with all such data that have been previously acquired up to that point for that mobile terminal 12 (after the data have been smoothed, as mentioned above) in conjunction with the pre-measured radio signal strength data held in the position and radio signal strength data storage section 19, to derive the respective coordinates of each of the reference nodes which have been successively reached by the mobile body along its motion path. The coordinates expressing the positions of these nodes (obtained from the position and radio signal strength data storage section 19) are then related by the trace section 24a to the contents of a specific map (e.g., in the case of the mobile body being a pedestrian, a large-scale street map of a small area) whose data are read out from the map data storage section 18, and the resultant map information is then transmitted by the mobile body map matching apparatus 20 back to the mobile terminal 12 of that mobile body, via one of the base stations 11.

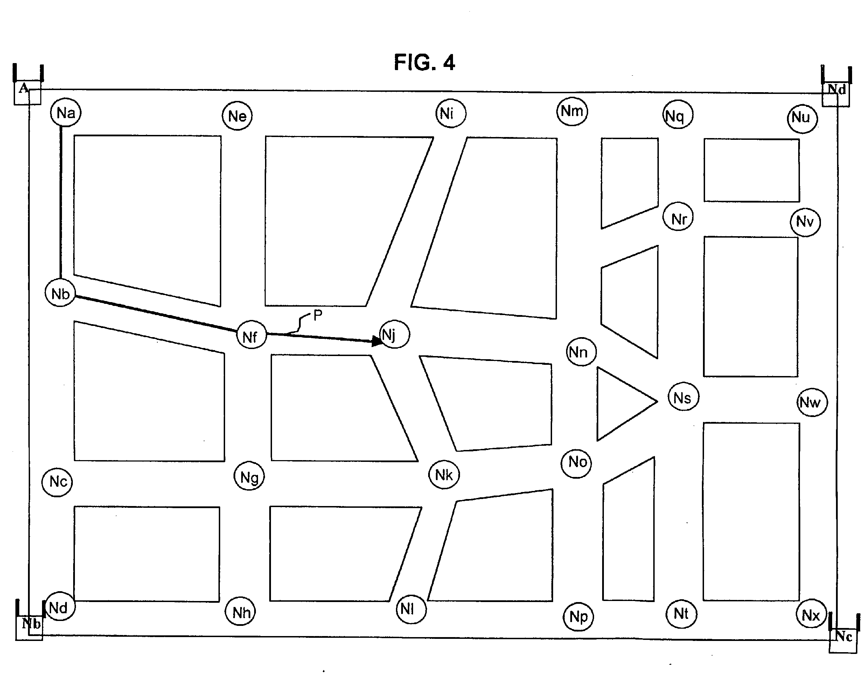

The operation of this embodiment will be described in the following, referring first to Fig. 4. This is a simple conceptual diagram, including a street map, in which four base stations are respectively designated by the letters A, B, C and D, and in which a set of 24 reference nodes are respectively designated as Na to Nx. The series of lines P which connect the reference nodes Na, Nb, Nf and Nj, ending in the arrow line, indicate the path of a mobile body that has successively traversed the reference nodes Na, Nb, Nf, with the reference node Nj being its most recent estimated position.

Referring now to Figs. 5, 6, 7, 8, 9 and 10, in each of these graphs the vertical axis represents radio signal strength values which have been measured by the mobile body at successive measurement time points, with the amplitudes of respective values indicated by vertical lines, while the horizontal axis represents distance traveled along the path P shown in Fig. 4, by the mobile body. For ease of understanding, the graphs correspond to a condition in which the mobile body is moving at approximately constant velocity, so that the successive values are spaced approximately at equal intervals along the distance axis. The horizontal axis is matched to the map of Fig. 4, with the leftmost end of the graph corresponding to a measurement position close to the base station A and the rightmost end of the graph corresponding to a measurement position close to the base station D. Fig. 5 is a graph of values of radio signal strength which are obtained by the portable terminal of the mobile body of Fig. 4, for radio waves received from the base station D. Fig. 6 is a graph which shows smoothed radio signal strength data which have been obtained by applying smoothing processing (i.e., the processing which is applied by the smoothing processing section 21 of Fig. 1), using the method of moving averages, to the radio signal strength data of Fig. 5.

Fig. 7 is a corresponding graph of values of measured radio signal strength data for the base station A, for the case of the mobile body 4 moving along the path P. Fig. 8 is a corresponding graph of smoothed radio signal strength data, derived by applying the aforementioned smoothing processing to the data of Fig. 7. Fig. 9 is a corresponding graph which shows smoothed radio signal strength data obtained by applying such smoothing processing to the radio signal strength data which are obtained for the base station C. Fig. 10 is a corresponding graph which shows smoothed radio signal strength data obtained by applying such smoothing processing to the radio signal strength data which are obtained for the base station B.

The operation of the trace section 24a of this embodiment will be described referring to the flow diagram of Fig. 11, together with the aforementioned drawings. Firstly, as indicated by step Sa of Fig. 11, after the processing for locating the mobile body has commenced, (e.g., starting from the position of reference node Na in the example of Fig. 4), an operation is periodically executed whereby the respective values of radio signal strength received from the plurality of base stations A to D are measured by the portable terminal of the mobile body, and the resultant data are transmitted to the mobile body map matching apparatus 20 to be stored in the radio signal strength data memory 13. It will be assumed that these measurement operations are performed at regular periodic time intervals. As indicated by step Sb, each time such a measurement operation occurs and a new set of radio signal strength values corresponding to each of the base stations A to D is received and stored by the mobile body map matching apparatus 20, the map matching processing section 14 then performs smoothing processing of the entire sequence of sets of radio signal strength values that have been received up to that point, to obtain a corresponding sequence of sets of smoothed radio signal strength values (i.e., respectively corresponding to the aforementioned successive measurement time points).

Next, as shown in step Sc, for each of these sets of smoothed radio signal strength values, the trace section 24a uses the pre-measured radio signal strength values stored in the data storage section 19 to calculate a table of deviation values. Such a table contains, for example for node Na, a deviation value indicating the degree to which the radio signal strength value for base station A in that set of smoothed radio signal strength values differs from the pre-measured value of radio signal strength that has been stored for node Na in relationship to base station A, and also expresses similar deviation values for node Na in relation to each of the other base stations B, C and D. The table similarly contains such sets of deviation values for each of the other reference nodes Nb to Nj.

Next, as indicated by step Sd, each of these tables of deviation values, within a group of successive tables, is judged to find a reference node for which all of the deviation values are within a predetermined range of deviation. The reference nodes having the greatest number of occurrences of that condition of being within the predetermined range, within that group, is judged to have been traversed by the mobile body, in step Se. The steps Sd, Se are thereafter successively repeated for successive ones of the sets of smoothed radio signal strength values, until all of the data have been processed, and all of the reference nodes traversed by the mobile body have thereby been traced.

This operation of the mobile body map matching apparatus 20 with respect to the trace section 24a will be described in more detail, referring to the flow diagram of Fig. 12 together with the tables shown in Figs. 14, 15, 16A, 16B, 17 and 18. Table 1 (Field Strength Values table) shown in Fig. 14 illustrates an example of the pre-measured data stored in the position and radio signal strength data storage section 19 of the mobile body map matching apparatus 20, for the case of the reference nodes and base stations of Fig. 4. In Table 1, each of the pairs of values shown consists of an average of a plurality of values of measured radio signal strength obtained at a specific node for received radio waves from a specific base station, and the standard deviation of that average value. Thus for example the average value of radio signal strength measured at node Nb in the case of reception from base station A is 62, with the standard deviation being 15. Table 2 (the Smoothed Data table) of Fig. 15 shows respective sets of radio signal strength values which have been measured at each of the aforementioned measurement points, along the path of motion of the mobile body in the map of Fig. 4, after these values have been subjected to the aforementioned smoothing processing. For example in that Smoothed Data table, the set of smoothed radio signal strength values 65, 58, 42 and 50 for the base stations A, B, C and D respectively, correspond to the first measurement time point, the next row of values corresponds to the second measurement time point, and so on. point, the next row of values corresponds to the second measurement time point, and so on.

Table 3 (the Deviation Values tables) shown in Fig. 16A, 16B are the aforementioned arrays of deviation values which are respectively generated for each of the rows of data in the Smoothed Data table. To simplify the diagrams, only the Deviation Values table that has been derived from the first row of Table 2 is shown in Fig. 16A, as the array of values corresponding to the reference nodes Na to Nj and base stations A to D. The manner of calculating a deviation value for a specific reference node in relationship to a specific base station, using the data of a specific row of the Smoothed Data table, is as follows. Designating the corresponding smoothed radio signal strength value obtained from Table 2 as Vs, and designating the average radio signal strength value and the standard deviation corresponding to that specific combination of reference node and base station as Ea and Sd respectively (obtained from Table 1), the deviation value Dv is obtained as:

$$Dv = ((Vs - Ea) \times 10) \div Sd) + 50$$

Once such a Deviation Values table has been generated for one row of Table 2, each row of that Deviation Values table is judged, to find any reference node for which all of the corresponding deviation values (i.e., the corresponding row of that Deviation Values table) are within a predetermined range. Such a set of deviation values will be referred to as an in-range value set. It will be assumed that this range is initially set as being from 49 to 51, i.e., $50 \pm 1$. In Fig. 17, Table 4 illustrates a sequence of successive conditions of an In-Range Occurrence table whose contents are held in the trace information storage section 17 and which has respective entries for each of the reference nodes, as shown. The uppermost row of Table 4 shows the In-Range Occurrence table in an initialized condition (all entries reset to zero) before starting to process the contents of Table 2. The second row of Table 4 shows the condition of the In-Range Occurrence table after the first four rows of Table 2 have been examined and it has been found that an in-range value set has been detected corresponding to the reference node Na, in each of these four rows of Table 2, so that the number 4 has been inserted in the entry for node Na in Table 4. Table 4 is then again initialized, and the above procedure is repeated for the next four rows of Table 2, and so on in succession until all of the data of Table 2 have been processed. completion of the above processing of the data of Table 2, registers each of the reference nodes which have been reached by the mobile body in its motion along the path P shown in Fig. 4, i.e. 1 is registered as a "mark" in Table 5 in each entry corresponding to a reference node that has been traversed by the mobile body.

The operation of the mobile body map matching apparatus 20 will be described referring to the flow diagram of Fig. 12. Firstly, when it is determined (as described hereinabove) that a point has been reached at which an radio signal strength measurement operation is to be executed by the portable terminal of the mobile body (step S1), the contents of Table 5 are reset to the all-zero condition (step S2), then the measurement operation is performed and the resultant new set of radio signal strength values are transmitted to the mobile body map matching apparatus 20 and stored in the radio signal strength data memory 13 (step S3). Smoothing processing is then applied (step S4) to all of the sets of radio signal strength values that have been acquired up to that point. A counter value CNT is then initialized, as is also Table 4. An array of deviation values (each calculated as described above) is then generated based on the data of the first row of Table 2, as the first of the sequentially generated Deviation Values tables described above with reference to Fig. 16A, 16B (step S6). That Deviation Values table is then examined to find each reference node for which the corresponding set of deviation values are all within the above-mentioned range.

In the example of Fig. 16A, this is true for node Na, i.e., an in-range value set is detected for that reference node, as indicated by the rectangle surrounding the corresponding row in the first of the Deviation Values tables. As a result, the corresponding entry for node Na in Table 4, the In-Range Occurrence table, is incremented by 1. If a plurality of the nodes meet that in-range condition, then the respective entries for each of these in Table 4 are each incremented by 1 (step S7).

The counter CNT is then incremented by 1, and the result is judged to find if the first four rows of Table 2 have been processed (steps S8, S9). If not, then operation returns to step S6, while if processing of that first four has been completed, step S10 is executed, in which the contents of Table 4 are judged to find the reference node for which the highest number has been reached, i.e., for which the highest number of in-range value sets has been registered. This is taken as indicating that the mobile body has reached that reference node, in its motion along the path P of Fig. 4, so that the corresponding entry in Table 4 is set to 1. In the example of Fig. 17, this is true for node Na after the first four rows of Table 2 have been processed.

A decision is then made (step S11) as to whether all of the data of Table 2 have been processed, and if not, operation returns to step S1 and the next four rows of Table 2 are processed in the same way as described above, to thereby again detect a node which has been traversed by the mobile body, and to register than node in Table 4.

In the Deviation Values tables example of Fig. 16A, 16B, except for the first of the Deviation Values tables, only the in-range value set (or plurality of in-range value sets) detected for a group of four rows of Table 2 is shown, enclosed by a rectangular outline. Considering the set of rows 9 to 12 of Table 2 for example, in the case of row 9 each of the nodes Nb, Ne and Nf is detected as having an in-range value set, while in row 10, each of these nodes Nb, Ne and Nf is again detected as having an in-range value set. However in the case of rows 11 and 12 of Table 2, only the reference node Nf is detected as having an in-range value set in each of the Deviation Values tables corresponding to these rows 11 and 12. Hence, the total number of marks obtained for node Nf in Table 4 on completion of processing rows 9 to 12 of Table 2 is 4, and since this is the greatest number of marks, the entry corresponding to reference node Nf in the Node Traversal table (Table 5) is set to 1.

The steps S6 to S7 are thus repetitively performed for each of successive sets of four rows of Table 2, until it is judged in step S11 that all of the smoothed data of Table 2 have been processed. Processing then returns to step S1, to wait until the next measurement time point.

It is possible that when step S7 is executed for a Deviation Values table, there may be no reference node for which there is a corresponding in-range value set. In that case, the selection range is widened by a predetermined amount. In this embodiment, the range is widened from 49-51 to become 48-52. The operation to detect an in-range value set is then repeated, and if that is again unsuccessful, the selection range is again widened by the predetermined amount. This is illustrated in Fig. 13, which shows details of the actual content of step S7 of Fig. 12, as the combination of steps S7a to S7c.

It can thus be understood that with this embodiment, each time the processing shown in Fig. 12 has been completed, the Node Traversal table (Table 5) will have registered each of the reference nodes which are estimated to have been successively traversed by the mobile body. The position coordinates of these nodes (or of the latest reference node to be reached by the mobile body) are then related to respective positions on the map whose data are held in the storage section 18, and the resultant map information indicating the current position of the mobile body are then transmitted via a base station to the portable terminal of the mobile body.

The map information are then transferred to the map display section 26 of that portable terminal, to be displayed to a user.

A second embodiment of the invention will be described in the following, which has the function of estimating the direction of motion of a mobile body equipped with a portable terminal as described above for the first embodiment. Referring to Fig. 20, this is a map showing a mobile body which is moving along a path P2 as shown. It will be assumed that the mobile body has reached the position indicated as point Q, and it is required to find the direction in which it is moving at that time. The general system configuration of this embodiment is shown in the block diagram of Fig. 19, in which the sections corresponding to sections of the first embodiment are designated by identical numerals to those of the first embodiment, and further description of these will be omitted. In the mobile body map matching apparatus 120 of this embodiment, the map matching processing section 114 includes a direction estimation section 22, which executes processing to estimate the current direction of motion of the mobile body conveying the mobile terminal 12.

The operation of the second embodiment will be described referring to the map diagram of Fig. 20 and to the flow diagram of Fig. 21. In step S1 of Fig. 21, in the same manner as described for the first embodiment, a determination is periodically made that an radio signal strength measurement operation (step S2) is to be executed by the mobile terminal 12, i.e. that a measurement time point has been reached. The resultant set of obtained radio signal strength values are transmitted to the mobile body map matching apparatus 20 to be stored in the radio signal strength data memory 13, then smoothing of all of the sets of measured radio signal strength values obtained up to that point is executed, as for the first embodiment, to thereby obtain respective sets of smoothed radio signal strength values. Step S4 is then executed, in which the set of smoothed radio signal strength values corresponding to the most recent estimated position of the mobile body, represented as point P in the map diagram of Fig. 20 (i.e., the most recent one of the reference nodes to have been traversed by the mobile body, as determined by the trace section 24a through the processing described for the first embodiment) is obtained from the radio signal strength data memory 13. As described above, this consists of respective smoothed signal strength values obtained with respect to each of the base stations A, B, C, D. In addition, the set of smoothed radio signal strength values which corresponds to the most recent measurement time point (where the corresponding position of the mobile body is indicated as point Q in Fig. 20) is also obtained from the radio signal strength data memory 13.

Next, selecting one of the base stations, the value of smoothed radio signal strength corresponding to that base station with respect to the preceding point P is subtracted from the value of smoothed radio signal strength corresponding to that base station with respect to the succeeding point Q. A difference value is thereby obtained with respect to that base station, and the difference value is expressed as a vector which is oriented along a line extending from that base station to the point P and whose length is proportional to the magnitude of that difference value, for example the vector Va shown in Fig. 20. The same operation is repeated for the smoothed radio signal strength values corresponding to each of the other base stations, to thereby obtain respective vectors corresponding to each of the base stations (steps 5, 6).

Vector addition is then applied to that set of vectors Va, Vb, Vc and Vd shown in Fig. 20, each extending from point P and respectively corresponding to the base stations A, B, C and D to obtain a composite vector such as is designated by V1 in the example of Fig. 20, extending from the point P (step S7). The direction of that composite vector expresses an estimation of the direction of motion of the mobile body when moving from point P to point Q.

Hence, direction expressed by the composite vector V1 can be incorporated in the map information that is transmitted to the mobile body. In that case, the map that is displayed by the portable terminal can display the current direction of motion of the mobile body with respect to the most recently traversed reference node.

As can be understood from the above description, the direction estimation function of the third embodiment can provide useful information to a user, since a user can be provided with a map which displays an estimate of the direction in which the mobile body is currently moving. This is illustrated in the partial map diagram shown in Fig. 22. Assuming that it has been determined that the mobile body has successively traversed the positions of nodes Na, Nb, the estimated direction (shown by the arrow line) obtained as described above indicates that the mobile body is currently moving between the nodes Nb and Nf.

As an alternative form of the second embodiment described above, it would be possible to estimate the direction of motion of the mobile body without reference to a specific estimated position, based only on changes in the respective values of smoothed radio signal strength values corresponding to the base stations, between the preceding measurement time point and the current measurement time point, and on the known positions of the base stations.

A third embodiment of the invention will be described, referring to the system block diagram of Fig. 23, the flow diagrams of Fig. 24 and of Figs. 25A, 25B, the smoothed data table of Fig. 2, and the radio signal strength values graphs of Figs. 5 to 10, together with the tables shown in Figs. 26 to 28. Fig. 23 shows the general configuration of this embodiment, which differs from that of the first embodiment only with respect to a trace section 24b of the map matching processing section 214 in the mobile body map matching apparatus 20. The operation sequence which occurs each time an radio signal strength measurement operation is performed by the portable terminal of the mobile body of this embodiment is shown in simplified form in Fig. 24. Firstly, step Sa is executed in which it is determined that an radio signal strength measurement operation is to be performed as described for the first embodiment, and this is done to thereby obtain a set of radio signal strength values relating to each of the base stations A to D shown in the map of Fig. 4. That set of measured radio signal strength values is stored in the radio signal strength data memory 13 of the mobile body map matching apparatus, and step Sb is executed in which the entire sequence of sets of measured radio signal strength values (i.e., with the values in each set corresponding to respective ones of the base stations, as described for the first embodiment) acquired up to the current time point are subjected to smoothing processing, to obtain a corresponding sequence of sets of smoothed radio signal strength values, with each set corresponding to a specific measurement time point.

In step Sc one of these sets of smoothed sets of radio signal strength values is selected, starting from the first set (e.g., the set constituting the first row of the smoothed data table, Table 2). In step Sd, one of the reference nodes Na to Nx in the map of Fig. 4 is selected. In step Se, the selected set of smoothed radio signal strength values is used in conjunction with a probability distribution table (described hereinafter) which is specific to the selected reference node, to derive a probability value indicative of the degree of probability that the mobile body has traversed the selected reference node. Respective probability distribution tables corresponding to each of the reference nodes are derived beforehand and stored in the position and radio signal strength data storage section 19, with the table values being based upon the aforementioned sets of pre-measured values of radio signal strength corresponding to the base stations, obtained for each of the reference nodes.

The sequence of steps Sd, Se is thereafter repeated successively, until all of the reference nodes have been successively selected, to thereby obtain respective probability values for each of the reference nodes Na to Nx. These probability values are then judged to find the highest value, and a "1" mark is entered in the entry for the corresponding reference node in the node traversal table of Fig. 18 (step Sg), i.e. the reference node having the highest probability is registered as having been traversed by the mobile body.

Thereafter, the above sequence of steps is repetitively executed to process each of the sets of smoothed radio signal strength values corresponding successive measurement time points, until all of these sets have been processed.

In that way, in the same manner as described for the first embodiment, a node traversal table such as that of Fig. 18 can register each of the reference nodes that have been successively reached by the mobile body along its motion path.

The actual operation flow of this embodiment is shown in the flow diagram of Figs. 25A, 25B. In step S4, a set of smoothed radio signal strength values respectively corresponding to the plurality of base stations is selected. In step S6 one of the reference nodes is selected, and in step S6 one of the selected set of smoothed radio signal strength

**EP 1 022 578 B1**

values (i.e., corresponding to a specific one of the base stations A to D in Fig. 4) is selected. In step S7, the probability distribution table that is specific to the selected reference node is then used in conjunction with the selected smoothed radio signal strength value to obtain a probability value. The sequence of steps S6, S7 is then repeated successively, to sequentially select each of the smoothed radio signal strength values corresponding to the respective base stations A to D, and obtain respectively corresponding probability values. In that way for example, the set of probability values 0.1337 to 0.2214 is obtained for node Na, in the first row of Table 7 shown in Fig. 28.

Next, in step S9, the product of that set of probability values is calculated, for example to obtain the value 0.6134 shown in Fig. 28 (after the product has been multiplied by a factor of 1000).

Steps S5 to S9 are executed successively, until respective probability products have been derived relating to each of the reference nodes. Step S11 is then executed, to find the reference node having the highest value of probability product, and that node is then registered as having been traversed by the mobile body.

The above processing, of steps S4 to S11, is successively applied to each of the rows of the smoothed data table, i.e. is applied for each of the successive points along the path of the mobile body at which a measurement operation has been executed.

Fig. 26 is a diagram for describing the basic configuration of each of the probability distribution tables which respectively correspond to the reference nodes as described above. As shown, such a table is formed of a plurality of sections which respectively correspond to the base stations A to D. Each row such as "radio signal strength values received from base station A" refers to a plurality of smoothed radio signal strength values. It will be assumed for example that this probability distribution table is specific to the reference node Nd. In that case, if the smoothed radio signal strength value obtained with respect to base station A at a certain measurement time point has a value indicated as E11, then the probability that the mobile body has traversed reference node Nd at that measurement time point is P11. Similarly, if the smoothed radio signal strength value obtained with respect to base station B has a value indicated as E22, then the probability that the mobile body reached the reference node Nd is indicated as P22.

It can thus be understood that with the map example of Fig. 4, a total of 24 probability distribution tables respectively corresponding to the positions of the reference nodes Na to Nx are prepared beforehand, and stored in the data storage section 19, to be available to the trace section 24b.

Table 6 shown in Fig. 27 is an example of one section of a probability distribution table. This table is specific to reference node Nb, and the section which is shown contains examples of smoothed signal strength values obtained with respect to base station A of Fig. 4.

Table 7 in Fig. 28 shows a partial example of the results (i.e., respective probability products derived for each of the reference nodes) which are obtained by processing one set of smoothed radio signal strength values, that is to say, by processing one row of the smoothed data table of Fig. 2, through execution of steps S4 to S10 in Figs. 25A, 25B. In Table 7, each value such as "probability value with respect to base station A" signifies a probability value derived using a smoothed radio signal strength value which corresponds to a measured value of radio signal strength received from base station A. As shown, the four probability values obtained for reference node Na with respect to the four base stations A, B, C and D are combined by multiplication to obtain a probability product of 0.6134 (after multiplication by 1,000) for example.

A fourth embodiment of the invention will be described in the following, in which the map matching apparatus has a similar configuration to that described for the third embodiment and shown in Fig. 23, but differs with respect to the operation of a trace section 24c. The operation will be described referring first to Fig. 29 which illustrates the basic processing that is executed each time that an radio signal strength measurement operation is executed by the portable terminal. The operation differs from that of the third embodiment only in that with the fourth embodiment, if the smoothed radio signal strength value which is being used to derive a probability value (i.e., the "selected signal strength value" referred to in step S6 of Fig. 25A) is higher than a predetermined threshold value, then a probability is derived by using that smoothed radio signal strength value with the probability density function.

Referring to the map of Fig. 31 for example, this shows respective boundaries 800, 801, 802, 803 within which the above threshold value of radio signal that smoothed radio signal strength value with the probability density function.

Referring to the map of Fig. 31 for example, this shows respective boundaries 800, 801, 802, 803 within which the above threshold value of radio signal strength is exceeded for the case of the base stations A, D, C and B respectively. A probability density function value Pr is calculated as:

$$Pr = 1/\sqrt{2\pi} * Exp(-1/2 * ((x-\mu)/\sigma)^2)$$

In Fig. 29, a step Sf is inserted in which the selected one of the smoothed radio signal strength values is judged to determine whether it is above the threshold value, and if so, the corresponding probability value is calculated using the probability density function in step Sh, while otherwise, the probability distribution table is used to obtain the probability value in the same way as for the preceding embodiment.

Fig. 30A, 30B constitute a detailed flow diagram of the operation of this embodiment. It is assumed here that the threshold value of radio signal strength is 60, in the decision step S7 which is applied to the selected radio signal strength value. If for example steps S8 , S9 are repetitively executed to obtain four radio signal strength of base station A will be obtained by using the probability density function, while each of the other three probability values corresponding to the other three base stations will be obtained from the three probability distribution tables that are respectively specific to these base stations B, C and D.

In the same way as for the third embodiment described above, the product of the set of probability values derived for a reference node from the radio signal strength values of each of the base stations is obtained in step S11 of Fig. 30B, and all of the probability products that have been obtained for one measurement position of the mobile body are judged in step S13, with the reference node having the highest probability being then registered as having been traversed by the mobile body, in step S13. It can thus be understood that the operation of this embodiment is essentially similar to that of the third embodiment, except for selective application of the probability density function as described above.

A fifth embodiment of the invention will be described in the following, referring to Figs. 32 to 38. With this embodiment, and succeeding embodiments, the path along which the mobile body is travelling is estimated as a series of interconnected straight line sections (referred to in the following as "links") which have been traversed, rather than a series of points (the reference nodes, in the preceding embodiments). The junction points between adjacent links will be referred to as reference nodes, as for the preceding embodiments, since the position of each link can be defined by the positions of a corresponding pair of adjacent nodes. With the fifth embodiment, link position data (assumed in the following to be, for each link, the position coordinates of a pair of reference nodes which form the end points of that link) are stored beforehand in a link position data storage section 119 i.e., values of radio signal strength are not measured and stored beforehand for each of the nodes. The links may respectively correspond to specific streets of a street map whose contents are held in the storage section 18, in which case the link position data storage section 119 would have stored therein data specifying the positions of these streets.

The above is illustrated in the map diagram of Fig. 33, in which the lines connecting respective adjacent node pairs constitute the links. For example the line connecting the reference nodes Na, Nb will be designated as link (Na-Nb).

Fig. 32 is a general system block diagram showing the basic configuration of this embodiment. Only the sections of this embodiment which differ from the preceding embodiments will be described in detail in the following. All other sections which correspond to those of preceding embodiments are designated by identical reference numerals to those in the system block diagrams of these embodiments.

With this embodiment, at each measurement time point when an radio signal strength measurement operation is executed by the portable terminal of the mobile body to obtain a new set of radio signal strength data corresponding to each of the base stations A to D, and a succession of sets of smoothed radio signal strength values corresponding to the respective measurement time points are then derived by the smoothing processing section 21, the position detection section 16 in the map matching processing section 314 operates on successive ones of these sets to estimate the (X, Y) coordinates of the positions of the mobile body at the respective measurement time points. This operation of converting each set of measured radio signal strength values to the coordinates of an estimated position of the mobile body at the measurement time point is performed based upon the known position coordinates of each of the base stations and the relative values of radio signal strength respectively corresponding to the base stations. A succession of pairs of (X,Y) coordinates respectively corresponding to the measurement time points is thereby obtained. Smoothing processing of the coordinate data thus obtained is then executed by the coordinate data smoothing section 30, for example by applying similar processing to that described for the smoothing processing section 21, to the sequence of X-coordinate values and to the sequence of Y-coordinate values which are obtained from the position detection section 16. Periodic ones of the (X,Y) coordinate pairs thus obtained are then selected, i.e., corresponding to respective estimated positions of the mobile body at successive time intervals. These periodically selected estimated positions will be referred to in the following as "averaged points", for brevity of description.

The above is illustrated in the map diagrams of Figs. 33, 34. In Fig. 33 the clustered dark points represent the positions of the mobile body corresponding to the respective measurement time points. In this example, the path of the mobile body is assumed to follow the sequence of links (Na-Nb), referred to in the following as "averaged points", for brevity of description.

The above is illustrated in the map diagrams of Figs. 33, 34. In Fig. 33 the clustered dark points represent the positions of the mobile body corresponding to the respective measurement time points. In this example, the path of the mobile body is assumed to follow the sequence of links (Na-Nb), (Nb-Nf), (Nf-Nj), (Nj-Nn), (Nn-Ns), (Ns-Nt), (Nt-Nx). In Fig. 34, the respective centers of the small circles are shown extending successively along that path represent the positions of the averaged points.

The coordinate data of the averaged points are supplied by the position detection section 16 to the link estimation section 23, which then operates on the position data of each successive pair of averaged points to obtain the direction of a vector which extends from the first to the second point of that pair, i.e., converts the sequence of smoothed radio signal strength values to a sequence of vectors. This is illustrated in Fig. 35, which shows an expanded view of the first three links along the path shown in Fig. 34. Here, seven successive averaged points along that path are respectively designated as Pa, Pb, Pc, ..., Pg, calculates the direction of a main vector which is the vector sum of all of the preceding vectors of that set, i.e., from the first up to (N - 1)-th, and the angular difference between the direction of the N-th vector and that main vector. In that way a sequence of angular difference values is obtained, and when a local maximum is detected in that sequence of values, this is interpreted as corresponding to a substantial change in direction of the mobile body, which is judged to indicate a change in the path of the mobile body, from motion along one link to motion along a succeeding. In the example of Fig. 35, this condition would be detected at the transition from the vector (Pc-Pd) to the vector (Pd-Pe).

When the end of the data is reached, i.e., all of the averaged points have been processed in that way, each pair of successively obtained positions of local maximum is successively compared with the position coordinates for each of the links, obtained from the storage section 119, and the link which has the highest degree of position correlation with that pair is assumed to have been traversed by the mobile body. In that way, each of the links that have been traveled over by the mobile body are successively obtained.

The operation of this embodiment is shown in the flow diagram of Fig. 36. In the same way as for the preceding embodiments, a step Sa is performed at successive intervals during the journey of the mobile body, to measure and to store in the radio signal strength data memory 13 a sequence of sets of respective values of radio signal strength received from the base stations A, B, C and D in the map of Fig. 33, and a corresponding sequence of sets of smoothed radio signal strength values is then derived. In step Sb, the position detection section 16 processes all of these sets that have been obtained up to the current time, to obtain position data indicating the respective positions of the mobile body at each of the measurement time points.

In step Sc, respective pairs of (X,Y) coordinates for the succession of "averaged points" are derived by the coordinate data smoothing section 30, by operating on the position data obtained in step Sb.

In step Sd, the coordinates of each pair of adjacent averaged points are used to derive a corresponding vector. In step Se, successive vectors are judged to find the difference between the direction of the vector and that of a main vector which is constituted by an immediately preceding set of vectors, to thereby obtain a sequence of difference values. These are successively judged, to find each averaged point at which there is a local maximum in that sequence of difference values, indicating a substantial change in direction of motion of the mobile body.

In step Sf, the position coordinates of each pair of successive local maximum points are compared with those of each of the links in succession, to find the corresponding values of correlation coefficient. In step Sg, for each of the pairs of successive local maximum points, the link having the highest value of correlation coefficient is registered as being a link which has been traversed by the mobile body.

If the links respectively correspond to specific streets or sections of streets in a street map, then the information thus obtained will directly express the path that is being traveled by the mobile body. Otherwise, the coordinate positions of each of the links in the sequence of links that has been obtained by the above processing can be matched to the contents of a map whose data are stored in the map data storage section 18.

The link probability table of Fig. 37 (in which each link is designated by the pair of reference nodes whose positions define its end points) shows an example of values of correlation coefficient, which might be obtained in step Sg of the flow diagram of Fig. 36 with respect to the path example of Fig. 35, when the pair of local maximums corresponding approximately to the position of link (Nb-Nf) is compared with each of the links, with the link (Nb-Nf) being found to have the highest value of correlation coefficient. A complete table would of course contain entries for all of the links, and respective tables are generated for each of the pairs of successive positions of local maximums, to thereby find each of the links which have been traversed by the mobile body.

The vector table of Fig. 40 contains respective columns corresponding to each of the vectors of the aforementioned vector sequence, and shows values of vector directions and of amounts of difference between each vector and the succeeding vector, for the case of the path example shown in Fig. 35. Each column of the table corresponds to one vector, and shows the angular direction of that vector, the difference between that angle and the direction of the immediately succeeding vector, and a mark assigned to that vector if the angular difference between it and the main vector constitutes a local maximum in the aforementioned sequence of difference values with respect to a main vector. In the example of Fig. 40, corresponding to the vector sequence shown in Fig. 35, a large difference in direction occurs between vector (Pc-Pd) and the main vector that is derived from the sequence of vectors extending from the first vector (located close to node Na) up to vector (Pb-Pc), so that vector (Pc-Pd) is registered as having been traversed by the mobile body.

The same process is then repeated for the succeeding vectors to locate the next local maximum, i.e., the vectors (Pe-Pf) and (Pf-Pg) are combined to obtain a main vector and the direction of vector (Pf-Pg) is compared with that of the main vector, the vectors (Pe-Pf), (Pf-Pg) and (Pg-Ph) are combined to obtain a main vector and the direction of vector (Pg-Ph) is examined, and so on, until a local maximum is detected in the sequence of values of difference from the most recently established main vector direction.

It can thus be understood that with this embodiment, each change of the path of the mobile body from one link to a succeeding link is detected as a substantial change in the estimated direction of motion of the mobile body. The respective positions of these changes are then compared with the positions of all of the links, to find each of the links which have been successively traversed by the mobile body up to the current time.

A sixth embodiment of the invention will be described referring to the flow diagram of Figs. 39A, 39B, 39C and the general system block diagram of Fig. 40. In Fig. 40 the functions of a position detection section 16, and of a smoothing processing section 21 in a map matching processing section 614 are identical to those described for the preceding embodiment, while a link estimation section 23b serves to estimate each of successive links which have been traversed by the mobile body, based on calculations of degrees of correlation between each of the links and estimated position information obtained from the position detection section 16. Specifically, with this embodiment, an algorithm is used repetitively whereby a set of successive averaged points is compared with each of the links to find the link having closest correlation to that set, and each position within the sequence of averaged points corresponding to a change from high correlation with on link to high correlation with a succeeding link is detected based on differences between successively obtained degrees of correlation.

The flow diagram of Figs. 39A, 39B, 39C shows the sequence of operations that are executed with this embodiment each time a new set of radio signal strength values relating to each of the base stations are measured by the portable terminal of the base station and transmitted to the mobile body map matching apparatus. In the first three steps Sa to Sc, all of the measured radio signal strength data acquired up to that point are processed in the same manner as described for the preceding embodiment to obtain a succession of pairs of (X,Y) coordinates expressing respective averaged points, as shown in Fig. 34, within a range extending from the start of acquiring the sets of radio signal strength values up to the most recent measurement time point.

At the first execution of step Se, respective values of correlation coefficient are derived for the first two points in the sequence of averaged points, in relation to each of the links in succession. The link for which the highest value of correlation coefficient (i.e., the value that is closest to 1) is obtained is registered temporarily.

Step Sf is then executed, in which the correlation coefficient is obtained for the set of first three averaged points in relationship to the link that was registered in step Se.

In step Sg, the square (or the absolute value) of the difference between the respective values of correlation coefficient obtained in the preceding executions of steps Se, Sf is calculated and stored as part of sequence of such values, and a decision is then made as to whether a local maximum has occurred in that sequence of squared difference values. Steps Se to Sg are thereafter repetitively executed for successive sets of the sequence of averaged points until a local maximum is detected or until all of the averaged points have been processed (step Si).

Referring to Fig. 35, if for example the link (Na-Nb) would be registered in step Se, when the set of averaged points extending up to point Pc is processed in that step. The respective values of correlation coefficient derived for the sets of averaged points extending up to Pa, to Pb, to Pc, etc., of Fig. 35 might be as shown in the table of Fig. 41, in which the top row designates the respective final points of these sets of averaged points. In that example, the difference between the squares of the correlation coefficients obtained for the sets ending in points Pd and in point Pc respectively, in step Sg, would be detected as a local maximum.

In that case, the link (Na-Nb) would be finally registered as the first link traversed by the mobile body, and operation proceeds to step Sj. Designating the final point of the set of points corresponding to the local maximum (i.e., Pc) as the K-th point, processing to detect the next link and the next local maximum is then performed (in steps Sl to Sn) starting from that K-th point, in the same manner as described above. In that way, each of the links which have been traversed by the mobile body up to the current point and the sequence in which they have been traversed are obtained, such as the series of links (Na-Nb), (Nb-Nf), (Nf-Nj),,(Nt-Nx) in the example of Figs. 34, 35.

The sequence of links which have been finally registered, when processing of all of the averaged points has been completed, represents the path which has been traveled by the mobile body up to the current point. In the same way as described for the preceding embodiment, the respective links may directly correspond to streets of a map, or may simply be lines each of which connects two points (nodes) whose positions are defined with respect to the map whose contents are held in the storage section 18.

A seventh embodiment of the invention will be described in the following, referring to the flow diagram of Figs. 42A to 42C, and to the tables of Figs. 43, 44 and the general system block diagram of Fig. 40. In Fig. 40, the functions of the smoothing processing section 21 and position detection section 16 of a map matching processing section 614 are identical to those described for the preceding embodiment. However with this embodiment, the link estimation section 23c utilizes a different method to estimate each of successive links which have been traversed by the mobile body. Any arbitrary arrangement of points in a 2-dimensional space can be approximately represented by a multiple regression equation having an appropriate number of coefficients and appropriate respective values for the coefficients. It will be assumed that each of the sets of M averaged points which are successively selected from the complete sequence of averaged points for the purpose of finding a corresponding link, as described for the preceding embodiment, is represented in the X,Y plane of the map shown in Fig. 33 by a multiple regression equation of the form (p'x + q'y + r' = 0), and that each of the links is similarly expressed by an equation (px + qy + r = 0), with the respective sets of coefficients for the links being stored beforehand in the link position data storage section 119. For example, the link (Na-Nb) will be assumed to be expressed by the equation (0.2x + 1 = 0), i.e. with the values 0.2, 0, 1 for the coefficients p, q, r respectively. In order to compare the degree of matching between a set of averaged points and a link, a quantity referred to as "coefficient distance" is calculated, which is obtained as

$$((r - r')^2 + (p - p')^2 + (q - q')^2)^{1/2}$$

The smaller the coefficient distance between a set of averaged points and a link, the greater is the degree to which they match.

With this embodiment, local maximums which are interpreted as indicating a change of the path of the mobile body from one link to a succeeding link are derived based on successive values of coefficient distance between sets of averaged points and the links, as described in the following.

The operation is shown in the flow diagram of Figs. 42A to 42C, in which steps Sa to Sc are identical to those of the flow diagram of Figs. 39A to 39C for the preceding embodiment, so that smoothed coordinate data are used to obtain the coordinates of a series of estimated positions, i.e., the averaged points, along the path of the mobile body. A step Se is then executed whereby, in a first execution, the aforementioned multiple regression equation coefficients are derived for an equation expressing the set of points formed of the first and second averaged points, and that set of coefficients is then used to obtain respective values of coefficient distance between that first set of averaged points and each of the links, i.e., with the respective sets of coefficients for the links being obtained from the link position data storage section 119. The link for which the smallest coefficient distance is obtained is then provisionally registered, and in step Sf, the coefficient distance between the first three averaged points and the link which was registered in step Se is obtained. In step Sg, the difference between the squares of the values of coefficient distance obtained in steps Se, Sf is obtained and stored as the first of a sequence of such difference values, and is judged to determine whether a local maximum in that sequence has occurred.

Thereafter, steps Se, Sf, Sg are repetitively executed until a local maximum is detected. The link which was registered in the latest execution of step Se is then finally registered as the first link traversed by the mobile body, and operation proceeds to step Sj.

Thereafter, in the same way as described for the preceding embodiment, the sequence of operations which commenced from the first averaged point is recommenced from the position (within the entire sequence of averaged points) of the averaged point corresponding to the most recently detected local maximum, to detect the next link along the path of the mobile body, and the next local maximum, by repetitions of steps Sl to Sn. Operation then returns to step Sj, and the above processing is successively repeated to find each of the successive links which have been traversed by the mobile body.

Fig. 43 is a table showing examples of specific values of coefficient distance which might be obtained for respective ones of the links with respect to the set of averaged points extending from the journey starting point (assumed to be near node Na) up to point Pa, in the example of Fig. 35. In this case, the smallest value of coefficient distance is obtained for the link (Na-Nb).

Fig. 44 is a table showing an example of specific values of multiple regression equation coefficients which might be derived for the first averaged point (located close to node Na), for the set of points which ends in Pb, for the set which ends in Pc, and so on. The values of coefficient distance that are shown have been derived with respect to the link (Na-Nb), using the equation for that link described above. Assuming that a local maximum is detected for the set of averaged points which end in point Pb, as indicated by the "1" mark in table 44, link (Na-Nb) is finally registered as being the first link which was traversed by the mobile body. The subsequent series of average points Pc, Pd, Pe, Pf, etc.are then similarly used to find the next link that is to be registered, (Nb-Nf).

It can thus be understood that with this embodiment, as for the preceding embodiment, successive links can be determined which have been traversed by the mobile body along its path.

An eighth embodiment of the invention will be described in the following, referring to the flow diagram of Figs. 45A to 45C, and to the tables of Figs. 43, 44 and general system block diagram of Fig. 40. The function of this embodiment is to examine the sequence of averaged points (i.e., successive estimated positions of the mobile body which are derived based on the entire set of smoothed radio signal strength values obtained up to the current time point, as described for the preceding embodiments) to find, for successive portions of that sequence of averaged points, specific links or specific groups of links which are oriented in approximately the same direction as that portion of the sequence of averaged points. It can thus be understood that this embodiment is intended to be used in conjunction with one or more of the preceding embodiments which estimate specific links that have been traversed by the mobile body, i.e., with the results obtained from the PCA analysis being used to further increase the reliability of estimating the specific links which have been traversed by the mobile body.

The configuration of this embodiment is similar to that described for the preceding two embodiments, and the operation differs from the preceding embodiment only with respect to the processing executed by the link estimation section, designated as 23d in Fig. 40. With the eighth embodiment, principal component analysis (PCA) is applied to the (X, Y) position information for each of the links (i.e., considering each link as a set of points which have varying positions within a 2-dimensional space) to obtain values of a corresponding set of principal components. It will be assumed that each set consists of respective values for the first (i.e., first-order), second, and third principal components. Principal component analysis is similarly applied to each of successive sets of the averaged points, with these being sequentially extracted from the entire sequence of averaged points that have been obtained up to the current time, in a similar manner to that described for the preceding embodiment. Designating the first, second and third principal components obtained for such a set of averaged points as k, l and m respectively, and designating the first, second and third principal components obtained for a link as k', l' and m' respectively, a value of "principal component distance" between the set of averaged points and a link by using these values in the same manner as described hereinabove for calculation of coefficient distance with the preceding embodiment using to the multiple regression equation coefficients p, r, q and p', q', r'. The smaller the "principal component distance" value obtained, the closer will be the direction expressed by the set of averaged points to the direction of the link.

As can be understood from the flow diagram of this embodiment shown in Figs. 45A to 45C, the operating sequence is similar that of the preceding embodiment, a first position of local maximum within a sequence of differences between successively obtained principal component distance values being detected in a step Sg, and the link for which the smallest distance value was obtained prior to that local maximum position being designated as the link which is closest in direction to the set of averaged points which precede that first local maximum position. Similarly, in each of successive executions of step Sn, respective local maximums are detected, and in each case the link for which the smallest distance value was obtained prior to a local maximum in the sequence of the difference values is designated as the link which is closest in direction to the set of averaged points which precede that local maximum.

A ninth embodiment will be described referring to the general system block diagram of Fig. 46 and the flow diagram of Fig. 48. Those sections of this embodiment which correspond to sections of preceding embodiments are designated by identical reference numerals, and further description of these will be omitted. As described hereinabove, it is possible to estimate the direction of motion of the mobile body which has occurred between two successive measurement time points at which respective sets of radio signal strength values are measured, by calculating a vector by using two successively obtained sets of smoothed radio signal strength difference values, i.e., with the values in each set respectively corresponding to the base stations. This is done by using each difference between the smoothed radio signal strength value obtained in relation to a base station at one measurement time point and the value which is obtained in relation to that base station at a subsequent measurement time point.

With this embodiment, a direction estimation section 22 operates on each pair of sets of smoothed radio signal strength values corresponding to two successive measurement time points, to derive such a corresponding vector, and thereby obtain a complete sequence of vectors based on all of the smoothed radio signal strength values that have been obtained up to the current point in time. A local maximum detection section 31 detects each change in the direction of that sequence of vectors, in a similar manner to that described hereinabove for the fifth embodiment referring to the example of Fig. 35, and supplies each set of smoothed radio signal strength values (i.e., a set of values respectively relating to each of the base stations, as described for the first embodiment) corresponding to such a change in direction, to the position detection section 16. The position detection section 16 operates on each set of radio signal strength values supplied thereto, to obtain the coordinates of a corresponding estimated position. The position data thus obtained from all of the sets of radio signal strength values that have been acquired up to the current time point, and expressing respective estimated positions of the mobile body at each time of a substantial change in direction of motion (assumed to signify a change from one link to another which is oriented at a different angle) are supplied to the link estimation section 23e.

The link estimation section 23e compares each of these positions of change in direction with the positions of each of the reference nodes, and finds those reference nodes which are respectively closest to the positions of change in direction. The successive pairs of nodes which are thereby obtained define respective links that have been traversed by the mobile body up to the current time.

This is illustrated in the example of part of a map which is shown in Fig. 48. Here, nodes Nb, Nf, Nj and Nn have been found to respectively be closest to successively obtained positions of change in direction of the sequence of vectors. It is assumed that the acquisition of sets of radio signal strength values has commenced when the mobile body was located near reference node Na. In this case, it is found that the links (Nb-Nf), (Nf-Nj) and (Nj-Nn) have been successively traversed by the mobile body, up to the current time.

The overall operation is shown in the flow diagram of Fig. 47, in which the series of steps Sa to Sf is executed at each of periodically occurring measurement time points. In step Sa, the newly measured set of radio signal strength values is added to the succession of sets of values that have been obtained up to the current time, which is then processed to obtain a smoothed sequence of sets of radio signal strength values, as described for the preceding embodiments. In step Sb, the aforementioned sequence of vectors is derived. Each vector is obtained from the two sets of smoothed radio signal strength values measured at two successive time points, i.e., corresponding to two successive positions along the path of the mobile body such as the pair of positions P and Q indicated in Fig. 20 for which the vector V1 is derived.

In step Sc, starting from the first vector of the sequence, successive vectors are combined to obtain a composite vector whose direction represents the direction of motion of the mobile body, for example along the link (Na-Nb) in the example shown in Fig. 48. Before each new vector is combined with the preceding ones, its direction is compared with the direction of the composite vector, to obtain the difference between its direction and that of the composite vector, so that a sequence of difference values is obtained. When a local maximum in that sequence of difference values is detected, such as when the mobile body changes in direction from motion along the link (Na-Nb) to motion from node Nb towards node Nf in Fig. 25, then the set of smoothed radio signal strength values corresponding to that local maximum is registered, and the process of generating a composite vector and obtaining successive difference values to detect the next local maximum is commenced, starting from the set of smoothed radio signal strength values corresponding to the first local maximum. In that way, respective sets of smoothed radio signal strength values, respectively corresponding to positions of change in direction of the mobile body, are extracted from the entire sequence of sets of smoothed radio signal strength values that have been obtained up to the current time point.

In step Sd, each set of radio signal strength values corresponding to a local maximum is converted to a corresponding pair of (X,Y) coordinates expressing the estimated position of the mobile body at the corresponding measurement time point, i.e. a point at which a change in direction of motion of the mobile body occurred.

The position coordinates thus obtained are then compared with those of each of the reference nodes, to find the reference node which is closest to the position at which the change in direction of the sequence of vectors occurred. Each reference node which is thus found is registered, for example in a node traversal table as shown in Fig. 18 for the first embodiment (step Se).

Based upon the nodes which are thus registered, and the sequence in which they have been registered, each link which extends between a pair of successively registered ones of these nodes is registered as a link which has been traversed by the mobile body (step Sf).

It will be understood that in this case, only those links which are traversed subsequent to the first position of a local maximum of change in direction of the mobile body (and the order in which they have been traversed) can be detected, i.e. the succession of links (Nb-Nf), Nf-Nj), Nj-Nn) in the example of Fig. 48.

It would of course be possible to modify the operation described above such that when two or more links which are oriented along substantially a common straight line are found to extend between such a pair of successively registered nodes, then that plurality of links are registered as having been traversed by the mobile body. This might occur for the set of links (Na-Nb), (Nb-Nc), (Nc-Nd) in the map example of Fig. 33, for example.

Although the various embodiments of the present invention have been described respectively separately in the above for simplicity of description, it should be understood that it will generally be preferable to combine the respective functions of a plurality of these embodiments into a single mobile body map matching apparatus, to obtain an improved reliability of locating the current position of the mobile body. Specifically, as illustrated in the general system block diagram of Fig. 49, a single mobile body map matching apparatus can be configured which contains all of the sections described hereinabove for the preceding embodiments, so that all of the functions of the various embodiments described above can be successively activated when the position of the mobile body is to be estimated, with the results obtained from the respective functions being combined to obtain an estimated current position of the mobile body. Assuming that the links are respective straight lines, the node position information which is held in the node position and signal strength data storage section 19 will also constitute the link position information.

Furthermore, the invention could be advantageously used in conjunction with a device such as a pedometer which can be used to estimate a distance that has been walked by a pedestrian, from some specific position on the map. That is to say, at a time point when the map displayed by the portable terminal of that pedestrian indicates that a certain node (or end of a certain link) has been reached along the path traveled by the pedestrian, and also indicates the current direction of motion of the pedestrian, the pedestrian can thereafter use such information and the elapsed distance estimated by the pedometer to accurately estimate his or her current position, up to the point at which the next node (e.g., street junction) is indicated as having been reached.

It can thus be understood from the above description that the present invention can overcome the problem of low accuracy which arises when the position of a mobile body is estimated based upon a combination of levels of signal strength of radio signals received from a plurality of base stations. This is basically achieved by applying smoothing processing to an entire series of sets of received signal strength values which have been obtained up to a current time point (i.e., with the values constituting each set being obtained for respective ones of the base stations) to generate a corresponding sequence of sets of smoothed values, and to then operate on these sets of values to estimate the path which has been traversed by the mobile body up to the current time, or to estimate the most recent position to have been reached by the mobile body up to the current time, in relation to positions on a map.

**Claims**

1. A mobile body map matching apparatus for use within a mobile communication system having a plurality of base stations (11) to estimate the current location of a mobile body (12) which transports a portable terminal, said portable terminal being configured for wireless communication with arbitrarily selected ones of said base stations; wherein said portable terminal comprises means (28) for obtaining respective measured values of radio signal strength of signals received from each of said base stations at successive measurement time points, said measured radio signal strength values being transmitted to said mobile body map matching apparatus via said base stations, and wherein said mobile body map matching apparatus comprises:

   radio signal strength data memory means (13) for storing said sets of said measured radio signal strength values, with the values constituting each of said sets respectively identified as relating to specific ones of said base stations;
   storage means (18) having stored therein map data representing the contents of a map;
   smoothing processing means (21) for applying smoothing processing to an entire sequence of said sets of measured radio signal strength values which have been successively acquired and stored in said radio signal strength data memory means (13) up to a current time point, to thereby obtaining a sequence of sets of smoothed radio signal strength values, with said sets respectively corresponding to successive ones of said measurement time points and the values constituting each set relating to respective ones of said base stations; and
   means (24a, 24b) for operating on said smoothed radio signal strength values in conjunction with said map data, to derive map position information indicative of a current position of said mobile body in relation to said map contents.

2. The mobile body map matching apparatus according to claim 1, comprising direction estimation means (22) for operating on respective radio signal strength difference values relating to said base stations to estimate a current direction of motion of said mobile body, wherein each of said difference values is obtained as a difference between a smoothed radio signal strength value corresponding to a current position of said mobile body and a smoothed radio signal strength value corresponding to a preceding position of said mobile body.

3. The mobile body map matching apparatus according to claim 2, wherein said direction estimation means comprises means for operating on a first one and on a second one of said sets of smoothed radio signal strength values, where said first set corresponds to an estimated previous position of said mobile body at a preceding measurement time point and said second set corresponds to a most recent measurement time point, to derive for each of said base stations a difference value between the smoothed radio signal strength value corresponding to said base station within said first set and the smoothed radio signal strength value corresponding to said base station within said second set and thereby obtain respective ones of said difference values for each of said base stations;
   expressing each of said difference values as the length of a vector which extends from said estimated previous position along a line connecting said estimated previous position to the base station corresponding to said each difference value; and
   obtaining the vector sum of said vectors, to obtain a composite vector having a direction which constitutes an estimated current direction of motion of said mobile body in relation to said estimated previous position.

4. The mobile body map matching apparatus according to any one of claims 1 to 3, comprising storage means (19) having stored therein combined position and radio signal strength data which specify, for each of a plurality of reference nodes located at respective positions on said map, position information indicating a position of said reference node in relation to said map and a set of pre-measured values of received radio signal strength respectively relating to each of said base stations, said pre-measured values having been measured beforehand at the location of said each reference node, and wherein said location means comprises trace means (24a) for comparing said successive sets of smoothed radio signal strength values to said pre-measured radio signal strength values for thereby detecting specific ones of said reference nodes which have been successively traversed by said mobile body, and for relating the position information for said traversed reference nodes to said map data for thereby obtaining said map position information.

5. The mobile body map matching apparatus according to claim 4, wherein each of said pre-measured values is obtained as an average of a plurality of measured values, wherein said apparatus comprises storage means (19) having stored therein data expressing respective ranges of deviation for said pre-measured radio signal strength values, and wherein said trace means (24a) comprises means for judging said sequence of sets of smoothed radio signal strength values to find each set therein which is within a range of deviation of a set of pre-measured radio signal strength values corresponding to a reference node, and for registering each such reference node as being a point which has been traversed by said mobile body.

6. The mobile body map matching apparatus according to claim 5, wherein each of said deviation ranges is expressed by a standard deviation value, and wherein said trace means (24a) comprises means for:

operating on each set of said entire sequence of sets of smoothed radio signal strength values in conjunction with said pre-measured radio signal strength values and standard deviation values, to derive a plurality of sets of deviation values, with each of said sets of deviation values corresponding to a specific one of said reference nodes and the values therein corresponding to respective ones of said base stations,
judging each of said sets of deviation values to determine those sets of deviation values for which all values are within a predetermined range, and
for each of successive groups of N successive sets from said sequence of sets of smoothed radio signal strength values, where N is a fixed integer, determine a reference node for which there is a majority of occurrences of a condition that a corresponding set of deviation values is within said predetermined range, and register said reference node as being a reference node which has been traversed by said mobile body.

7. The mobile body map matching apparatus according to claim 4, comprising data storage means (19) having stored therein data constituting a plurality of probability distribution tables respectively corresponding to said reference nodes, each of said probability distribution tables containing a plurality of sections respectively corresponding to said base stations, each of said sections expressing a plurality of probability values which have been derived beforehand based upon said pre-measured values of radio signal strength and respectively relate to corresponding smoothed radio signal strength values, and wherein said trace means (24b) comprises means for successively selecting each set from said sequence of sets of smoothed radio signal strength values and processing said selected set, by:

for each of said probability distribution tables, comparing each of the smoothed radio, signal strength values of said selected set to each of the radio signal strength values within the one of said table sections which corresponds to said smoothed radio signal strength value, for thereby finding a probability value which is matched to said smoothed radio signal strength value, and thereby obtaining, in relation to the reference node corresponding to said table, a set of probability values respectively corresponding to said base stations; and
based on all of said sets of probability values which are thereby obtained for all of said reference nodes, judging one of said reference nodes to be located most closely to a position of said mobile body corresponding to said selected set of smoothed radio signal strength values, and registering said closest reference node as having been traversed by said mobile body.

8. The mobile body map matching apparatus according to claim 7, wherein said trace means (24b) comprises means for performing said judgement of a reference node by operating on each of said sets of probability values respectively relating to said reference nodes to calculate the product of the values within said each set, and judging said most closely located reference node to be a reference node corresponding to a set of probability values for which the highest value of said product is obtained.

9. The mobile body map matching apparatus according to claim 7, wherein said trace means (24b) comprises means for:

judging that a smoothed radio signal strength value relating to a specific base station, within said selected set of smoothed radio signal strength values, exceeds a predetermined threshold level;
calculating respective probability values corresponding to said reference nodes by utilizing said smoothed radio signal strength value which exceeds the threshold level as the value of a variable within a predetermined equation, and for utilizing said calculated probability values in said matching operation, in place of said probability values of said probability distribution table.

10. The mobile body map matching apparatus according to claim 1, further comprising:

position detection means (16) for operating on said sequence of sets of smoothed radio signal strength values obtained up to a current time point, in conjunction with said position information for said base stations, to derive position coordinate data expressing respective estimated positions corresponding to said measurement time points;

coordinate data smoothing means (30) for applying smoothing processing to said position coordinate data to derive smoothed position coordinate data expressing respective successive estimated positions of said mobile body; and

storage means (119) having stored therein position information expressing the respective locations of a plurality of links in relation to said map data, said links being a plurality of interconnected line segments;

and wherein said location means comprises link estimation means (23a, 23b, 23c, 23d) for operating on said smoothed position coordinate data in conjunction with said position information for said links, to determine respective ones of said links which have been successively traversed by said mobile body, and for relating the position information for said traversed links to said map data to thereby derive said map position information.

11. The mobile body map matching apparatus according to claim 10, wherein said link estimation means (23a) comprises means for:

deriving respective vectors connecting successive pairs of estimated positions expressed by said smoothed position coordinate data, to thereby obtain a continuous sequence of vectors;

determining respective differences in direction between successive pairs of said vectors, and finding each of said estimated positions which corresponds to a position of a local maximum amount of said differences;

determining, for each of respective mutually adjacent pairs of said local maximum positions, a link which has a maximum degree of correlation with said pair of local maximum positions, and

registering each of the links thus determined as having maximum correlation, as one of a succession of links which have been traversed by said mobile body.

12. The mobile body map matching apparatus according to claim 10, wherein said link estimation means (23b) comprises means for comparing each of respective groups of successive ones of said estimated position expressed by the smoothed position coordinate data with all of said links, to find a link having maximum position correlation with said each group, and for registering each link thus determined as a link which has been traversed by said mobile body.

13. The mobile body map matching apparatus according to claim 12, wherein said link estimation means (23b) comprises means for, beginning from a first one of said estimated positions expressed by said smoothed position coordinate data, repetitively executing a series of operations for

(a) determining one of said links as having a maximum value of correlation coefficient with respect to a first group of N of said estimated positions, where N is an integer which is successively incremented in said operation repetitions, and temporarily registering said link,

(b) determining a correlation coefficient for a first group of (N + 1) of said estimated positions with respect to said temporarily registered link,

(c) obtaining the difference between said respectively obtained values of correlation coefficient, judging whether said difference constitutes a first local maximum of a sequence of said differences, and when said first local maximum is detected, finally registering said temporarily registered link as having been traversed by said mobile body,

and thereafter successively repeating said series of operations (a), (b), (c) to determine subsequent ones of said local maximums and traversed links, with each repetition starting from an estimated position, expressed by said smoothed position coordinate data, which corresponds to one of said local maximums.

14. The mobile body map matching apparatus according to claim 10, further comprising storage means (119) having stored therein a plurality of sets of multiple regression equation coefficients, with said sets respectively corresponding to said links, wherein said link estimation means (23c) comprises means for determining an appropriate set of multiple regression equation coefficients for each of groups of successive ones of said estimated positions expressed by the smoothed position coordinate data, comparing the set of coefficients of each of said groups with all of said sets of coefficients of said links, to determine a link which is most closely matched to said group, and registering each link thus found to be most closely matched, as a link which has been traversed by said mobile body

15. The mobile body map matching apparatus according to claim 14, wherein said link estimation means (23c) comprises means for, beginning from a first one of said estimated positions expressed by said smoothed position coordinate data, repetitively executing a series of operations for

(a) comparing the respective sets of multiple regression equation coefficients of each of said links with a set of multiple regression equation coefficients derived for a first group of N of said estimated positions to thereby determine a link having a smallest amount of coefficient distance with respect to said first group, where N is an integer which is successively incremented in said operation repetitions, and temporarily registering said link,

(b) comparing a set of multiple regression equation coefficients derived for a first group of (N + 1) of said estimated positions with the set of said coefficients corresponding to said temporarily registered link, to obtain an amount of coefficient distance between said group of (N + 1) positions and said link,

(c) obtaining the difference between the distance values obtained with respect to said temporarily registered link, judging whether said difference constitutes a first local maximum of a sequence of said differences, and when said first local maximum is detected, finally registering said temporarily registered link as having been traversed by said mobile body, and thereafter successively repeating said series of operations (a), (b), (c) to determine subsequent ones of said local maximums and traversed links, with each repetition starting from an estimated position, expressed by said smoothed position coordinate data, which corresponds to one of said local maximums.

16. The mobile body map matching apparatus according to claim 10, further comprising storage means (119) having stored therein a plurality of sets of principal component equation coefficients, with said sets respectively corresponding to said links, wherein said link estimation means (23d) comprises means for determining an appropriate set of principal component equation coefficients for each of groups of successive ones of said estimated positions expressed by the smoothed position coordinate data, comparing the set of coefficients of each of said groups with all of said sets of coefficients of said links, to determine a link which is most closely matched to said group, and registering each link thus found to be most closely matched, as a link which has been traversed by said mobile body

17. The mobile body map matching apparatus according to claim 16, wherein said link estimation means (23d) comprises means for, beginning from a first one of said estimated positions expressed by said smoothed position coordinate data, repetitively executing a series of operations for

(a) comparing the respective sets of principal component equation coefficients of each of said links with a set of principal component equation coefficients derived for a first group of N of said estimated positions to thereby determine a link having a smallest amount of coefficient distance with respect to said first group, where N is an integer which is successively incremented in said operation repetitions, and temporarily registering said link,

(b) comparing a set of principal component equation coefficients derived for a first group of (N + 1) of said estimated positions with the set of said coefficients corresponding to said temporarily registered link, to obtain an amount of coefficient distance between said group of (N + 1) positions and said link,

(c) obtaining the difference between the distance values obtained with respect to said temporarily registered link, judging whether said difference constitutes a first local maximum of a sequence of said differences, and when said first local maximum is detected, finally registering said temporarily registered link as having been traversed by said mobile body,

and thereafter successively repeating said series of operations (a), (b), (c) to determine subsequent ones of said local maximums and traversed links, with each repetition starting from an estimated position, expressed by said smoothed position coordinate data, which corresponds to one of said local maximums.

18. The mobile body map matching apparatus according to claim 10, comprising:

direction estimation means (22) for deriving respective vectors connecting successive pairs of sets of smoothed radio signal strength values from said sequence of sets of smoothed radio signal strength values;

means (310 for determining respective differences in direction between each of said vectors and a preceding series of vectors which extend from an initial vector of said vector sequence to thereby obtain a sequence of difference values, detecting a first local maximum of said sequence of difference values and registering one of said sets of smoothed radio signal strength values which corresponds to said first local maximum, and thereafter deriving successive ones of said sequences of difference values with said sequences respectively extending from successive local maximum positions within said sequence of vectors;

means (16) for converting each of said sets of smoothed radio signal strength values corresponding to said local maximums to the coordinates of respective estimated positions on said map; and

means (23e) for comparing each of said positions corresponding to the local maximums to said position information for said links, to determine respective end points of links which are located closest to said positions of the local maximums, and for registering each of the links having the end points thereof found to be located closest to respective ones of said position corresponding to the local maximums, as links which have been traversed by said mobile body.

**Patentansprüche**

1. Mobilkörperkartenabstimmvorrichtung zur Verwendung in einem Mobilkommunikationssystem mit mehreren Basisstationen (11), um den momentanen Ort eines mobilen Körpers (12) abzuschätzen, der ein tragbares Endgerät transportiert, wobei das tragbare Endgerät für eine Drahtloskommunikation mit beliebig ausgewählten der Basisstationen ausgestaltet ist;
   wobei das tragbare Endgerät ein Mittel (28) zum Erhalten jeweiliger gemessener Werte einer Funksignalstärke von an aufeinander folgenden Messzeitpunkten von jeder der Basisstationen empfangenen Signalen umfasst, wobei die gemessenen Funksignalstärkewerte über die Basisstationen an die Mobilkörperkartenabstimmvorrichtung übertragen werden, und wobei die Mobilkörperkartenabstimmvorrichtung umfasst:

   ein Funksignalstärke-Datenspeichermittel (13) zum Speichern der Sätze der gemessenen Funksignalstärkewerte, wobei die Werte jeden der jeweils als in Bezug zu spezifischen der Basisstationen stehend identifizierten Sätze bilden;
   ein Speichermittel (18) mit darin gespeicherten Kartendaten, die die Inhalte einer Karte darstellen;
   ein Glättungsverarbeitungsmittel (21) zum Anwenden einer Glättungsverarbeitung auf eine gesamte Folge der Sätze von gemessenen Funksignalstärkewerten, die bis zu einem momentanen Zeitpunkt aufeinander folgend erfasst und in dem Funksignalstärke-Datenspeichermittel (13) gespeichert wurden, um auf diese Weise eine Folge von Sätzen von geglätteten Funksignalstärkewerten zu erhalten, wobei die Sätze jeweils aufeinander folgenden der Messzeitpunkte entsprechen und die Werte jeden Satz bilden, der mit jeweiligen der Basisstationen in Beziehung steht; und
   ein Mittel (24a, 24b) zum Bearbeiten der geglätteten Funksignalstärkewerte in Verbindung mit den Kartendaten, um Kartenpositionsinformationen abzuleiten, die eine momentane Position des mobilen Körpers in Bezug auf die Karteninhalte angeben.

2. Mobilkörperkartenabstimmvorrichtung nach Anspruch 1, umfassend ein Richtungsabschätzmittel (22) zum Bearbeiten jeweiliger Funksignalstärkedifferenzwerte, die mit den Basisstationen in Beziehung stehen, um eine momentane Bewegungsrichtung des mobilen Körpers abzuschätzen, wobei alle Differenzwerte als eine Differenz zwischen einem geglätteten Funksignalstärkewert, der einer momentanen Position des mobilen Körpers entspricht, und einem geglätteten Funksignalstärkewert, der einer vorangehenden Position des mobilen Körpers entspricht, erhalten werden.

3. Mobilkörperkartenabstimmvorrichtung nach Anspruch 2, wobei das Richtungsabschätzmittel ein Mittel zum Bearbeiten eines ersten und eines zweiten der Sätze von geglätteten Funksignalstärkewerten umfasst, wobei der erste Satz einer abgeschätzten vorherigen Position des mobilen Körpers zu einem vorangehenden Messzeitpunkt entspricht und der zweite Satz einem jüngsten Messzeitpunkt entspricht, um für jede der Basisstationen einen Differenzwert zwischen dem geglätteten Funksignalstärkewert entsprechend der Basisstation in dem ersten Satz und dem geglätteten Funksignalstärkewert entsprechend der Basisstation in dem zweiten Satz abzuleiten und auf diese Weise jeweilige der Differenzwerte für jede der Basisstationen zu erhalten;
   wobei jeder der Differenzwerte als die Länge eines Vektors ausgedrückt ist, der sich von der abgeschätzten vorherigen Position entlang einer Linie erstreckt, welche die abgeschätzte vorherige Position mit der Basisstation verbindet, die dem jeweiligen Differenzwert entspricht; und
   die Vektorsumme der Vektoren erhalten wird, um einen zusammengesetzten Vektor mit einer Richtung zu erhalten, die eine abgeschätzte momentane Bewegungsrichtung des mobilen Körpers in Bezug auf die abgeschätzte vorherige Position bildet.

4. Mobilkörperkartenabstimmvorrichtung nach einem der Ansprüche 1 bis 3, umfassend ein Speichermittel (19) mit darin gespeicherten kombinierten Positions- und Funksignalstärkedaten, die für jeden einer Mehrzahl von Referenzknoten, die an jeweiligen Positionen auf der Karte angeordnet sind, Positionsinformationen, die eine Position des Referenzknotens in Bezug auf die Karte angeben, und einen Satz von vorgemessenen Werten einer empfangenen Funksignalstärke spezifizieren, die jeweils mit jeder der Basisstationen in Beziehung stehen,
   wobei die vorgemessenen Werte zuvor an dem Ort des jeweiligen Referenzknotens gemessen wurden und wobei das Ortsmittel ein Verfolgungsmittel (24a) zum Vergleichen der aufeinander folgenden Sätze von geglätteten Funksignalstärkewerten mit den vorgemessenen Funksignalstärkewerten umfasst, um auf diese Weise spezifische der Referenzknoten zu detektieren, die aufeinander folgend von dem mobilen Körper durchlaufen wurden, und um die Positionsinformationen für die durchlaufenden Referenzknoten mit den Kartendaten in Beziehung zu bringen, um auf diese Weise die Kartenpositionsinformationen zu erhalten.

5. Mobilkörperkartenabstimmvorrichtung nach Anspruch 4, wobei jeder der vorgemessenen Werte als ein Mittel mehrerer gemessener Werte erhalten wird, wobei die Vorrichtung ein Speichermittel (19) mit darin gespeicherten Daten umfasst, die jeweilige Abweichungsbereiche für die vorgemessenen Funksignalstärkewerte ausdrücken, und wobei das Verfolgungsmittel (24a) ein Mittel zum Beurteilen der Folge von Sätzen von geglätteten Funksignalstärkewerten umfasst, um darin jeden Satz zu finden, der innerhalb eines Abweichungsbereichs eines Satzes von vorgemessenen Funksignalstärkewerten liegt, die einem Referenzknoten entsprechen, und um jeden solchen Referenzknoten als einen Punkt zu registrieren, der von dem mobilen Körper durchlaufen wurde.

6. Mobilkörperkartenabstimmvorrichtung nach Anspruch 5, wobei jeder der Abweichungsbereiche durch einen Standardabweichungswert ausgedrückt ist und wobei das Verfolgungsmittel (24a) ein Mittel umfasst, um jeden Satz der gesamten Folge von Sätzen von geglätteten Funksignalstärkewerten in Verbindung mit den vorgemessenen Funksignalstärkewerten und Standardabweichungswerten zu bearbeiten, um mehrere Sätze von Abweichungswerten abzuleiten, wobei jeder der Sätze von Abweichungswerten einem spezifischen der Referenzknoten entspricht, und die Werte darin jeweiligen der Basisstationen entsprechen,
jeden der Sätze von Abweichungswerten zu beurteilen, um jene Sätze von Abweichungswerten zu ermitteln, für die alle Werte innerhalb eines vorbestimmten Bereichs liegen, und
für jede aufeinander folgender Gruppen von N aufeinander folgenden Sätzen aus der Folge von Sätzen von geglätteten Funksignalstärkewerten, wobei N eine feste ganze Zahl ist, einen Referenzknoten zu ermitteln, für den es eine Mehrheit von Vorkommnissen eines Zustands gibt, dass ein entsprechender Satz von Abweichungswerten innerhalb des vorbestimmten Bereichs liegt, und den Referenzknoten als einen Referenzknoten zu registrieren, der von dem mobilen Körper durchlaufen wurde.

7. Mobilkörperkartenabstimmvorrichtung nach Anspruch 4, umfassend ein Datenspeichermittel (19) mit darin gespeicherten Daten, die mehrere Wahrscheinlichkeitsverteilungstabellen bilden, die jeweils den Referenzknoten entsprechen, wobei jede der Wahrscheinlichkeitsverteilungstabellen mehrere Abschnitte enthält, die jeweils den Basisstationen entsprechen, wobei jeder der Abschnitte mehrere Wahrscheinlichkeitswerte ausdrückt, die zuvor auf der Grundlage der vorgemessenen Werte der Funksignalstärke abgeleitet wurden und jeweils mit entsprechenden geglätteten Funksignalstärkewerten in Beziehung stehen, und wobei das Verfolgungsmittel (24b) ein Mittel zum aufeinander folgenden Auswählen von jedem Satz aus der Folge von Sätzen von geglätteten Funksignalstärkewerten und Verarbeiten des ausgewählten Satzes umfasst, durch:

Vergleichen, für jede der Wahrscheinlichkeitsverteilungstabellen, jedes der geglätteten Funksignalstärkewerten des ausgewählten Satzes mit jedem der Funksignalstärkewerte innerhalb des einen der Tabellenabschnitte, der dem geglätteten Funksignalstärkewert entspricht, um auf diese Weise einen Wahrscheinlichkeitswert zu finden, der mit dem geglätteten Funksignalstärkewert abgestimmt ist, und um auf diese Weise in Bezug auf den Referenzknoten, welcher der Tabelle entspricht, einen Satz von Wahrscheinlichkeitswerten zu erhalten, die jeweils den Basisstationen entsprechen; und
Beurteilen, basierend auf allen Sätzen von Wahrscheinlichkeitswerten, die auf diese Weise für alle Referenzknoten erhalten werden, eines der Referenzknoten als einer Position des mobilen Körpers am nächsten liegend, die dem ausgewählten Satz von geglätteten Funksignalstärkewerten entspricht, und Registrieren des nächsten Referenzknotens als von dem mobilen Körper durchlaufen.

8. Mobilkörperkartenabstimmvorrichtung nach Anspruch 7, wobei das Verfolgungsmittel (24b) ein Mittel zum Ausführen der Beurteilung eines Referenzknotens durch Bearbeiten jedes der Sätze von Wahrscheinlichkeitswerten, die jeweils mit den Referenzknoten in Beziehung stehen, um das Produkt der Werte in dem jeweiligen Satz zu berechnen, und Beurteilen des am nächsten liegenden Referenzknotens als einen Referenzknoten, der einem Satz von Wahrscheinlichkeitswerten entspricht, für die der höchste Wert des Produkts erhalten wird, umfasst.

9. Mobilkörperkartenabstimmvorrichtung nach Anspruch 7, wobei das Verfolgungsmittel (24b) ein Mittel umfasst, um zu beurteilen, dass ein geglätteter Funksignalstärkewert, der mit einer spezifischen Basisstation in Beziehung steht, innerhalb des ausgewählten Satzes von geglätteten Funksignalstärkewerten ein vorbestimmtes Schwellenwertniveau überschreitet;
jeweilige Wahrscheinlichkeitswerte, die den Referenzknoten entsprechen, durch Verwenden des geglätteten Funksignalstärkewerts, der das Schwellenwertniveau überschreitet, als den Wert einer Variable in einer vorbestimmten Gleichung zu berechnen und um die berechneten Wahrscheinlichkeitswerte bei dem Abstimmvorgang anstelle der Wahrscheinlichkeitswerte der Wahrscheinlichkeitsverteilungstabelle zu verwenden.

**10.** Mobilkörperkartenabstimmvorrichtung nach Anspruch 1, ferner umfassend:

ein Positionsdetektionsmittel (16) zum Bearbeiten der Folge von bis zu einem momentanen Zeitpunkt erhaltenen Sätzen von geglätteten Funksignalstärkewerten in Verbindung mit den Positionsinformationen für die Basisstationen, um Positionskoordinatendaten abzuleiten, die jeweilige den Messzeitpunkten entsprechende abgeschätzte Positionen ausdrücken;

ein Koordinatendatenglättungsmittel (30) zum Anwenden einer Glättungsverarbeitung auf die Positionskoordinatendaten, um geglättete Positionskoordinatendaten abzuleiten, die jeweilige aufeinander folgende abgeschätzte Positionen des mobilen Körpers ausdrücken; und

ein Speichermittel (119) mit darin gespeicherten Positionsinformationen, welche die jeweiligen Orte mehrerer Links in Beziehung zu den Kartendaten ausdrücken, wobei die Links mehrere miteinander verbundene Strecken darstellen;

und wobei das Ortsmittel ein Link-Abschätzmittel (23a, 23b, 23c, 23d) zum Bearbeiten der geglätteten Positionskoordinatendaten in Verbindung mit den Positionsinformationen für die Links umfasst, um jeweilige der Links zu ermitteln, die aufeinanderfolgend von dem mobilen Körper durchlaufen wurden, und um die Positionsinformationen für die durchlaufenen Links mit den Kartendaten in Beziehung zu setzen, um auf diese Weise die Kartenpositionsinformationen abzuleiten.

**11.** Mobilkörperkartenabstimmvorrichtung nach Anspruch 10, wobei das Link-Abschätzmittel (23a) ein Mittel umfasst, um

jeweilige Vektoren abzuleiten, die aufeinander folgende Paare von durch die geglätteten Positionskoordinatendaten ausgedrückten abgeschätzten Positionen verbinden, um auf diese Weise eine kontinuierliche Folge von Vektoren zu erhalten;

jeweilige Richtungsdifferenzen zwischen aufeinander folgenden Paaren der Vektoren zu ermitteln und jede der abgeschätzten Positionen zu finden, die einer Position eines lokalen maximalen Betrags der Differenzen entspricht;

für jedes von jeweiligen gegenseitig benachbarten Paaren der Positionen eines lokalen Maximums einen Link zu ermitteln, der einen maximalen Grad an Korrelation zu dem Paar von Positionen eines lokalen Maximums aufweist, und

jeden der somit als eine maximale Korrelation aufweisend ermittelten Links als einen einer Folge von Links zu registrieren, die von dem mobilen Körper durchlaufen wurden.

**12.** Mobilkörperkartenabstimmvorrichtung nach Anspruch 10, wobei das Link-Abschätzmittel (23b) ein Mittel umfasst, um jede von jeweiligen Gruppen von aufeinander folgenden der durch die geglätteten Positionskoordinatendaten ausgedrückten abgeschätzten Positionen mit allen Links zu vergleichen, um einen Link mit einer maximalen Positionskorrelation zu jeder Gruppe zu finden und um jeden somit ermittelten Link als einen Link zu registrieren, der von dem mobilen Körper durchlaufen wurde.

**13.** Mobilkörperkartenabstimmvorrichtung nach Anspruch 12, wobei das Link-Abschätzmittel (23b) ein Mittel umfasst, um beginnend von einer ersten der durch die geglätteten Positionskoordinatendaten ausgedrückten abgeschätzten Positionen wiederholt eine Reihe von Operationen auszuführen, um

(a) einen der Links als einen maximalen Wert eines Korrelationskoeffizienten in Bezug auf eine erste Gruppe von N der abgeschätzten Positionen aufweisend zu ermitteln, wobei N eine ganze Zahl ist, die sukzessiv in den Operationswiederholungen inkrementiert wird, und den Link temporär zu registrieren,

(b) einen Korrelationskoeffizienten für eine erste Gruppe von (N + 1) der abgeschätzten Positionen in Bezug auf den temporär registrierten Link zu ermitteln,

(c) die Differenz zwischen den jeweils erhaltenen Korrelationskoeffizientenwerten zu erhalten, zu beurteilen, ob die Differenz ein erstes lokales Maximum einer Folge der Differenzen bildet, und wenn das erste lokale Maximum detektiert wird, schließlich den temporär registrierten Link als von dem mobilen Körper durchlaufen zu registrieren,

und danach sukzessiv die Reihe von Operationen (a), (b), (c) zu wiederholen, um nachfolgende der lokalen Maxima und durchlaufenen Links zu ermitteln, wobei jede Wiederholung von einer abgeschätzten Position aus beginnt, die durch die einem der lokalen Maxima entsprechenden geglätteten Positionskoordinatendaten ausgedrückt ist.

**14.** Mobilkörperkartenabstimmvorrichtung nach Anspruch 10, ferner umfassend ein Speichermittel (119) mit einer darin gespeicherten Mehrzahl von Sätzen von Mehrfachregressionsgleichungskoeffizienten, wobei die Sätze jeweils den Links entsprechen, wobei das Link-Abschätzmittel (23c) ein Mittel zum Ermitteln eines geeigneten Satzes von Mehrfachregressionsgleichungskoeffizienten für jede von Gruppen von aufeinander folgenden der durch die geglätteten Positionskoordinatendaten ausgedrückten abgeschätzten Positionen, Vergleichen des Satzes von Koeffizienten jeder der Gruppen mit allen Sätzen von Koeffizienten der Links, um einen Link zu ermitteln, der mit der Gruppe am nächsten abgestimmt ist, und Registrieren jedes somit als am nächsten abgestimmt gefundenen Links als einen Link, der von dem mobilen Körper durchlaufen wurde, umfasst.

**15.** Mobilkörperkartenabstimmvorrichtung nach Anspruch 14, wobei das Link-Abschätzmittel (23c) ein Mittel umfasst, um beginnend von einer ersten der durch die geglätteten Positionskoordinatendaten ausgedrückten abgeschätzten Positionen wiederholt eine Reihe von Operationen auszuführen, um

(a) die jeweiligen Sätze von Mehrfachregressionsgleichungskoeffizienten jedes der Links mit einem Satz von für eine erste Gruppe von N der abgeschätzten Positionen abgeleiteten Mehrfachregressionsgleichungskoeffizienten zu vergleichen, um auf diese Weise einen Link mit einem kleinsten Umfang an Koeffizientenabstand in Bezug auf die erste Gruppe zu ermitteln, wobei N eine ganze Zahl ist, die sukzessiv bei den Operationswiederholungen inkrementiert wird, und den Link temporär zu registrieren,

(b) einen Satz von für eine erste Gruppe von (N + 1) der abgeschätzten Positionen abgeleiteten Mehrfachregressionsgleichungskoeffizienten mit dem Satz der Koeffizienten zu vergleichen, die dem temporär registrierten Link entsprechen, um einen Umfang an Koeffizientenabstand zwischen der Gruppe von (N + 1) Positionen und dem Link zu erhalten,

(c) die Differenz zwischen den in Bezug auf den temporär registrierten Link erhaltenen Abstandswerten zu erhalten, zu beurteilen, ob die Differenz ein erstes lokales Maximum einer Folge der Differenzen bildet, und wenn das erste lokale Maximum detektiert wird, schließlich den temporär registrierten Link als von dem mobilen Körper durchlaufen zu registrieren,

und danach sukzessiv die Reihen von Operationen (a), (b), (c) zu wiederholen, um nachfolgende der lokalen Maxima und durchlaufenen Links zu ermitteln, wobei jede Wiederholung von einer abgeschätzten Position aus beginnt, die durch die einem der lokalen Maxima entsprechenden geglätteten Positionskoordinatendaten ausgedrückt ist.

**16.** Mobilkörperkartenabstimmvorrichtung nach Anspruch 10, ferner umfassend das Speichermittel (119) mit einer darin gespeicherten Mehrzahl von Sätzen von Hauptkomponentengleichungskoeffizienten, wobei die Sätze jeweils den Links entsprechen, wobei das Link-Abschätzmittel (23d) ein Mittel zum Ermitteln eines geeigneten Satzes von Hauptkomponentengleichungskoeffizienten für jede von Gruppen von aufeinander folgenden der durch die geglätteten Positionskoordinatendaten ausgedrückten abgeschätzten Positionen, Vergleichen des Satzes von Koeffizienten von jeder der Gruppen mit allen Sätzen von Koeffizienten der Links, um einen Link zu ermitteln, der mit der Gruppe am nächsten abgestimmt ist, und Registrieren jedes somit als am nächsten abgestimmt gefundenen Links als einen Link, der von dem mobilen Körper durchlaufen wurde, umfasst.

**17.** Mobilkörperkartenabstimmvorrichtung nach Anspruch 16, wobei das Link-Abschätzmittel (23d) ein Mittel umfasst, um beginnend von einer ersten der durch die geglätteten Positionskoordinatendaten ausgedrückten abgeschätzten Positionen wiederholt eine Reihe von Operationen auszuführen, um

(a) die jeweiligen Sätze von Hauptkomponentengleichungskoeffizienten jedes der Links mit einem Satz von für eine erste Gruppe von N der abgeschätzten Positionen abgeleiteten Hauptkomponentengleichungskoeffizienten zu vergleichen, um auf diese Weise einen Link mit einem kleinsten Umfang an Koeffizientenabstand in Bezug auf die erste Gruppe zu ermitteln, wobei N eine ganze Zahl ist, die sukzessiv bei den Operationswiederholungen inkrementiert wird, und den Link temporär zu registrieren,

(b) einen Satz von für eine erste Gruppe von (N + 1) der abgeschätzten Positionen abgeleiteten Hauptkomponentengleichungskoeffizienten mit dem Satz der Koeffizienten zu vergleichen, die dem temporär registrierten Link entsprechen, um einen Umfang an Koeffizientenabstand zwischen der Gruppe von (N + 1) Positionen und dem Link zu erhalten,

(c) die Differenz zwischen den in Bezug auf den temporär registrierten Link erhaltenen Abstandswerten zu erhalten, zu beurteilen, ob die Differenz ein erstes lokales Maximum einer Folge der Differenzen bildet, und wenn das erste lokale Maximum detektiert wird, schließlich den temporär registrierten Link als von dem mobilen Körper durchlaufen zu registrieren,

und danach sukzessiv die Reihen von Operationen (a), (b), (c) zu wiederholen, um nachfolgende der lokalen Maxima und durchlaufenen Links zu ermitteln, wobei jede Wiederholung von einer abgeschätzten Position aus beginnt, die durch die einem der lokalen Maxima entsprechenden geglätteten Positionskoordinatendaten ausgedrückt ist.

**18.** Mobilkörperkartenabstimmvorrichtung nach Anspruch 10, umfassend:

ein Richtungsabschätzmittel (22) zum Ableiten jeweiliger Vektoren, die aufeinander folgende Paare von Sätzen von geglätteten Funksignalstärkewerten verbinden, aus der Folge von Sätzen von geglätteten Funksignalstärkewerten;

ein Mittel (310) zum Ermitteln jeweiliger Richtungsdifferenzen zwischen jedem der Vektoren und einer vorangehenden Serie von Vektoren, die sich von einem Anfangsvektor der Vektorfolge erstreckt, um auf diese Weise eine Folge von Differenzwerten zu erhalten, Detektieren eines ersten lokalen Maximums der Folge von Differenzwerten und Registrieren eines der Sätze von geglätteten Funksignalstärkewerten, der dem ersten lokalen Maximum entspricht, und danach Ableiten aufeinander folgender der Folgen von Differenzwerten mit den Folgen, die sich jeweils von aufeinander folgenden Positionen lokaler Maxima in der Folge von Vektoren erstrecken;

ein Mittel (16) zum Umwandeln jedes der Sätze von geglätteten Funksignalstärkewerten, die den lokalen Maxima entsprechen, in die Koordinaten jeweiliger abgeschätzter Positionen an der Karte; und

ein Mittel (23e) zum Vergleichen jeder der Positionen, die den lokalen Maxima entsprechen, mit den Positionsinformationen für die Links, um jeweilige Endpunkte von Links zu ermitteln, die den Positionen der lokalen Maxima am nächsten liegen, und zum Registrieren aller Links, bei denen herausgefunden wurde, dass die Endpunkte hiervon jeweiligen der Positionen, die den lokalen Maxima entsprechen, am nächsten liegen, als Links, die von dem mobilen Körper durchlaufen wurden.

## Revendications

**1.** Appareil de mise en correspondance de carte de corps mobile pour utilisation dans un système de communication ayant une pluralité de stations de base (11) pour estimer l'emplacement actuel d'un corps mobile (12) qui transporte un terminal portable, ledit terminal portable étant configuré pour une communication sans fil avec des stations de base sélectionnées arbitrairement parmi lesdites stations de base ;

dans lequel ledit terminal portable comprend un moyen (28) pour obtenir des valeurs mesurées respectives de puissance de signal radio des signaux reçus depuis chacune desdites stations de base à des instants de mesure successifs, lesdites valeurs de puissance de signal radio mesurées étant transmises audit appareil de mise en correspondance de carte de corps mobile via lesdites stations de base, et dans lequel ledit appareil de mise en correspondance de carte de corps mobile comprend :

un moyen de mémoire de données de puissance de signal radio (13) destiné à stocker lesdits ensembles desdites valeurs de puissance de signal radio mesurées, avec les valeurs constituant chacun desdits ensembles respectivement identifiées comme se rapportant à des stations de base spécifiques parmi lesdites stations de base ;

un moyen de stockage (18) ayant stocké dans celui-ci des données de carte représentant le contenu d'une carte ;

un moyen de traitement de lissage (21) destiné à appliquer un traitement de lissage à une séquence entière desdits ensembles de valeurs de puissance de signal radio mesurées qui ont été successivement acquis et stockés dans ledit moyen de mémoire de données de puissance de signal radio (13) jusqu'à un instant actuel, pour obtenir de ce fait une séquence d'ensembles de valeurs de puissance de signal radio lissées, avec lesdits ensembles correspondant respectivement à des instants de mesure successifs parmi lesdits instants de mesure et les valeurs constituant chaque ensemble se rapportant à des stations de base respectives parmi lesdites stations de base ; et

un moyen (24a, 24b) destiné à fonctionner sur lesdites valeurs de puissance de signal radio lissées en association avec lesdites données de carte, pour obtenir des informations de position de carte indiquant une position actuelle dudit corps mobile par rapport audit contenu de la carte.

**2.** Appareil de mise en correspondance de carte de corps mobile selon la revendication 1, comprenant un moyen d'estimation de direction (22) destiné à fonctionner sur les valeurs de différence de puissance de signal radio respectives se rapportant auxdites stations de base pour estimer une direction actuelle du mouvement dudit corps mobile, dans lequel chacune desdites valeurs de différence est obtenue comme une différence entre une valeur de puissance de signal radio lissée correspondant à une position actuelle dudit corps mobile et une valeur de puissance de signal radio lissée correspondant à une position précédente dudit corps mobile.

**3.** Appareil de mise en correspondance de carte de corps mobile selon la revendication 2, dans lequel ledit moyen d'estimation de direction comprend un moyen destiné à fonctionner sur un premier ensemble et sur un deuxième ensemble parmi lesdits ensembles de valeurs de puissance de signal radio lissées, où ledit premier ensemble correspond à une position précédente estimée dudit corps mobile à un instant de mesure précédent et ledit deuxième ensemble correspond à un instant de mesure plus récent, pour obtenir pour chacune desdites stations de base une valeur de différence entre la valeur de puissance de signal radio lissée correspondant à ladite station de base dans ledit premier ensemble et la valeur de puissance de signal radio lissée correspondant à ladite station de base dans ledit deuxième ensemble et obtenir ainsi des valeurs de différence respectives parmi lesdites valeurs de différence pour chacune desdites stations de base ;

exprimer chacune desdites valeurs de différence comme la longueur d'un vecteur qui s'étend depuis ladite position précédente estimée le long d'une ligne connectant ladite position précédente estimée à la station de base correspondant à ladite chaque valeur de différence ; et

obtenir le vecteur somme desdits vecteurs, pour obtenir un vecteur composé ayant une direction qui constitue une direction de mouvement actuel estimée dudit corps mobile par rapport à ladite position précédente estimée.

**4.** Appareil de mise en correspondance de carte de corps mobile selon l'une quelconque des revendications 1 à 3, comprenant un moyen de stockage (19) ayant stocké dans celui-ci une position combinée et des données de puissance de signal radio qui spécifient, pour chacune d'une pluralité de noeuds de référence situés à des positions respectives sur ladite carte, des informations de position indiquant une position dudit noeud de référence par rapport à ladite carte et un ensemble de valeurs pré-mesurées de puissance de signal radio reçue se rapportant respectivement à chacune desdites stations de base, lesdites valeurs pré-mesurées ayant été mesurées au préalable à l'emplacement dudit chaque noeud de référence et

dans lequel ledit moyen d'emplacement comprend un moyen de trace (24a) pour comparer lesdits ensembles successifs de valeurs de puissance de signal radio lissées auxdites valeurs pré-mesurées de puissance de signal radio pour détecter ainsi les noeuds de référence spécifiques parmi lesdits noeuds de référence qui ont été successivement traversés par ledit corps mobile, et pour rapporter les informations de position pour lesdits noeuds de référence traversés auxdites données de carte pour obtenir ainsi lesdites informations de position de carte.

**5.** Appareil de mise en correspondance de carte de corps mobile selon la revendication 4, dans lequel chacune des valeurs pré-mesurées est obtenue comme une moyenne d'une pluralité de valeurs mesurées, dans lequel ledit appareil comprend un moyen de stockage (19) ayant stocké dans celui-ci des données exprimant des plages respectives d'écart pour lesdites valeurs pré-mesurées de puissance de signal radio, et dans lequel ledit moyen de trace (24a) comprend un moyen pour juger ladite séquence d'ensembles de valeurs de puissance de signal radio lissées pour trouver chaque ensemble dans celui-ci qui est dans une plage d'écart d'un ensemble de valeurs pré-mesurées de puissance de signal radio correspondant à un noeud de référence, et pour enregistrer chaque tel noeud de référence comme étant un point qui a été traversé par ledit corps mobile.

**6.** Appareil de mise en correspondance de carte de corps mobile selon la revendication 5, dans lequel chacune desdites plages d'écart est exprimée par une valeur d'écart standard, et dans lequel ledit moyen de trace (24a) comprend un moyen pour :

fonctionner sur chaque ensemble de ladite séquence entière d'ensembles de valeurs de puissance de signal radio lissées en association avec lesdites valeurs pré-mesurées de puissance de signal radio et des valeurs d'écart standards, pour obtenir une pluralité d'ensembles de valeurs d'écart, avec chacun desdits ensembles de valeurs d'écart correspondant à un noeud de référence spécifique parmi lesdits noeuds de référence et les valeurs dans celui-ci correspondant à des stations de base respectives parmi lesdites stations de base,

juger chacun desdits ensembles de valeurs d'écart pour déterminer les ensembles de valeurs d'écart pour lesquels toutes les valeurs sont dans une plage prédéterminée, et

pour chacun des groupes successifs de N ensembles successifs de ladite séquence d'ensembles de valeurs de puissance de signal radio lissées, où N est un nombre entier fixe, déterminer un noeud de référence pour lequel il y a une majorité d'occurrences d'une condition selon laquelle un ensemble correspondant de valeurs d'écart est dans ladite plage prédéterminée, et enregistrer ledit noeud de référence comme étant un noeud de référence qui a été traversé par ledit corps mobile.

**7.** Appareil de mise en correspondance de carte de corps mobile selon la revendication 4, comprenant un moyen de stockage de données (19) ayant stocké dans celui-ci des données constituant une pluralité de tableaux de distribution de probabilité correspondant respectivement auxdits noeuds de référence, chacun desdits tableaux de distribution de probabilité contenant une pluralité de sections correspondant respectivement auxdites stations de base, chacune desdites sections exprimant une pluralité de valeurs de probabilité qui ont été obtenues au préalable en se basant sur lesdites valeurs pré-mesurées de puissance de signal radio et se rapportent respectivement aux valeurs de puissance de signal radio lissée correspondantes, et dans lequel ledit moyen de trace (24b) comprend un moyen pour sélectionner successivement chaque ensemble à partir de ladite séquence d'ensembles de valeurs de puissance de signal radio lissées et traiter ledit ensemble sélectionné, en :

pour chacun desdits tableaux de distribution de probabilité, comparant chacune des valeurs de puissance de signal radio lissées dudit ensemble sélectionné à chacune des valeurs de puissance de signal radio dans la section de tableau parmi lesdites sections de tableau qui correspond à ladite valeur de puissance de signal radio lissée, pour trouver ainsi une valeur de probabilité qui correspond à ladite valeur de puissance de signal radio lissée, et obtenir ainsi, par rapport au noeud de référence correspondant audit tableau, un ensemble de valeurs de probabilité correspondant respectivement auxdites stations de base ; et

en se basant sur tous les ensembles de valeurs de probabilité parmi lesdits ensembles de valeurs de probabilité qui sont obtenus ainsi pour tous les noeuds de référence parmi lesdits noeuds de référence, juger qu'un noeud de référence parmi lesdits noeuds de référence est le plus proche d'une position dudit corps mobile correspondant audit ensemble sélectionné de valeurs de puissance de signal radio lissées, et enregistrer ledit noeud de référence le plus proche comme ayant été traversé par ledit corps mobile.

8. Appareil de mise en correspondance de carte de corps mobile selon la revendication 7, dans lequel ledit moyen de trace (24b) comprend un moyen pour effectuer ledit jugement d'un noeud de référence en fonctionnant sur chacun desdits ensembles de valeurs de probabilité se rapportant respectivement auxdits noeuds de référence pour calculer le produit des valeurs dans ledit chaque ensemble, et en jugeant que ledit noeud de référence le plus proche est un noeud de référence correspondant à un ensemble de valeurs de probabilité pour lesquelles la valeur la plus élevée dudit produit est obtenue.

9. Appareil de mise en correspondance de carte de corps mobile selon la revendication 7, dans lequel ledit moyen de trace (24b) comprend un moyen pour :

juger qu'une valeur de puissance de signal radio lissée se rapportant à une station de base spécifique, dans ledit ensemble sélectionné de valeurs de puissance de signal radio lissées, dépasse un niveau seuil prédéterminé ;

calculer les valeurs de probabilité respectives correspondant auxdits noeuds de référence en utilisant ladite valeur de puissance de signal radio lissée qui dépasse le niveau seuil comme la valeur d'une variable dans une équation prédéterminée, et pour utiliser lesdites valeurs de probabilité calculées dans ladite opération de mise en correspondance, au lieu desdites valeurs de probabilité dudit tableau de distribution de probabilité.

10. Appareil de mise en correspondance de carte de corps mobile selon la revendication 1, comprenant en outre :

un moyen de détection de position (16) pour fonctionner sur ladite séquence d'ensembles de valeurs de puissance de signal radio lissées obtenues jusqu'à un instant actuel, en association avec lesdites informations de position pour lesdites stations de base, pour obtenir des données de coordonnées de position exprimant des positions estimées respectives correspondant audits instants de mesure ;

un moyen de lissage des données de coordonnées (30) pour appliquer un traitement de lissage auxdites données de coordonnées de position pour obtenir des données de coordonnées de position lissées exprimant des positions estimées successives respectives dudit corps mobile ; et

un moyen de stockage (119) ayant stocké dans celui-ci des informations de position exprimant les emplacements respectifs d'une pluralité de liaisons par rapport auxdites données de carte, lesdites liaisons étant une pluralité de segments de ligne interconnectés ;

et dans lequel ledit moyen d'emplacement comprend un moyen d'estimation de liaison (23a, 23b, 23c, 23d) pour fonctionner sur lesdites données de coordonnées de position lissées en association avec lesdites informations de position pour lesdites liaisons, pour déterminer les liaisons respectives parmi lesdites liaisons qui ont été successivement traversées par ledit corps mobile, et pour rapporter les informations de position pour lesdites liaisons traversées auxdites données de carte pour obtenir ainsi lesdites informations de position de carte.

11. Appareil de mise en correspondance de carte de corps mobile selon la revendication 10, dans lequel ledit moyen d'estimation de liaison (23a) comprend un moyen pour :

obtenir des vecteurs respectifs connectant des paires successives de positions estimées exprimées par lesdites données de coordonnées de position lissées, pour obtenir ainsi une séquence continue de vecteurs ;

déterminer des différences respectives dans une direction entre des paires successives desdits vecteurs, et trouver chacune desdites positions estimées qui correspond à une position d'une quantité de maximum locaux desdites différences ;

déterminer, pour chacune des paires mutuellement adjacentes respectives desdites positions des maximum locaux, une liaison qui a un degré maximum de corrélation avec ladite paire de positions des maximum locaux, et enregistrer chacune des liaisons déterminées ainsi comme ayant une corrélation maximum, comme une parmi une succession de liaisons qui ont été traversées par ledit corps mobile.

**12.** Appareil de mise en correspondance de carte de corps mobile selon la revendication 10, dans lequel ledit moyen d'estimation de liaison (23b) comprend un moyen pour comparer chacun des groupes respectifs de positions estimées successives parmi lesdites positions estimées exprimées par les données de coordonnées de position lissées à toutes les liaisons parmi lesdites liaisons, pour trouver une liaison ayant une corrélation de position maximum avec ledit chaque groupe, et pour enregistrer chaque liaison ainsi déterminée comme une liaison qui a été traversée par ledit corps mobile.

**13.** Appareil de mise en correspondance de carte de corps mobile selon la revendication 12, dans lequel ledit moyen d'estimation de liaison (23b) comprend un moyen pour, en commençant par une première position estimée parmi lesdites positions estimées exprimées par lesdites données de coordonnées de position lissées, exécuter à plusieurs reprise une série d'opérations pour

(a) déterminer une liaison parmi lesdites liaisons comme ayant une valeur maximum de coefficient de corrélation en ce qui concerne un premier groupe de N positions estimées parmi lesdites positions estimées, où N est un nombre entier qui est incrémenté successivement dans lesdites répétitions d'opération, et enregistrer temporairement la liaison,

(b) déterminer un coefficient de corrélation pour un premier groupe de (N+1) desdites positions estimées parmi lesdites positions estimées en ce qui concerne la liaison enregistrée temporairement,

(c) obtenir la différence entre lesdites valeurs du coefficient de corrélation obtenues respectivement, juger si ladite différence constitue un premier maximum local d'une séquence desdites différences, et quand ledit premier maximum local est détecté, enregistrer finalement ladite liaison enregistrée temporairement comme ayant été traversée par ledit corps mobile,

et ensuite répéter successivement ladite série d'opérations (a), (b), (c) pour déterminer des maximum locaux et des liaisons traversées suivants parmi lesdits maximum locaux et liaisons traversées, avec chaque répétition commençant à partir d'une position estimée, exprimée par lesdites données de coordonnées de position lissées, qui correspondent à un maximum local parmi lesdits maximum locaux.

**14.** Appareil de mise en correspondance de carte de corps mobile selon la revendication 10, comprenant en outre un moyen de stockage (119) ayant stocké dans celui-ci une pluralité d'ensembles de plusieurs coefficients d'équation de régression, avec lesdits ensembles correspondant respectivement auxdites liaisons, dans lequel ledit moyen d'estimation de liaison (23c) comprend un moyen pour déterminer un ensemble approprié de plusieurs coefficients d'équation de régression pour chacun des groupes de positions estimées successives parmi lesdites positions estimées exprimées par les données de coordonnées de position lissées, comparer l'ensemble de coefficients de chacun desdits groupes à tous les ensembles de coefficients parmi lesdits ensembles de coefficients desdites liaisons, pour déterminer une liaison qui correspond le plus audit groupe, et enregistrer chaque liaison ainsi trouvée comme étant celle qui correspond le plus, comme une liaison qui a été traversée par ledit corps mobile.

**15.** Appareil de mise en correspondance de carte de corps mobile selon la revendication 14, dans lequel ledit moyen d'estimation de liaison (23c) comprend un moyen pour, en commençant par une première position estimée parmi lesdites positions estimées exprimées par lesdites données de coordonnées de position lissées, exécuter à plusieurs reprise une série d'opérations pour

(a) comparer les ensembles respectifs de plusieurs coefficients d'équation de régression de chacune desdites liaisons à un ensemble de plusieurs coefficients d'équation de régression obtenu pour un premier groupe de N desdites positions estimées pour déterminer ainsi une liaison ayant la plus petite quantité de distance de coefficient par rapport audit premier groupe, où N est un nombre entier qui est incrémenté successivement dans lesdites répétitions d'opération, et enregistrer temporairement la liaison,

(b) comparer un ensemble de plusieurs coefficients d'équation de régression obtenu pour un premier groupe de (N+1) desdites positions estimées à l'ensemble desdits coefficients correspondant à ladite liaison enregistrée temporairement, pour obtenir une quantité de distance de coefficient entre ledit groupe de (N+1) positions et ladite liaison,

(c) obtenir la différence entre les valeurs de distance obtenues en ce qui concerne ladite liaison enregistrée temporairement, juger si ladite différence constitue un premier maximum local d'une séquence desdites différences, et quand ledit premier maximum local est détecté, enregistrer finalement ladite liaison enregistrée temporairement comme ayant été traversée par ledit corps mobile,

et ensuite répéter successivement ladite série d'opérations (a), (b), (c) pour déterminer des maximum locaux et des liaisons traversées suivants parmi lesdits maximum locaux et liaisons traversées, avec chaque répétition commençant à partir d'une position estimée, exprimée par lesdites données de coordonnées de position lissées, qui correspondent à un maximum local parmi lesdits maximum locaux.

16. Appareil de mise en correspondance de carte de corps mobile selon la revendication 10, comprenant en outre un moyen de stockage (119) ayant stocké dans celui-ci une pluralité d'ensembles de coefficients d'équation de composants principaux, avec lesdits ensembles correspondant respectivement auxdites liaisons, dans lequel ledit moyen d'estimation de liaison (23d) comprend un moyen pour déterminer un ensemble approprié de coefficients d'équation de composants principaux pour chacun des groupes de positions estimées successives parmi lesdites positions estimées exprimées par les données de coordonnées de position lissées, comparer l'ensemble de coefficients de chacun desdits groupes à tous les ensembles de coefficients parmi lesdits ensembles de coefficients desdites liaisons, pour déterminer une liaison qui correspond le plus audit groupe, et enregistrer chaque liaison ainsi trouvée comme étant celle qui correspond le plus, comme une liaison qui a été traversée par ledit corps mobile.

17. Appareil de mise en correspondance de carte de corps mobile selon la revendication 16, dans lequel ledit moyen d'estimation de liaison (23d) comprend un moyen pour, en commençant par une première position estimée parmi lesdites positions estimées exprimées par lesdites données de coordonnées de position lissées, exécuter à plusieurs reprise une série d'opérations pour

(a) comparer les ensembles respectifs de coefficients d'équation de composants principaux de chacune desdites liaisons à un ensemble de coefficients d'équation de composants principaux obtenu pour un premier groupe de N desdites positions estimées pour déterminer ainsi une liaison ayant la plus petite quantité de distance de coefficient par rapport audit premier groupe, où N est un nombre entier qui est incrémenté successivement dans lesdites répétitions d'opération, et enregistrer temporairement la liaison,

(b) comparer un ensemble de coefficients d'équation de composants principaux obtenu pour un premier groupe de (N+1) desdites positions estimées à l'ensemble desdits coefficients correspondant à ladite liaison enregistrée temporairement, pour obtenir une quantité de distance de coefficient entre ledit groupe de (N+1) positions et ladite liaison,

(c) obtenir la différence entre les valeurs de distance obtenues en ce qui concerne ladite liaison enregistrée temporairement, juger si ladite différence constitue un premier maximum local d'une séquence desdites différences, et quand ledit premier maximum local est détecté, enregistrer finalement ladite liaison enregistrée temporairement comme ayant été traversée par ledit corps mobile,

et ensuite répéter successivement ladite série d'opérations (a), (b), (c) pour déterminer des maximum locaux et des liaisons traversées suivants parmi lesdits maximum locaux et liaisons traversées, avec chaque répétition commençant à partir d'une position estimée, exprimée par lesdites données de coordonnées de position lissées, qui correspondent à un maximum local parmi lesdits maximum locaux.

18. Appareil de mise en correspondance de carte de corps mobile selon la revendication 10, comprenant :

un moyen d'estimation de direction (22) pour obtenir des vecteurs respectifs connectant des paires successives d'ensembles de valeurs de puissance de signal radio lissées depuis ladite séquence d'ensembles de valeurs de puissance de signal radio lissées ;

un moyen (310) pour déterminer des différences respectives de direction entre chacun desdits vecteurs et une série précédente de vecteurs qui s'étendent à partir d'un vecteur initial de ladite séquence de vecteurs pour obtenir ainsi une séquence de valeurs de différence, détecter un premier maximum local de ladite séquence de valeurs de différence et enregistrer un desdits ensembles de valeurs de puissance de signal radio lissées qui correspond audit premier maximum local, et obtenir ensuite les séquences successives parmi lesdites séquences de valeurs de différence avec lesdites séquences s'étendant respectivement à partir des positions des maximum locaux successifs dans ladite séquence de vecteurs ;

un moyen (16) pour convertir chacun desdits ensembles de valeurs de puissance de signal radio lissées correspondant auxdits maximum locaux en coordonnées des positions estimées respectives sur ladite carte ; et

un moyen (23e) pour comparer chacune desdites positions correspondant aux maximum locaux auxdites informations de position pour lesdites liaisons, pour déterminer les points d'extrémité respectifs des liaisons qui sont les plus proches desdites positions des maximum locaux, et pour enregistrer chacune des liaisons ayant les points d'extrémité de celles-ci trouvées comme étant les plus proches des positions respectives parmi lesdites positions correspondant aux maximum locaux, comme des liaisons qui ont été traversées par ledit corps mobile.

## FIG. 1

BASE STATION

11

BASE STATION

MOBILE TERMINAL

12

20

10

DATA I/O SECTION

13 — RADIO SIGNAL STRENGTH DATA MEMORY

MAP MATCHING
PROCESSING SECTION

14

21

SMOOTHING
PROCESSING SECTION

SMOOTHED
RADIO
SIGNAL
STRENGTH
DATA

15

INTERFACE

17

24a

TRACE SECTION

19

18

MOBILE BODY MAP MATCHING APPARATUS

# FIG. 2

PORTABLE TERMINAL (12)

WIRELESS CONTROL SECTION (25)

RADIO SIGNAL STRENGTH MEASUREMENT SECTION (28)

MAP DISPLAY SECTION (26)

MOBILE BODY MAP MATCHING SECTION (27)

# FIG. 3

```
          ( START )
              │
              ▼
┌──────────────────────────────────┐
│ ACQUIRE A SET OF VALUES OF        │
│ RECEIVED RADIO SIGNAL STRENGTH    │
│ FOR A PLURALITY OF BASE STATIONS ,│
│ TRANSMITTED BY WIRELESS           │
│ COMMUNICATION  FROM  A            │
│ MOBILE BODY VIA A BASE STATION    │
└──────────────────────────────────┘
              │
              ▼
┌──────────────────────────────────────────┐
│ STORE THE RADIO SIGNAL STRENGTH VALUES,   │
│ AND USE IN GENERATING UPDATED POSITION    │
│ INFORMATION SPECIFYING COORDINATES OF     │
│ REFERENCE NODES THAT HAVE BEEN            │
│ SUCCESSIVELY REACHED BY THE MOBILE BODY   │
│ AND THE CURRENT DIRECTION OF MOTION OF    │
│ MOBILE BODY                               │
└──────────────────────────────────────────┘
              │
              ▼
┌──────────────────────────────────┐
│ GENERATE UPDATED MAP INFORMATION  │
│ RELATING THE POSITION INFORMATION │
│ TO A STREET MAP, AND TRANSMIT MAP │
│ INFORMATION VIA A BASE STATION TO │
│ THE MOBILE BODY                   │
└──────────────────────────────────┘
              │
              ▼
          ( END )
```

FIG. 4

FIG. 5

EP 1 022 578 B1

## FIG. 6

FIG. 7

RECEIVED
SIGNAL
STRENGTH

DISTANCE

# FIG. 8

RECEIVED
SIGNAL
STRENGTH

62

55

P

Q

DISTANCE

EP 1 022 578 B1

## FIG. 9

**FIG. 10**

EP 1 022 578 B1

# FIG. 11

START

Sa

DETERMINE THAT POINT HAS BEEN REACHED AT WHICH
MEASUREMENT IS TO BE PERFORMED, MEASURE
RESPECTIVE VALUES OF RADIO SIGNAL STRENGTH
RECEIVED FROM THE BASE STATIONS, AND STORE THE
SET OF VALUES

PERFORM AVERAGING PROCESSING OF ALL OF
THE SETS OF FIELD STRENGTH VALUES RECEIVED
UP TO THIS POINT, TO OBTAIN RESPECTIVE
SMOOTHED SETS OF SIGNAL STRENGTH VALUES

Sb

FROM EACH SET OF SMOOTHED VALUES, DERIVE A PLURALITY OF
SETS OF DEVIATION VALUES , WITH THE SETS CORRESPONDING TO
RESPECTIVE ONES OF A PLURALITY OF REFERENCE NODES, BY
CALCULATION WITH RESPECT TO PRE-MEASURED RADIO SIGNAL
STRENGTH VALUES THAT HAVE BEEN DERIVED AND STORED
BEFOREHAND FOR EACH OF THE REFERENCE NODES

Sc

JUDGE A GROUP OF SUCCESSIVE SETS OF
DEVIATION VALUES TO FIND, WITHIN THAT
GROUP, EACH SET FOR WHICH ALL VALUES
ARE WITHIN A PREDETERMINED RANGE

Sd

BASED ON RESULTS OF THAT JUDGEMENT,
ASSIGN A "TRAVERSAL" MARK TO A
REFERENCE NODE WHICH HAS BEEN
REACHED BY THE MOVING BODY

Se

REPEAT STEPS Sd TO Se UNTIL ALL OF THE
SMOOTHED DATA VALUES OBTAINED UP TO
THIS POINT HAVE BEEN PROCESSED

Sf

END

# FIG 12

START

S1
DETERMINE THAT MEASUREMENT POINT HAS BEEN REACHED

S2
INITIALIZE THE NODE TRAVERSAL TABLE

S3
MEASURE RESPECTIVE VALUES OF RADIO SIGNAL STRENGTH RECEIVED FROM THE BASE STATIONS

S4
PERFORM SMOOTHING PROCESSING OF ALL RADIO SIGNAL STRENGTH VALUES OBTAINED UP TO THIS POINT, UPDATE THE SMOOTHED DATA TABLE

S5
CNT -> 0, INITIALIZE THE IN-RANGE OCCURRENCE TABLE

S6
CALCULATE AN ARRAY OF DEVIATION VALUES BASED ON ONE ROW OF THE SMOOTHED DATA TABLE

S7
FIND A REFERENCE NODE HAVING A CORRESPONDING IN-RANGE SET OF VALUES WITHIN THAT ARRAY, AND INCREMENT THE COUNT VALUE OF CORRESPONDING ENTRY IN IN-RANGE OCCURRENCE TABLE

S8
CNT -> CNT+1

S9
CNT > 3 ?
N
Y

S10
DETERMINE THE REFERENCE NODE FOR WHICH THE HIGHEST NUMBER HAS BEEN REGISTERED IN IN-RANGE OCCURRENCE TABLE, AND SET THE CORRESPONDING ENTRY OF THE NODE TRAVERSAL TABLE TO THE 1 STATE

S11
ALL ROWS OF SMOOTHED DATA TABLE PROCESSED ?
N
Y

S12
OPERATION TO BE TERMINATED ?
N
Y

END

# FIG. 13

S7a

IS THERE ANY NODE
HAVING AN IN-RANGE SET
OF VALUES, WITHIN THAT
ARRAY ?

N

S7b

WIDEN THE
SELECTION
RANGE BY THE
PREDETERMINED
AMOUNT

Y

S7c

IN THE IN-RANGE OCCURRENCE TABLE,
INCREMENT THE COUNT VALUE OF EACH ENTRY
CORRESPONDING TO A REFERENCE NODE FOR
WHICH AN IN-RANGE SET OF VALUES HAS
BEEN OBTAINED.

## FIG. 14

TABLE 1

(PRE-MEASURED SIGNAL STRENGTH VALUES TABLE)

| REF. NODE | SIGNAL STRENGTH VALUES (BASE STATION A) | SIGNAL STRENGTH VALUES (BASE STATION B) | SIGNAL STRENGTH VALUES (BASE STATION C) | SIGNAL STRENGTH VALUES (BASE STATION D) |
|---|---|---|---|---|
| Na | 65, 16 | 58, 20 | 42, 23 | 50, 23 |
| Nb | 62, 15 | 60, 17 | 43, 22 | 49, 20 |
| Nc | 50, 22 | 62, 14 | 45, 24 | 45, 25 |
| Nd | 59, 18 | 66, 13 | 46, 23 | 44, 25 |
| Ne | 62, 15 | 57, 21 | 43, 24 | 52, 20 |
| Nf | 60, 18 | 60, 19 | 46, 25 | 50, 22 |
| Ng | 49, 24 | 60, 18 | 47, 23 | 47, 23 |
| Nh | 57, 19 | 63, 11 | 48, 22 | 47, 24 |
| Ni | 55, 19 | 53, 20 | 53, 20 | 55, 17 |
| Nj | 53, 21 | 53, 20 | 53, 19 | 53, 17 |

## FIG. 15

TABLE 2

(SMOOTHED DATA TABLE)

FIRST GROUP OF FOUR ROWS

| SIGNAL STRENGTH VALUES (BASE STATION A) | SIGNAL STRENGTH VALUES (BASE STATION B) | SIGNAL STRENGTH VALUES (BASE STATION C) | SIGNAL STRENGTH VALUES (BASE STATION D) |
|---|---|---|---|
| 65 | 58 | 42 | 50 |
| 65 | 58 | 41 | 49 |
| 64 | 58 | 41 | 50 |
| 64 | 58 | 42 | 50 |
| 63 | 59 | 42 | 50 |
| 62 | 60 | 43 | 49 |
| 62 | 61 | 43 | 49 |
| 62 | 60 | 44 | 51 |
| 61 | 59 | 44 | 50 |
| 61 | 59 | 44 | 50 |
| 60 | 60 | 46 | 50 |
| 60 | 58 | 46 | 50 |
| 60 | 58 | 48 | 51 |
| 57 | 56 | 50 | 52 |
| 54 | 55 | 51 | 52 |
| 53 | 53 | 53 | 53 |

## FIG. 16A

TABLE 3

(DEVIATION VALUES TABLE)

| REF. NODE | DEVIATION (FROM BASE STATION A VALUES) | DEVIATION (FROM BASE STATION B VALUES) | DEVIATION (FROM BASE STATION C VALUES) | DEVIATION (FROM BASE STATION D VALUES) | IN-RANGE VALUE SET |
|---|---|---|---|---|---|
| Na | 50.00 | 50.00 | 50.00 | 50.00 | DERIVED FROM ROW 1 OF SMOOTHED DATA TABLE |
| Nb | 52.00 | 48.82 | 49.55 | 50.00 | |
| Nc | 58.82 | 47.11 | 48.75 | 52.00 | |
| Nd | 52.33 | 43.85 | 48.26 | 52.40 | |
| Ne | 52.00 | 50.48 | 49.58 | 49.00 | |
| Nf | 52.78 | 48.95 | 48.40 | 50.00 | |
| Ng | 56.67 | 48.89 | 47.83 | 51.30 | |
| Nh | 54.21 | 45.45 | 47.27 | 51.25 | |
| Ni | 55.26 | 52.50 | 44.50 | 47.06 | |
| Nj | 55.71 | 52.50 | 44.21 | 48.24 | |
| Na | 50.00 | 50.00 | 49.56 | 49.57 | FROM ROW 2 |
| Na | 49.38 | 50.00 | 49.57 | 50.00 | FROM ROW 3 |
| Na | 49.38 | 50.00 | 50.00 | 50.00 | FROM ROW 4 |
| Nb | 50.67 | 49.42 | 49.55 | 50.50 | FROM ROW 5 |
| Nb | 50.00 | 50.00 | 50.00 | 50.00 | FROM ROW 6 |
| Nb | 50.00 | 50.59 | 50.00 | 50.00 | FROM ROW 7 |
| Nb | 50.00 | 50.00 | 50.45 | 51.00 | FROM ROW 8 |
| Nb | 49.333 | 49.41 | 50.45 | 50.00 | FROM ROW 9 |
| Ne | 49.33 | 50.95 | 50.42 | 49.00 | |
| Nf | 50.56 | 49.47 | 49.20 | 50.00 | |

## FIG. 16B

| | | | | |
|---|---|---|---|---|
| Nb | 49.33 | 49.41 | 50.45 | 50.50 |
| Ne | 49.33 | 50.95 | 50.42 | 49.00 |
| Nf | 50.56 | 49.47 | 49.20 | 50.00 |
| Nf | 50.00 | 50.00 | 50.00 | 50.00 |
| Nf | 50.00 | 48.95 | 50.00 | 50.00 |
| Nf | 50.00 | 48.95 | 50.80 | 50.45 |
| Ni | 51.05 | 51.50 | 48.50 | 48.24 |
| Nj | 51.90 | 51.50 | 48.42 | 49.41 |
| Ni | 49.47 | 51.50 | 49.00 | 48.24 |
| Nj | 50.48 | 51.50 | 48.95 | 49.41 |
| Nj | 50.00 | 50.00 | 50.00 | 50.00 |

FROM ROW 10

FROM ROW 11

FROM ROW 12

FROM ROW 13

FROM ROW 14

FROM ROW 15

FROM ROW 16

# FIG. 17

TABLE 4

(IN-RANGE OCCURRENCE TABLE)

| ROWS OF THE SMOOTHED DATA TABLE THAT HAVE BEEN PROCESSED | Na | Nb | Nc | Nd | Ne | Nf | Ng | Nh | Ni | Nj |
|---|---|---|---|---|---|---|---|---|---|---|
| 0 (INITIALIZED CONDITION ) | 0 | 0 | 0 | 0 | 0 | 0 | 0 | 0 | 0 | 0 |
| 1-4 | 4 | 0 | 0 | 0 | 0 | 0 | 0 | 0 | 0 | 0 |
| (INITIALIZED) | 0 | 0 | 0 | 0 | 0 | 0 | 0 | 0 | 0 | 0 |
| 5-8 | 0 | 4 | 0 | 0 | 0 | 0 | 0 | 0 | 0 | 0 |
| (INITIALIZED) | 0 | 0 | 0 | 0 | 0 | 0 | 0 | 0 | 0 | 0 |
| 9-12 | 0 | 2 | 0 | 0 | 2 | 4 | 0 | 0 | 0 | 0 |
| (INITIALIZED) | 0 | 0 | 0 | 0 | 0 | 0 | 0 | 0 | 0 | |
| 13-16 | 0 | 0 | 0 | 0 | 0 | 1 | 0 | 0 | 2 | 3 |

PROCESSING SEQUENCE

# FIG. 18

TABLE 5

(NODE TRAVERSAL TABLE)

| REFERENCE NODE | NODE TRAVERSAL OCCURRENCES |
|----------------|---------------------------|
| Na | 1 |
| Nb | 1 |
| Nc | 0 |
| Nd | 0 |
| Ne | 0 |
| Nf | 1 |
| Ng | 0 |
| Nh | 0 |
| Ni | 0 |
| Nj | 1 |

# FIG. 19

20

**DATA I/O SECTION** — 10

13 — **RADIO SIGNAL STRENGTH DATA MEMORY**

114 — **MAP MATCHING PROCESSING SECTION**

21 — **SMOOTHING PROCESSING SECTION**

SMOOTHED RADIO SIGNAL STRENGTH DATA

15 — **INTERFACE**

22 — **DIRECTION ESTIMATION SECTION**

24a — **TRACE SECTION**

17

19    18

**MOBILE BODY MAP MATCHING APPARATUS**

**FIG. 20**

EP 1 022 578 B1

# FIG 21

( START )

S1

DETERMINE THAT MEASUREMENT
TIME POINT HAS BEEN REACHED

S2

MEASURE RESPECTIVE VALUES OF RADIO SIGNAL STRENGTH RECEIVED
FROM THE BASE STATIONS, AND STORE THAT SET OF MEASURED VALUES

S3

PERFORM SMOOTHING PROCESSING OF ALL RADIO SIGNAL STRENGTH
VALUES OBTAINED UP TO THIS POINT, TO DERIVE SUCCESSIVE SETS OF
SMOOTHED RADIO SIGNAL STRENGTH VALUES CORRESPONDING TO
SUCCESSIVE MEASUREMENT TIME POINTS

S4

OBTAIN THE SET OF SMOOTHED RADIO SIGNAL STRENGTH VALUES
CORRESPONDING TO A PRECEDING TIME POINT AT WHICH AN ESTIMATED
PREVIOUS POSITION OF MOBILE BODY WAS OBTAINED, AND THE SET OF
SMOOTHED RADIO SIGNAL STRENGTH VALUES CORRESPONDING TO THE
CURRENT MEASUREMENT TIME POINT

FOR EACH OF THE BASE STATIONS, SUBTRACT THE SMOOTHED RADIO
SIGNAL STRENGTH VALUE CORRESPONDING TO THAT BASE STATION,
OBTAINED AT PRECEDING TIME POINT FROM SMOOTHED RADIO SIGNAL
STRENGTH VALUE CORRESPONDING TO THAT BASE STATION WHICH IS
OBTAINED AT CURRENT TIME POINT, THEREBY OBTAIN RESPECTIVE
DIFFERENCE VALUES CORRESPONDING TO EACH BASE STATION

S5

S6

FOR EACH BASE STATION, EXPRESS THE CORRESPONDING DIFFERENCE
VALUE AS A VECTOR EXTENDING FROM THE ESTIMATED POSITION ALONG
A LINE WHICH CONNECTS THAT BASE STATION TO THE ESTIMATED
PREVIOUS POSITION

S7

COMBINE THE VECTORS OBTAINED FROM THE RESPECTIVE BASE STATIONS, BY
VECTOR ADDITION, TO OBTAIN A COMPOSITE VECTOR INDICATING DIRECTION
OF MOTION OF MOVING BODY WITH RESPECT TO THE PREVIOUS ESTIMATED
POSITION

S8

N    OPERATION TO BE
TERMINATED ?    Y

( END )

**FIG 22**

## FIG. 23

20

10 — DATA I/O SECTION

13 — RADIO SIGNAL STRENGTH DATA MEMORY

214 — MAP MATCHING PROCESSING SECTION

21 — SMOOTHING PROCESSING SECTION

SMOOTHED RADIO SIGNAL STRENGTH DATA

15 — INTERFACE

17

24b — TRACE SECTION

19

18

MOBILE BODY MAP MATCHING APPARATUS

# FIG. 24

START

Sa

DETERMINE THAT POINT HAS BEEN REACHED AT WHICH MEASUREMENT IS TO BE PERFORMED, MEASURE RESPECTIVE VALUES OF RADIO SIGNAL STRENGTH RECEIVED FROM THE BASE STATIONS, AND STORE THE SET OF VALUES

PERFORM AVERAGING PROCESSING OF ALL OF THE SETS OF SIGNAL STRENGTH VALUES RECEIVED UP TO THIS POINT, TO OBTAIN RESPECTIVE SMOOTHED SETS OF SIGNAL STRENGTH VALUES

Sb

SELECT ONE OF THESE SETS

Sc

SELECT ONE OF THE REFERENCE NODES

Sd

Se

USING THE SELECTED SET OF SMOOTHED SIGNAL STRENGTH VALUES IN CONJUNCTION WITH PROBABILITY DISTRIBUTION TABLES TO OBTAIN VALUE OF PROBABILITY THAT MOVING BODY IS LOCATED AT THE SELECTED REFERENCE NODE

REPEAT STEPS Sd, Se SUCCESSIVELY FOR ALL OF THE REFERENCE NODES

Sf

ASSIGN A "1" MARK IN THE NODE TRAVERSAL TABLE TO THE REFERENCE NODE FOR WHICH HIGHEST PROBABILITY VALUE HAS BEEN OBTAINED

Sg

Sh

REPEAT STEPS Sd TO Sg SUCCESSIVELY FOR EACH OF THE SETS OF SMOOTHED SIGNAL STRENGTH VALUES, UNTIL ALL OF THE SMOOTHED DATA VALUES OBTAINED UP TO THIS POINT HAVE BEEN PROCESSED

END

**FIG 25A**

( START )

S1

DETERMINE THAT MEASUREMENT
POINT HAS BEEN REACHED

S2

MEASURE RESPECTIVE VALUES OF RADIO SIGNAL
STRENGTH RECEIVED FROM THE BASE STATIONS

S3

PERFORM SMOOTHING PROCESSING OF ALL RADIO SIGNAL STRENGTH
VALUES OBTAINED UP TO THIS POINT, UPDATE SMOOTHED DATA TABLE

S4 SELECT A SET OF N SMOOTHED SIGNAL STRENGTH VALUES (FROM
SMOOTHED DATA TABLE) CORRESPONDING TO N BASE STATIONS

S5 SELECT ONE OF REFERENCE NODES

S6

SELECT ONE OF SELECTED SET OF SIGNAL STRENGTH VALUES

S7

FROM PROBABILITY DISTRIBUTION TABLES, OBTAIN PROBABILITY VALUE
FOR SELECTED REFERENCE NODE IN RELATION TO SELECTED SMOOTHED
SIGNAL STRENGTH VALUE

S8

PROBABILITY VALUES DERIVED FOR
SELECTED REFERENCE NODE WITH
RESPECT TO ALL OF SELECTED SET
OF SMOOTHED SIGNAL STRENGTH
VALUES ?

N

Y

A

D

B

C

**FIG 25B**

A

S9

CALCULATE THE PRODUCT OF ALL OF THE PROBABILITY
VALUES OBTAINED FOR SELECTED REFERENCE NODE

D

S10

PROBABILITY VALUE PRODUCTS
OBTAINED FOR ALL OF THE
REFERENCE NODES ? — N

B

Y

S11

FIND THE REFERENCE NODE HAVING THE HIGHEST VALUE OF
LOCATION PROBABILITY PRODUCT, AND SET A "1" MARK IN THE
CORRESPONDING ENTRY OF THE NODE TRAVERSAL TABLE

C

HAVE ALL CONTENTS
OF THE SMOOTHED       S12
DATA TABLE BEEN
PROCESSED ? — N

Y

S13

N — OPERATION TO BE
TERMINATED ? — Y

END

61

# FIG. 26

PROBABILITY DISTRIBUTION
TABLE FOR ONE REFERENCE NODE

| RADIO SIGNAL STRENGTH RECEIVED FROM BASE STATION A | E11 | E12 | E17 | E14 |
|---|---|---|---|---|
| PROBABILITY VALUE | P11 | P12 | P13 | P14 |
| RADIO SIGNAL STRENGTH RECEIVED FROM BASE STATION B | E21 | E22 | E23 | E24 |
| PROBABILITY VALUE | P221 | P22 | P23 | P24 |
| RADIO SIGNAL STRENGTH RECEIVED FROM BASE STATION C | E31 | E32 | E33 | E34 |
| PROBABILITY VALUE | P31 | P32 | P33 | P34 |
| RADIO SIGNAL STRENGTH RECEIVED FROM BASE STATION D | E41 | E42 | E43 | E44 |
| PROBABILITY VALUE | P41 | P42 | P43 | P44 |

# FIG. 27

SECTION RELATING TO BASE STATION A, IN PROBABILITY
DISTRIBUTION TABLE FOR REFERENCE NODE Nb

| RADIO SIGNAL STRENGTH RECEIVED FROM BASE STATION A | 54 | 56 | 58 | 60 | 62 | 64 | 66 | 68 | 70 |
|---|---|---|---|---|---|---|---|---|---|
| PROBABILITY VALUE | 0.0024 | 0.0123 | 0.1134 | 0.1379 | 0.1564 | 0.1337 | 0.1121 | 0.0948 | 0.0122 |

# FIG. 28

## TABLE 7

(PROBABILITY VALUES SET CORESPONDING TO ONE SIGNAL
STRENGTH MEASUREMENT POSITION OF MOBILE BODY)

| REFERENCE NODE | PROBABILITY VALUE WITH RESPECT TO BASE STATION A | PROBABILITY VALUE WITH RESPECT TO BASE STATION B | PROBABILITY VALUE WITH RESPECT TO BASE STATION C | PROBABILITY VALUE WITH RESPECT TO BASE STATION D | PRODUCT (MULTIPLIED BY 1000) |
|---|---|---|---|---|---|
| Na | 0.1337 | 0.1043 | 0.1987 | 0.2214 | 0.6134 |
| Nb | 0.2345 | 0.1233 | 0.2023 | 0.3256 | 1.9045 |
| Nc | 0.1026 | 0.0567 | 0.2348 | 0.0025 | 0.0034 |
| . . | . . | . . | . . | . . | . . |
| . . . . | . . | . . | . . | . . | . . |
| Nx. | | | | | |

EP 1 022 578 B1

# FIG. 29

```
                                        ( START )
                                            │
                                            ▼                          Sa
┌─────────────────────────────────────────────────────────────────────┐
│ DETERMINE THAT POINT HAS BEEN REACHED AT WHICH MEASUREMENT IS TO      │
│ BE PERFORMED,  MEASURE RESPECTIVE VALUES OF RADIO SIGNAL STRENGTH     │
│ RECEIVED FROM THE BASE STATIONS, AND STORE THE SET OF VALUES          │
└─────────────────────────────────────────────────────────────────────┘
                                            │                          Sb
                                            ▼
┌─────────────────────────────────────────────────────────────────────┐
│ PERFORM AVERAGING PROCESSING OF ALL  OF THE SETS OF SIGNAL            │
│ STRENGTH VALUES RECEIVED UP TO THIS POINT, TO OBTAIN                  │
│ RESPECTIVE SMOOTHED SETS OF SIGNAL STRENGTH VALUES                    │
└─────────────────────────────────────────────────────────────────────┘
                                            │
                                            ▼
                        ┌──────────────────────────────┐  Sc
                        │ SELECT ONE OF THESE SETS      │
                        └──────────────────────────────┘
                                            │                  Sd
                                            ▼
                        ┌──────────────────────────────┐
                        │ SELECT ONE OF THE REFERENCE NODES │
                        └──────────────────────────────┘
                                            │                          Se
                                            ▼
┌─────────────────────────────────────────────────────────────────────┐
│ JUDGE ONE VALUE OF THE SELECTED SET OF SMOOTHED SIGNAL STRENGTH       │
│ VALUES, TO FIND IF HIGHER THAN A PREDETERMINED THRESHOLD.             │
└─────────────────────────────────────────────────────────────────────┘
```

Sf

N ◄── ABOVE THRESHOLD ? ──► Y

Sg — USE THAT SMOOTHED SIGNAL STRENGTH VALUE IN CONJUNCTION WITH PROBABILITY DISTRIBUTION TABLES TO OBTAIN A PROBABILITY VALUE

Sh — CALCULATE PROBABILITY VALUE FROM PROBABILITY DENSITY FUNCTION

Si — REPEAT STEPS Se TO Sg, Sh FOR ALL OF THE SELECTED SET OF SIGNAL STRENGTH VALUES

COMBINE THE OBTAINED PROBABILITY VALUES, TO OBTAIN COMBINED PROBABILITY VALUE FOR SELECTED REFERENCE NODE — Sj

Sk — REPEAT STEPS Sd to Sj SUCCESSIVELY FOR ALL OF THE REFERENCE NODES

SI — ASSIGN A "1" MARK  IN THE NODE TRAVERSAL TABLE TO  THE REFERENCE NODE HAVING HIGHEST COMBINED PROBABILITY VALUE

REPEAT STEPS Sc TO SI SUCCESSIVELY FOR EACH OF THE SETS OF SMOOTHED SIGNAL STRENGTH VALUES, UNTIL ALL OF THE SMOOTHED DATA VALUES OBTAINED UP TO THIS POINT HAVE BEEN PROCESSED

Sm

( END )

## FIG 30A

START

S1

DETERMINE THAT MEASUREMENT
POINT HAS BEEN REACHED

S2

MEASURE RESPECTIVE VALUES OF RADIO SIGNAL
STRENGTH RECEIVED FROM THE BASE STATIONS

S3

PERFORM SMOOTHING PROCESSING OF ALL RADIO SIGNAL STRENGTH
VALUES OBTAINED UP TO THIS POINT, UPDATE SMOOTHED DATA TABLE

S4 SELECT A SET OF N SMOOTHED SIGNAL STRENGTH VALUES (FROM
SMOOTHED DATA TABLE) CORRESPONDING TO N BASE STATIONS

S5 SELECT ONE OF REFERENCE NODES

S6

SELECT ONE OF SELECTED SET OF SIGNAL STRENGTH VALUES

N        S7        Y
MAGNITUDE > 60 ?

S8

FROM PROBABILITY DISTRIBUTION TABLES, OBTAIN PROBABILITY VALUE
FOR SELECTED REFERENCE NODE IN RELATION TO SELECTED SMOOTHED
SIGNAL STRENGTH VALUE

CALCULATE THE PROBABILITY VALUE FOR SELECTED REFERENCE
S9 NODE IN RELATION TO SELECTED SMOOTHED SIGNAL STRENGTH
VALUE, USING PROBABILITY DENSITY FUNCTION

S10

PROBABILITY VALUES DERIVED FOR
SELECTED REFERENCE NODE WITH        N
RESPECT TO ALL OF SELECTED SET OF
SMOOTHED SIGNAL STRENGTH
VALUES ?

Y

A

D

B

C

## FIG 30B

A

S11
CALCULATE THE PRODUCT OF ALL OF THE PROBABILITY
VALUES OBTAINED FOR SELECTED REFERENCE NODE

D

S12
PROBABILITY VALUE PRODUCTS
OBTAINED FOR ALL OF THE
REFERENCE NODES ?    N

Y

B

C

S13
FIND THE REFERENCE NODE HAVING THE HIGHEST VALUE OF
LOCATION PROBABILITY PRODUCT, AND SET A "1" MARK IN THE
CORRESPONDING ENTRY OF THE NODE TRAVERSAL TABLE

S14
HAVE ALL CONTENTS
OF THE SMOOTHED
DATA TABLE BEEN
PROCESSED ?    N

Y

S15
N    OPERATION TO BE    Y
TERMINATED ?

END

FIG. 31

# FIG. 32

20

**DATA I/O SECTION** (10)

13 **RADIO SIGNAL STRENGTH DATA MEMORY**

414

MEASURED RADIO SIGNAL STRENGTH DATA

**SMOOTHING PROCESSING SECTION** 21

16 **POSITION DETECTION SECTION**

15 **INTERFACE**

30 **COORDINATE DATA SMOOTHING SECTION**

"AVERAGED POINTS" POSITION COORDINATES DATA

17

23a **LINK ESTIMATION SECTION**

MAP MATCHING PROCESSING SECTION

119 18

MOBILE BODY MAP MATCHING APPARATUS

FIG. 33

FIG. 34

FIG. 35

**FIG. 36**

( START )

**Sa**

DETERMINE THAT POINT HAS BEEN REACHED AT WHICH MEASUREMENT IS TO BE PERFORMED, MEASURE RESPECTIVE VALUES OF RADIO SIGNAL STRENGTH RECEIVED FROM THE BASE STATIONS, STORE THE SET OF VALUES, AND PROCESS COMPLETE SEQUENCE OF SETS OF RADIO SIGNAL STRENGTH VALUES TO OBTAIN CORRESPONDING SEQUENCE OF SETS OF SMOOTHED VALUES

**Sb**

PROCESS THE SETS OF SMOOTHED SIGNAL STRENGTH VALUES TO ESTIMATE THE RESPECTIVE COORDINATES OF THE MEASUREMENT POINTS

**Sc**

PERFORM SMOOTHING PROCESSING OF THE POSITION COORDINATES DATA TO OBTAIN SUCCESSIVE PAIRS OF (X,Y) COORDINATES EXPRESSING RESPECTIVE POSITIONS OF "AVERAGED POINTS"

**Sd**

DERIVE RESPECTIVE VECTORS CONNECTING SUCCESSIVE PAIRS OF THE AVERAGED POINTS

**Se**

JUDGE ALL OF THE SUCCESSIVE VECTORS, TO FIND THE COORDINATES OF EACH JUNCTION OF VECTORS AT WHICH LOCAL MAXIMUM AMOUNT OF CHANGE IN DIRECTION OCCURS WITH RESPECT TO COMBINED DIRECTION OF SET OF PRECEDING VECTORS THAT EXTENDS FROM STARTING POINT OR EXTENDS FROM THE PRECEDING LOCAL MAXIMUM

**Sf**

COMPARE THE POSITIONS OF RESPECTIVE PAIRS OF LOCAL MAXIMUMS WITH THE POSITIONS OF ALL OF THE LINKS, TO OBTAIN RESPECTIVE VALUES OF CORRELATION COEFFICIENT FOR THE LINKS

**Sg**

REGISTER THE COORDINATES OF EACH OF THE LINKS FOR WHICH THE HIGHEST VALUE OF CORRELATION COEFFICIENT WITH RESPECT TO A PAIR OF LOCAL MAXIMUMS IS OBTAINED, AS A LINK TRAVERSED BY MOBILE BODY

**Sh**

N — PROCESSING TO BE TERMINATED — Y

( END )

**FIG. 37**

| LINK | CORRELATION COEFFICIENT |
|---|---|
| (Na-Nb) | 0.01 |
| (Nb-Nf) | 0.998 |
| (Nf-Ng) | 0.02 |
| (Nf-Ni) | 0.34 |
| . . | |

**FIG. 38**

| VECTOR | (Pa-Pb) | (Pb-Pc) | (Pc-Pd) | (Pd-Pe) | (Pe-Pf) | (Pf-Pg) | (Pg-Ph) |
|---|---|---|---|---|---|---|---|
| ANGLE (DEGREES) | 180 | 190 | 140 | 30 | 100 | 90 | 100 |
| DIFFERENCE | 10 | -50 | -110 | 70 | -10 | 10 | |
| MARK | 0 | 0 | 1 | 0 | 0 | 0 | |

## FIG. 39A

( START )

Sa

DETERMINE THAT POINT HAS BEEN REACHED AT WHICH MEASUREMENT IS TO BE
PERFORMED, MEASURE RESPECTIVE VALUES OF RADIO SIGNAL STRENGTH
RECEIVED FROM THE BASE STATIONS, STORE THE SET OF VALUES, AND PROCESS
COMPLETE SEQUENCE OF SETS OF RADIO SIGNAL STRENGTH VALUES TO OBTAIN
CORRESPONDING SEQUENCE OF SETS OF SMOOTHED VALUES

Sb

PROCESS THE SMOOTHED FIELD STRENGTH DATA TO
OBTAIN RESPECTIVE ESTIMATED POSITION COORDINATES
OF THE MEASUREMENT POINTS

Sc

PERFORM SMOOTHING PROCESSING OF THE COORDINATE DATA,
OBTAIN POSITION COORDINATES OF RESPECTIVE AVERAGED
POINTS

A

**FIG. 39B**

A

N = 1  Sd

Se

FOR EACH OF THE LINKS IN SUCCESSION, OBTAIN THE CORRELATION
COEFFICIENT FOR THE LINK WITH RESPECT TO THE SET OF AVERAGED
POINTS EXTENDING FROM THE FIRST POINT UP TO THE $N^{TH}$ POINT, AND
REGISTER THE LINK HAVING HIGHEST CORRELATION COEFFICIENT

Sf

OBTAIN THE CORRELATION COEFFICIENT FOR THE MOST RECENTLY
REGISTERED LINK WITH RESPECT TO THE SET OF AVERAGED POINTS
EXTENDING FROM THE FIRST TO THE $(N + 1)^{TH}$ POINT

Sg

LOCAL MAXIMUM OF AMOUNT OF
CHANGE BETWEEN SUCCESSIVE
VALUES OF CORRELATION
COEFFICIENT?

Y

N

N = N+1  Sh

Sl

END OF
DATA ?

Y

N

END

B

## FIG. 39C

B

Sj

DESIGNATE THE AVERAGED POINT CORRESPONDING TO THE LOCAL
MAXIMUM POSITION AS THE K$^{TH}$ POINT

N = 1   Sk

Sl

FOR EACH OF THE LINKS IN SUCCESSION, OBTAIN THE CORRELATION
COEFFICIENT FOR THE LINK WITH RESPECT TO THE SET OF M AVERAGED
POINTS EXTENDING FROM THE K$^{TH}$ TO THE $(K + N)^{TH}$ POINT, AND
REGISTER THE LINK HAVING HIGHEST CORRELATION COEFFICIENT

Sm

OBTAIN THE CORRELATION COEFFICIENT FOR THE MOST RECENTLY
REGISTERED LINK WITH RESPECT TO THE SET OF AVERAGED POINTS
EXTENDING FROM THE K$^{TH}$ TO THE $(K + N + 1)^{TH}$ POINT

Sn

LOCAL MAXIMUM OF AMOUNT OF
CHANGE BETWEEN SUCCESSIVE
VALUES OF CORRELATION
COEFFICIENT ?

Y

N

N = N+1   So

Sp

END OF
DATA ?   Y

N

END

77

# FIG. 40

20

10 DATA I/O SECTION

13 RADIO SIGNAL STRENGTH DATA MEMORY

614

MEASURED RADIO
SIGNAL STRENGTH DATA

16

SMOOTHING
PROCESSING SECTION

21

POSITION
DETECTION
SECTION

30

COORDINATE DATA
SMOOTHING SECTION

15

INTERFACE

"AVERAGED
POINTS"
POSITION
COORDINATES
DATA

23b
(23c,
23d)

17

LINK ESTIMATION SECTION

MAP MATCHING
PROCESSING SECTION

119

18

MOBILE BODY MAP
MATCHING APPARATUS

# FIG. 41

| AVERAGED POINT | Pa | Pb | Pc | Pd | Pe | Pf | Pg |
|---|---|---|---|---|---|---|---|
| CORRELATION COEFFICIENT | 0.9876 | 0.9543 | 0.9722 | 0.8544 | 0.7622 | 0.6543 | 0.6079 |
| DIFFERENCE | -0.0333 | 0.0179 | -0.1176 | -0.0922 | -0.1079 | 0.0464 | |
| MARK (LOCAL MAXIMUM) | | | 1 | | | | |

EP 1 022 578 B1

# FIG. 42A

```
        ( START )
```

Sa

DETERMINE THAT POINT HAS BEEN REACHED AT WHICH MEASUREMENT IS TO
BE PERFORMED, MEASURE RESPECTIVE VALUES OF RADIO SIGNAL STRENGTH
RECEIVED FROM THE BASE STATIONS, STORE THE SET OF VALUES, AND
PROCESS COMPLETE SEQUENCE OF SETS OF SIGNAL STRENGTH VALUES TO
OBTAIN CORRESPONDING SEQUENCE OF SETS OF SMOOTHED VALUES

Sb

PROCESS THE SMOOTHED SIGNAL STRENGTH DATA TO
OBTAIN RESPECTIVE ESTIMATED POSITION COORDINATES
OF THE MEASUREMENT POINTS

Sc

PERFORM SMOOTHING PROCESSING OF THE COORDINATE DATA,
OBTAIN POSITION COORDINATES OF RESPECTIVE AVERAGED
POINTS

A

**FIG. 42B**

A

N = 1   Sd

Se

USING MULTIPLE REGRESSION EQUATION, FOR EACH OF THE LINKS IN SUCCESSION, CALCULATE THE COEFFICIENT DISTANCE BETWEN THE LINK AND THE SET OF AVERAGED POINTS EXTENDING FROM THE FIRST POINT UP TO THE $N^{TH}$ POINT, AND REGISTER THE LINK FOR WHICH SMALLEST DISTANCE OBTAINED

Sf

USING MULTIPLE REGRESSION EQUATION, CALCULATE THE COEFFICIENT DISTANCE BETWEEN THE MOST RECENTLY REGISTERED LINK AND THE SET OF AVERAGED POINTS EXTENDING UP TO THE $(N + 1)^{TH}$ POINT

Sg

LOCAL MAXIMUM OF AMOUNT OF CHANGE BETWEEN SUCCESSIVE VALUES OF DISTANCE ?

Y

N

N = N+1   Sh

Sl

END OF DATA ?

N

Y

B

END

# FIG. 42C

B ▸

Sj

DESIGNATE THE AVERAGED POINT CORRESPONDING TO THE LOCAL
MAXIMUM POSITION AS THE $K^{TH}$ POINT

N = 1  Sk

Sl

USING MULTIPLE REGRESSION EQUATION, FOR EACH OF THE LINKS IN
SUCCESSION, CALCULATE THE COEFFICIENT DISTANCE BETWEEN THE LINK
AND THE SET OF AVERAGED POINTS EXTENDING FROM THE $K^{TH}$ POINT UP
TO THE $(K + N)^{TH}$ POINT, AND REGISTER THE LINK FOR WHICH SMALLEST
DISTANCE OBTAINED

Sm

USING MULTIPLE REGRESSION EQUATION, CALCULATE THE
COEFFICIENT DISTANCE BETWEEN THE MOST RECENTLY REGISTERED
LINK AND THE SET OF AVERAGED POINTS EXTENDING FROM THE $K^{TH}$
POINT UP TO THE $(K + N +1)^{TH}$ POINT

LOCAL MAXIMUM OF AMOUNT OF
CHANGE BETWEEN SUCCESSIVE
VALUES OF DISTANCE ?  Sn  Y

N

N = N+1  So

Sp

END OF
DATA ?  Y

N

END

# FIG. 43

| LINK | COEFFICIENT DISTANCE |
|------|---------------------|
| (Na-Nb) | 0.55 |
| (Nb-Nf) | 10.01 |
| (Nf-Ng) | 20.02 |
| (Nf-Nj) | 5.34 |
| . . | . . |

# FIG. 44

| AVERAGED POINT | (Na) | Pb | Pc | Pd | Pe | Pf | Pg |
|---|---|---|---|---|---|---|---|
| COEFFICIENT P | -0.9876 | 0.21 | 0.97 | 0.8544 | 0.7622 | 0.6543 | 0.6079 |
| COEFFICIENT Q | 0.005 | 0 | 0.01 | 0.03 | 0.12 | 0.214 | 0.2547 |
| COEFFICIENT R | 1 | 1 | 1 | 1 | 1 | 1 | 1 |
| COEFFICIENT DISTANCE | 2.34 | 0.0001 | 0.593 | 0.4373 | 0.3305 | 0.2234 | 0.2044 |
| DIFFERENCE | -2.3399 | 0.5929 | 0.16 | -0.102 | -0.1079 | -0.0464 | |
| MARK | 0 | 1 | 0 | 0 | 0 | 0 | |

EP 1 022 578 B1

# FIG. 45A

START

Sa

DETERMINE THAT POINT HAS BEEN REACHED AT WHICH MEASUREMENT IS TO BE PERFORMED, MEASURE RESPECTIVE VALUES OF RADIO SIGNAL STRENGTH RECEIVED FROM THE BASE STATIONS, STORE THE SET OF VALUES, AND PROCESS COMPLETE SEQUENCE OF SETS OF SIGNAL STRENGTH VALUES TO OBTAIN CORRESPONDING SEQUENCE OF SETS OF SMOOTHED VALUES

Sb

PROCESS THE SMOOTHED SIGNAL STRENGTH DATA TO OBTAIN RESPECTIVE ESTIMATED POSITION COORDINATES OF THE MEASUREMENT POINTS

Sc

PERFORM SMOOTHING PROCESSING OF THE COORDINATE DATA, OBTAIN POSITION COORDINATES OF RESPECTIVE AVERAGED POINTS

A

**FIG. 45B**

```
         ▽ A ▽
           │
           ▼
       ┌───────┐
       │ N = 1 │ Sd
       └───────┘
           │
           ▼                                    Se
┌──────────────────────────────────────────────────────┐
│ USING PRINCIPAL COMPONENT ANALYSIS, FOR EACH OF THE    │
│ LINKS IN SUCCESSION, CALCULATE THE PRINCIPAL           │
│ COMPONENT DISTANCE BETWEN THE LINK AND THE SET OF       │
│ AVERAGED POINTS EXTENDING FROM THE FIRST POINT UP TO    │
│ THE NTH POINT, AND REGISTER THE LINK FOR WHICH          │
│ SMALLEST DISTANCE OBTAINED                             │
└──────────────────────────────────────────────────────┘
```

Box Se: USING PRINCIPAL COMPONENT ANALYSIS, FOR EACH OF THE LINKS IN SUCCESSION, CALCULATE THE PRINCIPAL COMPONENT DISTANCE BETWEN THE LINK AND THE SET OF AVERAGED POINTS EXTENDING FROM THE FIRST POINT UP TO THE $N^{TH}$ POINT, AND REGISTER THE LINK FOR WHICH SMALLEST DISTANCE OBTAINED

Box Sf: USING PRINCIPAL COMPONENT ANALYSIS, CALCULATE THE PRINCIPAL COMPONENT DISTANCE BETWEEN THE MOST RECENTLY REGISTERED LINK AND THE SET OF AVERAGED POINTS EXTENDING UP TO THE $(N + 1)^{TH}$ POINT

Decision Sg: LOCAL MAXIMUM OF AMOUNT OF CHANGE BETWEEN SUCCESSIVE VALUES OF DISTANCE ? — Y → B ; N ↓

Box Sh: N = N+1

Decision Sl: END OF DATA ? — Y → END ; N →

END

▽ B

# FIG. 45C

B

Sj

DESIGNATE THE AVERAGED POINT CORRESPONDING TO THE LOCAL MAXIMUM POSITION AS THE $K^{TH}$ POINT

N = 1    Sk

Sl

USING PRINCIPAL COMPONENT ANALYSIS, FOR EACH OF THE LINKS IN SUCCESSION, CALCULATE THE PRINCIPAL COMPONENT DISTANCE BETWEEN THE LINK AND THE SET OF AVERAGED POINTS EXTENDING FROM THE $K^{TH}$ POINT UP TO THE $(K + N)^{TH}$ POINT, AND REGISTER THE LINK FOR WHICH SMALLEST DISTANCE OBTAINED

Sm

USING PRINCIPAL COMPONENT ANALYSIS, CALCULATE THE PRINCIPAL COMPONENT DISTANCE BETWEEN THE MOST RECENTLY REGISTERED LINK AND THE SET OF AVERAGED POINTS EXTENDING FROM THE $K^{TH}$ POINT UP TO THE $(K + N + 1)^{TH}$ POINT

Sn

LOCAL MAXIMUM OF AMOUNT OF CHANGE BETWEEN SUCCESSIVE VALUES OF DISTANCE ?    Y

N

N = N+1    So

Sp

END OF DATA ?    Y

N

END

# FIG. 46

20

10 — DATA I/O SECTION

13 — RADIO SIGNAL STRENGTH DATA MEMORY

MAP MATCHING
PROCESSING SECTION

714 21

SMOOTHING
PROCESSING
SECTION

15 DIRECTION ESTIMATION
SECTION

INTERFACE

VECTORS

122

16 LOCAL MAXIMUM
DETECTION SECTION

31

POSITION
DETECTION
SECTION

17 LINK ESTIMATION SECTION

23e

119 18

MOBILE BODY MAP
MATCHING APPARATUS

**FIG. 47**

( START )

Sa

DETERMINE THAT POINT HAS BEEN REACHED AT WHICH MEASUREMENT IS TO
BE PERFORMED, MEASURE RESPECTIVE VALUES OF RADIO SIGNAL STRENGTH
RECEIVED FROM THE BASE STATIONS, STORE THE NEW SET OF VALUES, AND
PROCESS COMPLETE SEQUENCE OF SETS OF RADIO SIGNAL STRENGTH VALUES
TO OBTAIN CORRESPONDING SEQUENCE OF SETS OF SMOOTHED VALUES

Sb

DERIVE SEQUENCE OF VECTORS RESPECTIVELY CONNECTING SUCCESSIVE
PAIRS OF SETS OF SMOOTHED SIGNAL STRENGTH VALUES

Sc

JUDGE THE SEQUENCE OF VECTORS, TO FIND EACH POSITION IN THAT
SEQUENCE AT WHICH LOCAL MAXIMUM AMOUNT OF CHANGE IN
DIRECTION OCCURS WITH RESPECT TO COMBINED DIRECTION OF SET OF
PRECEDING VECTORS THAT EXTENDS FROM STARTING POINT OR EXTENDS
FROM THE PRECEDING LOCAL MAXIMUM

Sd

PROCESS THE SETS OF SMOOTHED FIELD STRENGTH VALUES RESPECTIVELY
CORRESPONDING TO THE LOCAL MAXIMUMS, TO ESTIMATE THE
COORDINATES OF CORRESPONDING POSITIONS OF THE MOBILE BODY

Se

FOR EACH SUCCESSIVE POSITION CORRESPONDING TO A LOCAL MAXIMUM,
COMPARE THAT POSITION WITH THE RESPECTIVE POSITIONS OF ALL OF THE
REFERENCE NODES, TO OBTAIN A SUCCESSION OF REFERENCE NODES WHICH
ARE LOCATED CLOSEST TO RESPECTIVE LOCAL MAXIMUM POSITIONS

Sf

REGISTER EACH OF THE LINKS WHICH IS CONNECTED BY AN ADJACENT PAIR
OF NODES WITHIN THAT SUCCESSION OF REFERENCE NODES, AS A LINK
WHICH HAS BEEN TRAVERSED BY MOBILE BODY

Sg

N ◁ PROCESSING TO BE TERMINATED ? ▷ Y

( END )

# FIG. 48

EP 1 022 578 B1

# FIG. 49

- 10 DATA I/O SECTION
- 13 — RADIO SIGNAL STRENGTH DATA MEMORY

MAP MATCHING PROCESSING SECTION

- 21 SMOOTHING PROCESSING SECTION
- DIRECTION ESTIMATION SECTION
- 122
- 31 LOCAL MAXIMUM DETECTION SECTION
- 15 INTERFACE
- 16 POSITION DETECTION SECTION
- 30 COORDINATE DATA SMOOTHING SECTION

- 23a LINK ESTIMATION SECTION
- 23b LINK ESTIMATION SECTION
- 23c LINK ESTIMATION SECTION
- 23d LINK ESTIMATION SECTION
- 23e LINK ESTIMATION SECTION

- 24a TRACE SECTION
- 24b TRACE SECTION
- 24c TRACE SECTION

- 17
- 19
- 18

MOBILE BODY MAP MATCHING APPARATUS

## FIG. 50

## FIG. 51

BASE STATION B1 — 802

805

807

BASE STATION B3 — 804

801

806

BASE STATION B2 — 803

812

808

MOBILE COMMUNICATIONS CONTROL STATION

813

809

810

POSITION INFORMATION TRANSMITTING/RECEIVING APPARATUS

ELECTRIC FIELD STRENGTH MAP — 811

POSITION INFORMATION CENTER

EP 1 022 578 B1